# EUROPEAN PATENT APPLICATION

(11) **EP 4 836 023 A1**
(43) Date of publication of application: **04.11.2026**
(21) Application number: 25742036.4
(22) Date of filing: 17.01.2025
(51) Int. Cl.: H01M 4/62, H01G 11/06, H01G 11/38, H01M 4/13, H01M 4/139

(54) **POLYMER COMPOSITION, BINDER FOR ELECTROCHEMICAL DEVICE, ELECTRODE MIXTURE, ELECTRODE, AND SECONDARY BATTERY**

(30) Priority: 18.01.2024 JP 2024006427
(71) Applicant: DAIKIN INDUSTRIES, LTD., Osaka-shi, Osaka 530-0001 (JP)
(72) Inventor: NISHIMURA, Kenta, Osaka-Shi, Osaka 530-0001 (JP); YAMADA, Takaya, Osaka-Shi, Osaka 530-0001 (JP); TOKUDA, Masato, Osaka-Shi, Osaka 530-0001 (JP); KATO, Taketo, Osaka-Shi, Osaka 530-0001 (JP); YASUDA, Kohei, Osaka-Shi, Osaka 530-0001 (JP); TERADA, Junpei, Osaka-Shi, Osaka 530-0001 (JP)
(74) Representative: Hoffmann Eitle
(86) International application number: PCT/JP2025/001437
(87) International publication number: WO 2025/154811

(57) **Abstract**

The disclosure provides a polymer composition for a binder for an electrochemical device, and the like, which can improve the coulombic efficiency of an electrochemical device. Provided is a polymer composition for use in a binder for an electrochemical device, containing a fibrillatable polymer, a thermoplastic polymer, and at least one compound selected from the group consisting of a compound represented by the following formula (1) and a compound represented by the following formula (2),

formula (1): (H-(CF₂)ₘ₋₁-COO)ₚM¹

wherein m is 4 to 20; M¹ is H, a metal atom, NR⁵₄ where R⁵s may be the same as or different from each other and each represent H or a C1-C10 organic group, or the like; and p is 1 or 2, and

formula (2): (H-(CF₂)ₙ-SO₃)_{q}M²

wherein n is 4 to 20; M² is H, a metal atom, NR⁵₄ where R⁵ is as defined above, or the like; and q is 1 or 2.

## Description

### TECHNICAL FIELD

The disclosure relates to polymer compositions, binders for electrochemical devices, electrode mixtures, electrodes, and secondary batteries.

### BACKGROUND ART

Secondary batteries such as lithium-ion secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. The reason for this is that secondary batteries are high-voltage, high-energy-density batteries with low self-discharge and low memory effect and can be made extremely lightweight. Secondary batteries are now demanded to have even higher energy densities, and further improvements in battery characteristics are desired.

Patent Literature 1 discloses an energy storage device in which at least one of the cathode or the anode includes a polytetrafluoroethylene composite binder material.

Patent Literatures 2 to 6 each describe use of polytetrafluoroethylene as a binder for batteries.

Patent Literatures 7 to 9 each disclose a composite binder containing polytetrafluoroethylene and additional components such as polyvinylidene fluoride.

### CITATION LIST

### - Patent Literature

Patent Literature 1: JP 2017-517862 T
Patent Literature 2: WO 2021/181887
Patent Literature 3: WO 2021/181888
Patent Literature 4: WO 2021/192541
Patent Literature 5: WO 2022/138942
Patent Literature 6: WO 2022/138939
Patent Literature 7: WO 2023/286787
Patent Literature 8: WO 2022/234227
Patent Literature 9: WO 2023/094623

### SUMMARY OF INVENTION

### - Technical Problem

The disclosure aims to provide a polymer composition for a binder for an electrochemical device, capable of improving the coulombic efficiency of an electrochemical device, and a binder for an electrochemical device, an electrode mixture, an electrode, and a secondary battery each containing the polymer composition.

### - Solution to Problem

The disclosure (1) relates to a polymer composition for use in a binder for an electrochemical device, containing a fibrillatable polymer, a thermoplastic polymer, and at least one compound selected from the group consisting of a compound represented by the following formula (1) and a compound represented by the following formula (2), formula (1): (H-(CF₂)ₘ₋₁-COO)ₚM¹
wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The disclosure (2) relates to a polymer composition for use in a binder for an electrochemical device, containing a fibrillatable polymer and a thermoplastic polymer, the fibrillatable polymer having a thermal instability index (TII) of 10 or higher.

The disclosure (3) relates to the polymer composition according to the disclosure (1) or (2), wherein the fibrillatable polymer includes at least one selected from the group consisting of a tetrafluoroethylene homopolymer and a modified polytetrafluoroethylene consisting of a tetrafluoroethylene unit and a polymerized unit based on hexafluoropropylene.

The disclosure (4) relates to the polymer composition according to any one of the disclosures (1) to (3), wherein the fibrillatable polymer is contained in an amount of more than 50% by mass and 97% by mass or less based on the polymer composition.

The disclosure (5) relates to the polymer composition according to any one of the disclosures (1) to (4), wherein the thermoplastic polymer includes at least one vinylidene fluoride-based polymer selected from the group consisting of polyvinylidene fluoride and a vinylidene fluoride/tetrafluoroethylene copolymer.

The disclosure (6) relates to the polymer composition according to any one of the disclosures (1) to (5), wherein the polymer composition is in a form of powder.

The disclosure (7) relates to the polymer composition according to any one of the disclosures (1) to (6), wherein the polymer composition is for use in a binder for a lithium-ion secondary battery.

The disclosure (8) relates to a binder for an electrochemical device essentially consisting of a polymer composition, the polymer composition containing a fibrillatable polymer, a thermoplastic polymer, and at least one compound selected from the group consisting of a compound represented by the following formula (1) and a compound represented by the following formula (2),

formula (1): (H-(CF₂)ₘ₋₁-COO)ₚM¹

wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The disclosure (9) relates to a binder for an electrochemical device essentially consisting of a polymer composition, the polymer composition containing a fibrillatable polymer and a thermoplastic polymer, the fibrillatable polymer having a thermal instability index (TII) of 10 or higher.

The disclosure (10) relates to the binder for an electrochemical device according to the disclosure (8) or (9), wherein the polymer composition has an endothermic peak in each of a region of 330°C or lower and a region of higher than 330°C.

The disclosure (11) relates to the binder for an electrochemical device according to any one of the disclosures (8) to (10), wherein the fibrillatable polymer has an endothermic peak temperature of higher than 330°C.

The disclosure (12) relates to the binder for an electrochemical device according to any one of the disclosures (8) to (11), wherein the fibrillatable polymer includes a tetrafluoroethylene-based polymer.

The disclosure (13) relates to the binder for an electrochemical device according to any one of the disclosures (8) to (12), wherein the fibrillatable polymer includes at least one selected from the group consisting of a tetrafluoroethylene homopolymer and a modified polytetrafluoroethylene consisting of a tetrafluoroethylene unit and a polymerized unit based on hexafluoropropylene.

The disclosure (14) relates to the binder for an electrochemical device according to any one of the disclosures (8) and (10) to (13), wherein the fibrillatable polymer has a thermal instability index (TII) of 10 or higher.

The disclosure (15) relates to the binder for an electrochemical device according to any one of the disclosures (8) to (14), wherein the thermoplastic polymer is contained in an amount of less than 50% by mass based on the polymer composition.

The disclosure (16) relates to the binder for an electrochemical device according to any one of the disclosures (8) to (15), wherein the fibrillatable polymer is contained in an amount of more than 50% by mass and 97% by mass or less based on the polymer composition.

The disclosure (17) relates to the binder for an electrochemical device according to any one of the disclosures (8) to (16), wherein the polymer composition has a 0.1% mass reduction temperature of 340°C or higher.

The disclosure (18) relates to the binder for an electrochemical device according to any one of the disclosures (8) to (17), wherein the polymer composition has a 1.0% mass reduction temperature of 370°C or higher.

The disclosure (19) relates to the binder for an electrochemical device according to any one of the disclosures (8) to (16), wherein the thermoplastic polymer includes a vinylidene fluoride-based polymer.

The disclosure (20) relates to the binder for an electrochemical device according to the disclosure (19), wherein the vinylidene fluoride-based polymer includes a fluoroelastomer.

The disclosure (21) relates to the binder for an electrochemical device according to the disclosure (20), wherein the fluoroelastomer contains a vinylidene fluoride unit and a unit based on a different monomer copolymerizable with vinylidene fluoride.

The disclosure (22) relates to the binder for an electrochemical device according to the disclosure (20) or (21), wherein the fluoroelastomer includes at least one selected from the group consisting of a vinylidene fluoride/hexafluoropropylene copolymer, a vinylidene fluoride/2,3,3,3-tetrafluoropropylene copolymer, and a vinylidene fluoride/tetrafluoroethylene/hexafluoropropylene copolymer.

The disclosure (23) relates to the binder for an electrochemical device according to any one of the disclosures (8) to (16), wherein the polymer composition has an endothermic peak at least in a region of 130°C to 200°C.

The disclosure (24) relates to the binder for an electrochemical device according to any one of the disclosures (8) to (16), wherein the thermoplastic polymer includes at least one vinylidene fluoride-based polymer selected from the group consisting of polyvinylidene fluoride and a vinylidene fluoride/tetrafluoroethylene copolymer.

The disclosure (25) relates to the binder for an electrochemical device according to the disclosure (24), wherein the vinylidene fluoride-based polymer has an average particle size of 10 µm or less and is free from a fluorine-containing surfactant.

The disclosure (26) relates to the binder for an electrochemical device according to any one of the disclosures (8) to (25), wherein the polymer composition in a form of powder has an average aspect ratio of 2.5 or lower.

The disclosure (27) relates to the binder for an electrochemical device according to any one of the disclosures (8) to (26), wherein the fibrillatable polymer in a form of powder is not fibrillated.

The disclosure (28) relates to the binder for an electrochemical device according to any one of the disclosures (8) to (27), wherein the binder for an electrochemical device is in a form of powder.

The disclosure (29) relates to the binder for an electrochemical device according to any one of the disclosures (8) to (28), wherein the binder for an electrochemical device is a binder for a lithium-ion secondary battery.

The disclosure (30) relates to an electrode mixture containing: the polymer composition according to any one of the disclosures (1) to (7) or the binder for an electrochemical device according to any one of the disclosures (8) to (29); and an electrode active material.

The disclosure (31) relates to the electrode mixture according to the disclosure (30), wherein the electrode mixture is in a form of a sheet.

The disclosure (32) relates to an electrode including: the polymer composition according to any one of the disclosures (1) to (7) or the binder for an electrochemical device according to any one of the disclosures (8) to (29); an electrode active material; and a current collector.

The disclosure (33) relates to a secondary battery including the electrode according to the disclosure (32).

### - Advantageous Effects of Invention

The disclosure can provide a polymer composition for an electrochemical device binder, which can improve the coulombic efficiency of an electrochemical device, and a binder for an electrochemical device, an electrode mixture, an electrode, and a secondary battery each containing the polymer composition.

### DESCRIPTION OF EMBODIMENTS

The term "organic group" as used herein means a group containing one or more carbon atoms or a group formed by removing one hydrogen atom from an organic compound.

The organic group is preferably an alkyl group optionally containing one or more substituents.

The disclosure will be specifically described hereinbelow.

The disclosure provides a polymer composition for use in a binder for an electrochemical device, containing a fibrillatable polymer, a thermoplastic polymer, and at least one compound selected from the group consisting of a compound represented by the following formula (1) and a compound represented by the following formula (2) (hereafter, also referred to as polymer composition (1) of the disclosure),

formula (1): (H-(CF₂)ₘ₋₁-COO)ₚM¹

wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The disclosure also provides a polymer composition for use in a binder for an electrochemical device, containing a fibrillatable polymer and a thermoplastic polymer, the fibrillatable polymer having a thermal instability index (TII) of 10 or higher (hereafter, also referred to as polymer composition (2) of the disclosure).

The polymer compositions (1) and (2) of the disclosure are herein collectively referred to as "polymer composition of the disclosure", unless otherwise stated.

The polymer composition of the disclosure having the above formulation can improve the coulombic efficiency of an electrochemical device. In addition, a mixture sheet can be produced even when the addition amount of the polymer composition is small. Since a mixture sheet having excellent adhesion to a substrate such as metal foil can be obtained, the mixture sheet can be bonded to the substrate without increasing the density of the mixture layer (without densification/compaction), thereby enabling processing under a wider range of forming conditions.

When in the form of powder, the polymer composition of the disclosure can exhibit better flowability.

Since the polymer composition of the disclosure can be used in a dry process, it is not necessary to use a large amount of dispersion medium such as water or an organic solvent and the electrode active material or solid electrolyte to be used together can be selected from a wide range of selections, which is advantageous in terms of production process. The process and cost derived from use of a dispersion medium can be reduced.

In addition, the polymer composition of the disclosure has excellent binding force to active materials or electrolytes, which can reduce the amount of the polymer composition used.

The polymer composition of the disclosure contains a fibrillatable polymer. The fibrillatable polymer is a polymer that easily fibrillates upon application of shear stress. With a higher molecular weight, the fibrillatable polymer is more likely to fibrillate. The molecular weight of the fibrillatable polymer is, for example, 500000 or greater, preferably 1000000 or greater, more preferably 5000000 or greater, still more preferably 10000000 or greater, further preferably 20000000 or greater, while it may be 200000000 or less.

The molecular weight may be a number average molecular weight (Mn), and it can be determined using the following equation. $SSG = - 0.0579 logMn + 2.6113$

The SSG in the equation is the standard specific gravity of the polymer, and is determined by the water displacement method in conformity with ASTM D792 using a sample molded in conformity with ASTM D4895-89.

In order to form a mixture sheet with still higher strength, the fibrillatable polymer preferably has an endothermic peak temperature of higher than 330°C, more preferably 333°C or higher, still more preferably 335°C or higher, further preferably 337°C or higher, particularly preferably 340°C or higher, while preferably 350°C or lower, more preferably 346°C or lower.

The endothermic peak temperature is the temperature corresponding to the minimum point on a heat-of-fusion curve obtained by performing differential scanning calorimetry (DSC) at a temperature-increasing rate of 10°C/min on the fibrillatable polymer that has never been heated to a temperature of 300°C or higher. In the case where one melting peak includes two or more local minimums, each minimum is defined as an endothermic peak temperature.

The fibrillatable polymer in the polymer composition (1) of the disclosure preferably has a thermal instability index (TII) of 10 or higher. The fibrillatable polymer in the polymer composition (2) of the disclosure has a thermal instability index (TII) of 10 or higher.

The fibrillatable polymer having a TII of 10 or higher can be obtained using a hydrocarbon surfactant.

In order to further improve the coulombic efficiency of an electrochemical device, to further reduce the addition amount, to further improve adhesion between a mixture sheet and a substrate, and to further improve powder flowability, the TII is more preferably 15 or higher, still more preferably 20 or higher, further preferably 25 or higher, further preferably 30 or higher, further preferably 35 or higher, further preferably 40 or higher, while preferably 200 or lower, more preferably 100 or lower, still more preferably 80 or lower, further preferably 50 or lower.

The TII is measured in conformity with ASTM D4895-89.

The fibrillatable polymer may have a 0.1% mass reduction temperature of 400°C or lower.

The fibrillatable polymer having a 0.1% mass reduction temperature of 400°C or lower can be obtained using a hydrocarbon surfactant. The 0.1% mass reduction temperature is a value measured by the following method.

About 10 mg of the fibrillatable polymer that has never been heated to 300°C or higher is precisely weighed out, and placed in a special aluminum pan, followed by thermogravimetry/differential thermal analysis (TG-DTA). The 0.1% mass reduction temperature is a temperature corresponding to a point at which the weight is reduced by 0.1% by mass when the temperature of the aluminum pan is increased in a temperature range from 25°C to 600°C at a rate of 10°C/min in the air atmosphere.

The fibrillatable polymer may have a 1.0% mass reduction temperature of 492°C or lower.

The fibrillatable polymer having a 1.0% mass reduction temperature of 492°C or lower can be obtained using a hydrocarbon surfactant. The 1.0% mass reduction temperature is a value measured by the following method.

About 10 mg of the fibrillatable polymer that has never been heated to 300°C or higher is precisely weighed out, and placed in a special aluminum pan, followed by thermogravimetry/differential thermal analysis (TG-DTA). The 1.0% mass reduction temperature is a temperature corresponding to a point at which the weight is reduced by 1.0% by mass when the temperature of the aluminum pan is increased in a temperature range from 25°C to 600°C at a rate of 10°C/min in the air atmosphere.

Examples of the fibrillatable polymer include tetrafluoroethylene (TFE)-based polymer, polyethylene, polyester, liquid crystal polymer (LCP), and acrylic resin. The fibrillatable polymer is preferably a TFE-based polymer, polyethylene, or polyester, more preferably a TFE-based polymer.

The TFE-based polymer may be a TFE homopolymer or a TFE copolymer containing a polymerized unit based on TFE (TFE unit) and a polymerized unit based on a modifying monomer copolymerizable with TFE (modifying monomer unit).

The TFE-based polymer may also be polytetrafluoroethylene (PTFE). The PTFE encompasses a TFE homopolymer and a modified PTFE containing 99.0% by mass or more of the TFE unit and 1.0% by mass or less of the modifying monomer unit.

In order to further improve the coulombic efficiency of an electrochemical device, to further reduce the addition amount, to further improve adhesion between a mixture sheet and a substrate, and to further improve powder flowability, the TFE-based polymer is preferably PTFE, more preferably a modified PTFE.

The TFE homopolymer herein refers to a polymer containing the modifying monomer unit in an amount of less than 0.0001% by mass based on the total polymerized units.

In order to further improve the coulombic efficiency of an electrochemical device, to further reduce the addition amount, to further improve adhesion between a mixture sheet and a substrate, and to further improve powder flowability, the amount of the modifying monomer unit is preferably 0.0001 to 10% by mass based on the total polymerized units. The lower limit of the amount of the modifying monomer unit is more preferably 0.001% by mass, still more preferably 0.010% by mass, further preferably 0.015% by mass, particularly preferably 0.020% by mass. The upper limit of the amount of the modifying monomer unit is preferably 5.0% by mass, more preferably 3.0% by mass, still more preferably 1.0% by mass, further preferably 0.80% by mass, further preferably 0.60% by mass, further preferably 0.50% by mass, further preferably 0.40% by mass, further preferably 0.30% by mass, particularly preferably 0.20% by mass.

The modifying monomer unit as used herein means a portion constituting the molecular structure of the TFE-based polymer and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefin such as hexafluoropropylene (HFP); hydrogen-containing fluoroolefin such as trifluoroethylene and vinylidene fluoride (VdF); perhaloolefin such as chlorotrifluoroethylene (CTFE); perfluorovinyl ether; perfluoroallyl ether; (perfluoroalkyl)ethylene; ethylene; and monomer containing a polar group. One modifying monomer may be used alone or two or more modifying monomers may be used in combination.

Examples of the perfluorovinyl ether include, but are not limited to, an unsaturated perfluoro compound represented by the following formula (A):

CF₂=CF-ORf¹ (A)

wherein Rf¹ is a perfluoro organic group. The term "perfluoro organic group" herein means an organic group in which all hydrogen atoms bonded to carbon atoms are replaced by fluorine atoms. The perfluoro organic group may have an ether oxygen.

The perfluorovinyl ether may be, for example, a perfluoro(alkyl vinyl ether) (PAVE), preferably a PAVE represented by the formula (A) in which Rf¹ is a C1-C10 perfluoroalkyl group. The number of carbon atoms of the perfluoroalkyl group is preferably 1 to 5.

Examples of the perfluoroalkyl group in the PAVE include perfluoromethyl group, perfluoroethyl group, perfluoropropyl group, perfluorobutyl group, perfluoropentyl group, and perfluorohexyl group.

Examples of the perfluorovinyl ether also include:
those represented by the formula (A) wherein Rf¹ is a C4-C9 perfluoro(alkoxy alkyl) group;
those represented by the formula (A) wherein Rf¹ is a group represented by the following formula: 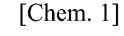 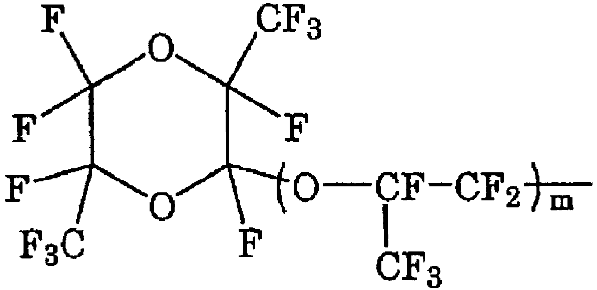 wherein m is an integer of 0 or 1 to 4; and
those represented by the formula (A) wherein Rf¹ is a group represented by the following formula: 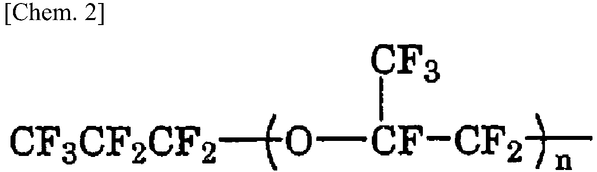 wherein n is an integer of 1 to 4.

Examples of the (perfluoroalkyl)ethylene (PFAE) include, but are not limited to, (perfluorobutyl)ethylene (PFBE) and (perfluorohexyl)ethylene.

Examples of the perfluoroallyl ether include fluoromonomers represented by the following formula (B):

CF₂=CF-CF₂-ORf² (B)

wherein Rf² is a perfluoro organic group.

Rf² is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, still more preferably includes CF₂=CF-CF₂-O-CF₂CF₂CF₃.

The modifying monomer is preferably a compound represented by the following formula (i):

CX¹X²=CX³X⁴ (i)

wherein X¹ to X³ are each independently H or F, X⁴ is F, Cl, Rf, or O-Rf, where Rf is a perfluoro organic group.

Rf in the formula (i) is preferably a C1-C10 perfluoroalkyl group, more preferably a C1-C5 perfluoroalkyl group, still more preferably a C1-C4 perfluoroalkyl group.

The monomer containing a polar group may be a non-fluorinated monomer or a fluorine-containing monomer.

Examples of the non-fluorinated monomer include: non-fluorinated monomer containing a hydroxy group, such as hydroxyalkyl vinyl ethers (e.g., hydroxyethyl vinyl ether, hydroxypropyl vinyl ether, hydroxybutyl vinyl ether, hydroxyisobutyl vinyl ether, and hydroxycyclohexyl vinyl ether); non-fluorinated monomer containing a carboxy group, such as acrylic acid, methacrylic acid, itaconic acid, succinic acid, fumaric acid, crotonic acid, maleic acid, citraconic acid, undecylenic acid, and acetylenedicarboxylic acid; non-fluorinated monomer containing an acid anhydride residue, such as itaconic anhydride (hereinafter also referred to as "IAH"), citraconic anhydride (hereinafter also referred to as "CAH"), 5-norbornene-2,3-dicarboxylic anhydride (hereinafter also referred to as "NAH"), succinic anhydride, fumaric anhydride, and maleic anhydride; non-fluorinated monomer containing a sulfo group, such as vinyl sulfonic acid; non-fluorinated monomer containing an epoxy group (glycidyl group), such as glycidyl vinyl ether and glycidyl allyl ether; non-fluorinated monomer containing an amino group, such as an aminoalkyl vinyl ether and an aminoalkyl allyl ether; non-fluorinated monomer containing an amide group, such as (meth)acrylamide and methylolacrylamide; and non-fluorinated monomer containing a nitrile group, such as acrylonitrile and methacrylonitrile.

Preferred among these are a non-fluorinated monomer containing a carboxy group and a non-fluorinated monomer containing an acid anhydride residue, more preferred is a non-fluorinated monomer containing an acid anhydride residue, and still more preferred is a cyclic non-fluorinated monomer containing an acid anhydride residue.

The monomer containing a polar group also preferably includes a modifying monomer containing a functional group that is reactive in radical polymerization and a hydrophilic group (hereinafter, referred to as "modifying monomer (A)").

Examples of the hydrophilic group in the modifying monomer (A) include - NH₂, -PO₃M, -OPO₃M, -SO₃M, -OSO₃M, -COOM (wherein M is H, a metal atom, NR⁷₄, imidazolium optionally containing a substituent, pyridinium optionally containing a substituent, or phosphonium optionally containing a substituent; R⁷s are each H or an organic group and may be the same as or different from each other, and any two of these may bond to each other to form a ring). Preferred among these hydrophilic groups is -SO₃M or -COOM. R⁷ is preferably H or a C1-C10 organic group, more preferably H or a C1-C4 organic group, still more preferably H or a C1-C4 alkyl group.

Examples of the metal atom include monovalent or divalent metal atoms such as alkali metals (Group 1) and alkaline earth metals (Group 2), and preferred is Na, K, or Li.

An example of the "functional group that is reactive in radical polymerization" in the modifying monomer (A) is a group containing an ethylenically unsaturated bond such as a vinyl group or an allyl group. The group containing an ethylenically unsaturated bond can be represented by the following formula:

CX^{e}X^{g}=CX^{f}R-

wherein X^{e}, X^{f}, and X^{g} are each independently F, Cl, H, CF₃, CF₂H, CFH₂, or CH₃ and R is a linking group. Examples of the linking group for R include linking groups as R^{a} described later. Preferred examples thereof include groups containing an unsaturated bond such as -CH=CH₂, -CF=CH₂, -CH=CF₂, -CF=CF₂, -CH₂-CH=CH₂, -CF₂-CF=CH₂, -CF₂-CF=CF₂, -(C=O)-CH=CH₂, -(C=O)-CF=CH₂, -(C=O)-CH=CF₂, -(C=O)-CF=CF₂, -(C=O)-C(CH₃)=CH₂, -(C=O)-C(CF₃)=CH₂, -(C=O)-C(CH₃)=CF₂, -(C=O)-C(CF₃)=CF₂, -O-CH₂-CH=CH₂, -O-CF₂-CF=CH₂, -O-CH₂-CH=CF₂, and -O-CF₂-CF=CF₂.

The modifying monomer (A) contains a functional group that is reactive in radical polymerization. Thus, when used in polymerization, it reacts with a fluorine-containing monomer in an early stage of the polymerization reaction, which presumably results in formation of particles containing a hydrophilic group derived from the modifying monomer (A) and having high stability. Accordingly, polymerization in the presence of the modifying monomer (A) seems to generate a large number of particles.

One modifying monomer (A) may be used alone, or two or more modifying monomers (A) may be used in combination.

The modifying monomer (A) may be a compound containing an unsaturated bond.

The modifying monomer (A) preferably includes at least one selected from the group consisting of compounds represented by the following formulas (4a) to (4e):

CF₂=CF-(CF₂)ₙ₁-Y³ (4a)

wherein n1 is an integer of 1 to 10; Y³ is -SO₃M¹ or -COOM¹; and M¹ is H, NH₄, or an alkali metal;

CF₂=CF-(CF₂C(CF₃)F)ₙ₂-Y³ (4b)

wherein n2 is an integer of 1 to 5; and Y³ is as defined above;

CF₂=CF-O-(CFX¹)ₙ₃-Y³ (4c)

wherein X¹ is F or CF₃; n3 is an integer of 1 to 10; and Y³ is as defined above;

CF₂=CF-O-(CF₂CFX¹O)ₙ₄-CF₂CF₂-Y³ (4d)

wherein n4 is an integer of 1 to 10; and Y³ and X¹ are as defined above; and

CX²₂=CFCF₂-O-(CF(CF₃)CF₂O)ₙ₅-CF(CF₃)-Y³ (4e)

wherein X²s are the same as each other and are each F or H; n5 is an integer of 0 or 1 to 10; and Y³ is as defined above.

Examples of the alkali metal include Na and K.

In the formula (4a), n1 is preferably an integer of 5 or less, more preferably an integer of 2 or less. In order to achieve appropriate water solubility and surface activity, Y³ is preferably -COOM¹. In order to reduce remaining as impurities and to achieve improved heat resistance of the resulting molded article, M¹ is preferably H or NH₄.

An example of a perfluorovinyl alkyl compound represented by the formula (4a) is CF₂=CFCF₂COOM¹ wherein M¹ is as defined above.

In terms of emulsifying performance, n2 in the formula (4b) is preferably an integer of 3 or less. In order to achieve appropriate water solubility and surface activity, Y³ is preferably -COOM¹. In order to reduce remaining as impurities and to achieve improved heat resistance of the resulting molded article, M¹ is preferably H or NH₄.

In terms of water solubility, n3 in the formula (4c) is preferably an integer of 5 or less. In order to achieve appropriate water solubility and surface activity, Y³ is preferably -COOM¹. In order to achieve better dispersion stability, M¹ is preferably H or NH₄.

In terms of surface activity, X¹ in the formula (4d) is preferably -CF₃. In terms of water solubility, n4 is preferably an integer of 5 or less. In order to achieve appropriate water solubility and surface activity, Y³ is preferably -COOM¹. M¹ is preferably H or NH₄.

An example of a perfluorovinyl ether compound represented by the formula (4d) is CF₂=CFOCF₂CF(CF₃)OCF₂CF₂COOM¹, wherein M¹ is H, NH₄, or an alkali metal.

In terms of emulsifying performance, n5 in the formula (4e) is preferably an integer of 0 or 1 to 5, more preferably 0, 1, or 2, still more preferably 0 or 1. In order to achieve appropriate water solubility and surface activity, Y³ is preferably -COOM¹. In order to reduce remaining as impurities and to achieve improved heat resistance of the resulting molded article, M¹ is preferably H or NH₄.

Examples of a perfluorovinyl alkyl compound represented by the formula (4e) include CH₂=CFCF₂OCF(CF₃)COOM¹ and CH₂=CFCF₂OCF(CF₃)CF₂OCF(CF₃)COOM¹, wherein M¹ is as defined above.

In order to further improve the coulombic efficiency of an electrochemical device, to further reduce the addition amount, to further improve adhesion between a mixture sheet and a substrate, and to further improve powder flowability, the modifying monomer preferably includes at least one selected from the group consisting of HFP, PAVE, PFAE, and a monomer containing a polar group, more preferably at least one selected from the group consisting of HFP, perfluoro(methyl vinyl ether) (PMVE), perfluoro(propyl vinyl ether) (PPVE), PFBE, a non-fluorinated monomer containing an acid anhydride residue, and the modifying monomer (A), still more preferably at least one selected from the group consisting of HFP, PMVE, PPVE, a cyclic non-fluorinated monomer containing an acid anhydride residue, and a compound represented by the formula (4e), further preferably at least one selected from the group consisting of HFP, PMVE, and PPVE, further preferably HFP.

The TFE-based polymer preferably includes at least one selected from the group consisting of a TFE homopolymer and a modified PTFE containing a TFE unit and a polymerized unit based on HFP, more preferably at least one selected from the group consisting of a TFE homopolymer and a modified PTFE consisting of a TFE unit and a polymerized unit based on HFP.

The TFE-based polymer may have a core-shell structure. An example of the TFE-based polymer having a core-shell structure is a TFE-based polymer including a core of a high-molecular-weight TFE-based polymer and a shell of a lower-molecular-weight TFE-based polymer or a TFE copolymer in a particle. Another example thereof is a modified PTFE including a core of a high-molecular-weight PTFE and a shell of a lower-molecular-weight PTFE or a modified PTFE in a particle. Examples of this modified PTFE include PTFEs disclosed in JP 2005-527652 T.

The TFE-based polymer is preferably non melt-processible.

The term "non melt-processible" herein means that the melt flow rate (MFR) is lower than 0.25 g/10 min, preferably less than 0.10 g/10 min, more preferably 0.05 g/10 min or less, still more preferably 0.01 g/10 min or less.

The MFR is a value obtained in conformity with ASTM D1238 using a melt indexer, as the mass (g/10 min) of a polymer flowing out of a nozzle (inner diameter: 2.095 mm, length: 8 mm) per 10 minutes at 372°C and a load of 5 kg.

In order to further improve the coulombic efficiency of an electrochemical device, to further reduce the addition amount, to further improve adhesion between a mixture sheet and a substrate, and to further improve powder flowability, the TFE-based polymer preferably has a TII of 10 or higher, more preferably 15 or higher, still more preferably 20 or higher, further preferably 25 or higher, further preferably 30 or higher, further preferably 35 or higher, particularly preferably 40 or higher, while preferably 80 or lower, more preferably 50 or lower.

The TFE-based polymer having a TII of 10 or higher can be obtained using a hydrocarbon surfactant.

In order to form a mixture sheet with still higher strength, the TFE-based polymer preferably has a standard specific gravity (SSG) of 2.280 or less, more preferably 2.250 or less, still more preferably 2.220 or less, further preferably 2.200 or less, further preferably 2.190 or less, even more preferably 2.180 or less, particularly preferably 2.170 or less.

The SSG is also preferably 2.130 or more.

The SSG is determined by the water displacement method in conformity with ASTM D792 using a sample molded in conformity with ASTM D4895-89.

In order to further improve powder flowability, the fibrillatable polymer in the state of powder is preferably not fibrillated in the polymer composition of the disclosure. The expression "the fibrillatable polymer in the state of powder is not fibrillated" means that the fibrillatable polymer in the state of powder has an average aspect ratio of 2.5 or lower.

The average aspect ratio is preferably 2.0 or lower, more preferably 1.9 or lower, still more preferably 1.8 or lower, further preferably 1.7 or lower, further preferably 1.6 or lower, further preferably 1.5 or lower, further preferably 1.4 or lower, further preferably 1.3 or lower, further preferably 1.2 or lower. The average aspect ratio may be 1.0 or higher.

The average aspect ratio is determined as follows. Specifically, the polymer composition in the form of powder is thinly spread on a black paper surface using air while avoiding the application of shear. The fibrillatable polymer contained in the polymer composition is observed under a microscope, and image analysis is performed on 100 or more randomly selected particles. The ratio of the major axis to the minor axis of each particle is then obtained and the average thereof is defined as the average aspect ratio.

In order to further improve the coulombic efficiency of an electrochemical device, to further reduce the addition amount, to further improve adhesion between a mixture sheet and a substrate, and to further improve powder flowability, the amount of the fibrillatable polymer based on the polymer composition of the disclosure is preferably more than 50% by mass, more preferably 60% by mass or more, still more preferably 65% by mass or more, further preferably 70% by mass or more, while it is preferably 99% by mass or less, more preferably 97% by mass or less, still more preferably 95% by mass or less, further preferably 92% by mass or less, particularly preferably 90% by mass or less.

The polymer composition of the disclosure contains a thermoplastic polymer. The thermoplastic polymer preferably does not have fibrillatability.

The thermoplastic polymer may be either a thermoplastic resin or an elastomer.

The thermoplastic resin preferably has a melting point of 100°C or higher, more preferably 115°C or higher, still more preferably 130°C or higher, further preferably 160°C or higher, even more preferably 210°C or higher, still even more preferably 250°C or higher, further even more preferably 255°C or higher, particularly preferably 295°C or higher, while preferably lower than 324°C, more preferably 310°C or lower, also preferably 275°C or lower, also preferably 270°C or lower, also preferably 230°C or lower, also preferably 225°C or lower, also preferably 200°C or lower, also preferably 180°C or lower, also preferably 135°C or lower.

The melting point herein is the temperature corresponding to the maximum value on a heat-of-fusion curve obtained during the second heating at a temperature increase rate of 10°C/min using a differential scanning calorimeter (DSC).

Examples of the thermoplastic resin include non-fluorinated polymers such as polyethylene, polypropylene, polyamide, polystyrene, thermoplastic polyurethane, polyimide, polyacrylate, polycarbonate, polylactic acid, polyether ether ketone, and polyethylene glycol; and fluoropolymers. The thermoplastic resin is preferably polyethylene or a fluoropolymer, more preferably a fluoropolymer.

The thermoplastic resin preferably has a melt flow rate of 0.01 to 500 g/10 min, more preferably 0.1 to 300 g/10 min.

The melt flow rate is a value obtained in conformity with ASTM D1238 using a melt indexer, as the mass (g/10 min) of a polymer flowing out of a nozzle (inner diameter: 2 mm, length: 8 mm) per 10 minutes at a measurement temperature specified according to the type of the fluoropolymer (e.g., 372°C for PFA and FEP described later, 297°C for ETFE) and a load specified according to the type of the fluoropolymer (e.g., 49 N (5 kg) for PFA, FEP, and ETFE).

The fluoropolymer is preferably a melt-fabricable fluororesin, and examples thereof include tetrafluoroethylene (TFE)/perfluoro(alkyl vinyl ether) (PAVE) copolymers (PFA), TFE/perfluoroallylether copolymers, TFE/hexafluoropropylene (HFP) copolymers (FEP), ethylene (Et)/TFE copolymers (ETFE), TFE/HFP/vinylidene fluoride (VdF) copolymers (THV), VdF/TFE copolymers (VT), Et/TFE/HFP copolymers (EFEP), polychlorotrifluoroethylene (PCTFE), chlorotrifluoroethylene (CTFE)/TFE copolymers, Et/CTFE copolymers, polyvinyl fluoride (PVF), and polyvinylidene fluoride (PVdF).

PFA is preferably, but is not limited to, a copolymer containing a TFE unit and a PAVE unit at a mole ratio (TFE unit/PAVE unit) of 70/30 or higher and lower than 99/1. A more preferred mole ratio is 70/30 or higher and 98.9/1.1 or lower. A still more preferred mole ratio is 80/20 or higher and 98.9/1.1 or lower. A further preferred mole ratio is 90/10 or higher and 99.7/0.3 or lower. An even more preferred mole ratio is 97/3 or higher and 99/1 or lower. Too small an amount of the TFE unit tends to cause reduced mechanical properties, while too large an amount thereof tends to cause too high a melting point and reduced moldability. The PFA is also preferably a copolymer containing a monomer unit derived from a monomer copolymerizable with TFE and PAVE in an amount of 0.1 to 10 mol% and containing the TFE unit and the PAVE unit in a total amount of 90 to 99.9 mol%. Examples of the monomer copolymerizable with TFE and PAVE include HFP, vinyl monomer represented by CZ³Z⁴=CZ⁵(CF₂)ₙZ⁶ (wherein Z³, Z⁴, and Z⁵ are the same as or different from each other and are each a hydrogen atom or a fluorine atom; Z⁶ is a hydrogen atom, a fluorine atom, or a chlorine atom; and n is an integer of 2 to 10), and alkyl perfluorovinyl ether derivative represented by CF₂=CF-OCH₂-Rf⁷ wherein Rf⁷ is a C1-C5 perfluoroalkyl group.

The PFA may contain a functional group. The functional group may be contained in the unit constituting the PFA, may be contained in the end group of the polymer main chain, or may be introduced into the PFA by plasma treatment or the like.

An example of the PFA containing the functional group in its constituent unit is PFA obtained by copolymerizing a monomer containing a polar group.

An example of a PFA containing the functional group in the end group of the polymer main chain is PFA having the functional group as the end group derived from, for example, a polymerization initiator or a chain transfer agent.

The functional group is preferably a hydroxy group or a carbonyl group-containing group, more preferably a carbonyl group-containing group, more preferably a carbonate group, a carboxy group, a haloformyl group, an alkoxycarbonyl group, or an acid anhydride residue, still more preferably a carboxy group or an acid anhydride residue.

The monomer containing a polar group in the PFA may be a non-fluorinated monomer or a fluorine-containing monomer.

Examples of the non-fluorinated monomer include: non-fluorinated monomer containing a hydroxy group, such as hydroxyalkyl vinyl ether (e.g., hydroxyethyl vinyl ether, hydroxypropyl vinyl ether, hydroxybutyl vinyl ether, hydroxyisobutyl vinyl ether, and hydroxycyclohexyl vinyl ether); non-fluorinated monomer containing a carboxy group, such as acrylic acid, methacrylic acid, itaconic acid, succinic acid, fumaric acid, crotonic acid, maleic acid, citraconic acid, undecylenic acid, and acetylenedicarboxylic acid; non-fluorinated monomer containing an acid anhydride residue, such as itaconic anhydride (hereinafter also referred to as "IAH"), citraconic anhydride (hereinafter also referred to as "CAH"), 5-norbornene-2,3-dicarboxylic anhydride (hereinafter also referred to as "NAH"), succinic anhydride, fumaric anhydride, and maleic anhydride; non-fluorinated monomer containing a sulfo group, such as vinyl sulfonic acid; non-fluorinated monomer containing an epoxy group (glycidyl group), such as glycidyl vinyl ether and glycidyl allyl ether; non-fluorinated monomer containing an amino group, such as an aminoalkyl vinyl ether and an aminoalkyl allyl ether; non-fluorinated monomers containing an amide group, such as (meth)acrylamide and methylolacrylamide; and non-fluorinated monomer containing a nitrile group, such as acrylonitrile and methacrylonitrile.

Preferred among these are a non-fluorinated monomer containing a carboxy group and a non-fluorinated monomer containing an acid anhydride residue, more preferred is a non-fluorinated monomer containing an acid anhydride residue, and still more preferred is a cyclic non-fluorinated monomer containing an acid anhydride residue.

The monomer containing a polar group also preferably includes a modifying monomer containing a functional group that is reactive in radical polymerization and a hydrophilic group. Examples of such a modifying monomer include the modifying monomer (A) described above.

The PFA preferably has a melting point of 180°C or higher, more preferably 230°C or higher, still more preferably 280°C or higher, further preferably 290°C or higher, particularly preferably 295°C or higher, while preferably lower than 324°C, more preferably 320°C or lower, still more preferably 310°C or lower.

FEP is preferably, but is not limited to, a copolymer in which the mole ratio of the TFE unit to the HFP unit ((TFE unit)/(HFP unit)) is 70/30 or higher and lower than 99/1. A more preferred mole ratio is 70/30 or higher and 98.9/1.1 or lower, and a still more preferred mole ratio is 80/20 or higher and 98.9/1.1 or lower. FEP is preferably, but is not limited to, a copolymer in which the mass ratio of the TFE unit to the HFP unit ((TFE unit)/(HFP unit)) is 60/40 or higher and 98/2 or lower. A more preferred mass ratio is 60/40 or higher and 95/5 or lower, and a still more preferred mass ratio is 85/15 or higher and 92/8 or lower. The FEP may further be one modified by using a perfluoro(alkyl vinyl ether) as a monomer copolymerizable with TFE and HFP, in an amount within the range of 0.1 to 2% by mass based on the total monomers. Too small an amount of the TFE unit tends to cause reduced mechanical properties, while too large an amount thereof tends to cause too high a melting point and reduced moldability. The FEP is also preferably a copolymer containing a monomer unit derived from a monomer copolymerizable with TFE and HFP in an amount of 0.1 to 10 mol% and containing the TFE unit and the HFP unit in a total amount of 90 to 99.9 mol%. Examples of a monomer copolymerizable with TFE and HFP include PAVE and alkylperfluorovinylether derivative.

The FEP may contain a functional group. Examples of the functional group include those mentioned as examples for PFA.

The FEP has a melting point lower than the melting point of the PTFE. The melting point of the FEP is preferably 150°C or higher, more preferably 200°C or higher, still more preferably 240°C or higher, further preferably 250°C or higher, while it is preferably lower than 324°C, more preferably 320°C or lower, still more preferably 300°C or lower, further preferably 280°C or lower, particularly preferably 275°C or lower.

ETFE is preferably a copolymer in which the mole ratio of the TFE unit to the ethylene unit ((TFE unit)/(ethylene unit)) is 20/80 or higher and 90/10 or lower. A more preferred mole ratio is 37/63 or higher and 85/15 or lower, and a still more preferred mole ratio is 38/62 or higher and 80/20 or lower. The mole ratio of the TFE unit to the ethylene unit ((TFE unit)/(ethylene unit)) may be 50/50 or higher and 99/1 or lower. The ETFE may be a copolymer containing TFE, ethylene, and a monomer copolymerizable with TFE and ethylene. Examples of the copolymerizable monomer include monomers represented by any of the formulas:
CH₂=CX⁵Rf³, CF₂=CFRf³, CF₂=CFORf³, and CH₂=C(Rf³)₂ (wherein X⁵ is a hydrogen atom or a fluorine atom; and Rf³ is a fluoroalkyl group optionally containing an ether bond). Preferred among these are fluorine-containing vinyl monomers represented by any of CF₂=CFRf³, CF₂=CFORf³, and CH₂=CX⁵Rf³. More preferred are HFP, a perfluoro(alkyl vinyl ether) represented by CF₂=CF-ORf⁴ (wherein Rf⁴ is a C1-C5 perfluoroalkyl group), and a fluorine-containing vinyl monomer represented by CH₂=CX⁵Rf³ wherein Rf³ is a C1-C8 fluoroalkyl group. The monomer copolymerizable with TFE and ethylene may be an aliphatic unsaturated carboxylic acid such as itaconic acid or itaconic anhydride. The monomer copolymerizable with TFE and ethylene may also be perfluorobutylethylene, 3,3,4,4,5,5,6,6,7,7,8,8,8-tridecafluorooct-1-ene, 2,3,3,4,4,5,5-heptafluoro-1-pentene (CH₂=CFCF₂CF₂CF₂H), and 2-trifluoromethyl-3,3,3-trifluoropropene ((CF₃)₂C=CH₂). The monomer copolymerizable with TFE and ethylene is preferably in an amount of 0.1 to 10 mol%, more preferably 0.1 to 5 mol%, particularly preferably 0.2 to 4 mol% based on the total polymerized units. The ETFE may further be one modified by using a monomer copolymerizable with TFE and ethylene in an amount within the range of 0 to 20% by mass based on the total monomers. Preferably, the ratio "TFE:ethylene:monomer copolymerizable with TFE and ethylene" is (63 to 94):(27 to 2):(1 to 10).

The ETFE may contain a functional group. Examples of the functional group include those mentioned as examples for PFA.

The ETFE may be a copolymer (EFEP) containing a TFE unit, an ethylene unit, and an HFP unit.

The EFEP preferably has a mole ratio of the TFE unit to the ethylene unit of 20:80 to 90:10, more preferably 37:63 to 85:15, still more preferably 38:62 to 80:20. The HFP unit is preferably in an amount of 0.1 to 30 mol%, more preferably 0.1 to 20 mol% based on the total polymerized units. The ETFE preferably contains 20 to 80 mol% of the tetrafluoroethylene unit, 10 to 80 mol% of the ethylene unit, 0 to 30 mol% of the hexafluoropropylene unit, and 0 to 10 mol% of a unit based on different monomer(s).

The ETFE preferably has a melting point of 140°C or higher, more preferably 160°C or higher, still more preferably 195°C or higher, further preferably 210°C or higher, particularly preferably 215°C or higher, while preferably lower than 324°C, more preferably 320°C or lower, still more preferably 300°C or lower, further preferably 280°C or lower, particularly preferably 270°C or lower.

The EFEP preferably has a melting point of 160°C or higher and 200°C or lower.

The copolymerization ratio (mol% ratio) of TFE, HFP, and VdF in the THV is preferably 75 to 95/0.1 to 10/0.1 to 19, more preferably 77 to 95/1 to 8/1 to 17 (mole ratio), still more preferably 77 to 95/2 to 8/2 to 16.5 (mole ratio), most preferably 77 to 90/3 to 8/5 to 16 (mole ratio). The TFE/HFP/VdF copolymer may contain a different monomer in an amount of 0 to 20 mol%. The different monomer includes at least one monomer selected from the group consisting of: fluorine-containing monomers such as perfluoro(methyl vinyl ether), perfluoro(ethyl vinyl ether), perfluoro(propyl vinyl ether), chlorotrifluoroethylene, 2-chloropentafluoropropene, and perfluorinated vinylethers (e.g., perfluoroalkoxyvinyl ethers such as CF₃OCF₂CF₂CF₂OCF=CF₂); perfluoroalkyl vinyl ethers; perfluoro-1,3-butadiene; trifluoroethylene; hexafluoroisobutene; vinyl fluoride; ethylene; propylene; alkyl vinyl ethers; and BTFB (H₂C=CH-CF₂-CF₂-Br), BDFE (F₂C=CHBr), and BTFE (F₂C-CFBr). Preferred among these are perfluoro(methyl vinyl ether), perfluoro(ethyl vinyl ether), perfluoro(propyl vinyl ether), BTFB (H₂C=CH-CF₂-CF₂-Br), BDFE (F₂C=CHBr), and BTFE (F₂C-CFBr).

The THV preferably has a melting point of 110°C or higher, more preferably 140°C or higher, still more preferably 160°C or higher, further preferably 180°C or higher, particularly preferably 220°C or higher, while preferably 300°C or lower, more preferably 270°C or lower, still more preferably 250°C or lower, further preferably 200°C or lower, even more preferably 180°C or lower, still even more preferably 160°C or lower, particularly preferably 130°C or lower.

VT preferably contains a polymerized unit based on VdF (also referred to as "VdF unit") in an amount of 80.0 to 90.0 mol% based on the total polymerized units.

When the amount of the VdF unit is less than 80.0 mol%, the viscosity of the electrode mixture tends to exhibit a large change over time, whereas when the amount of the VdF unit exceeds 90.0 mol%, the electrode obtained from the mixture tends to have poor flexibility.

The VT preferably contains the VdF unit in an amount of 80.5 mol% or more, more preferably 82.0 mol% or more based on the total polymerized units. When the VdF unit content is 82.0 mol% or more, the cycle characteristics of a battery including an electrode obtained from the electrode mixture of the disclosure tend to be better.

The VT more preferably contains the VdF unit in an amount of 89.0 mol% or less, still more preferably 88.9 mol% or less, particularly preferably 88.8 mol% or less, based on the total polymerized units.

The VT may contain a polymerized unit based on a monomer copolymerizable with VdF and TFE in addition to the VdF unit and a polymerized unit based on TFE (also referred to as "TFE unit"). In order to achieve the effects of the disclosure, a copolymer of VdF and TFE is sufficient; however, adhesion can be further enhanced by copolymerizing a monomer that is copolymerizable therewith to an extent that does not impair the excellent non-aqueous electrolyte swelling property of the copolymer.

The amount of the polymerized unit based on a monomer copolymerizable with VdF and TFE is preferably less than 3.0 mol% based on the total polymerized units of the VT. If the amount is 3.0 mol% or more, typically, the crystallinity of the copolymer of VdF and TFE decreases significantly, and as a result, the non-aqueous electrolyte swelling property tends to decrease.

Examples of the monomer copolymerizable with VdF and TFE include: unsaturated dibasic acid monoesters as disclosed in JP H06-172452 A, such as monomethyl maleate, monomethyl citraconate, monoethyl citraconate, and vinylene carbonate; and compounds containing a hydrophilic polar group such as -SO₃M, - OSO₃M, -COOM, -OPO₃M (where M represents an alkali metal), or an amine-based polar group such as -NHR¹ or -NR²R³ (where R¹, R², and R³ each represent an alkyl group), as described in JP H07-201316 A. Examples thereof include compounds represented by CH₂=CH-CH₂-Y, CH₂=C(CH₃)-CH₂-Y, CH₂=CH-CH₂-O-CO-CH(CH₂COOR⁴)-Y, CH₂=CH-CH₂-O-CH₂-CH(OH)-CH₂-Y, CH₂=C(CH₃)-CO-O-CH₂-CH₂-CH₂-Y, CH₂=CH-CO-O-CH₂-CH₂-Y, and CH₂=CHCO-NH-C(CH₃)₂-CH₂-Y (where Y represents a hydrophilic polar group, and R⁴ represents an alkyl group); and maleic acid and maleic anhydride. Moreover, examples of similarly usable copolymerizable monomers include hydroxy allyl ether monomer such as CH₂=CH-CH₂-O-(CH₂)ₙ-OH (where 3 ≤ n ≤ 8), 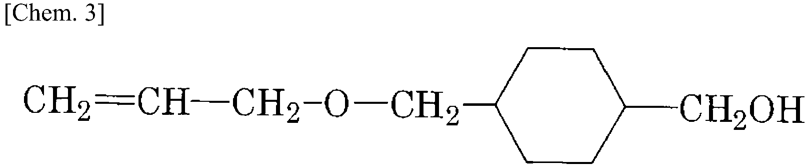 ,
CH₂=CH-CH₂-O-(CH₂-CH₂-O)ₙ-H (where 1 ≤ n ≤ 14), and CH₂=CH-CH₂-O-(CH₂-CH(CH₃)-O)ₙ-H (where 1 ≤ n ≤ 14), allyl ethers and ester monomers each carboxylated and/or substituted with -(CF₂)ₙ-CF₃ (where 3 ≤ n ≤ 8) such as CH₂=CH-CH₂-O-CO-C₂H₄-COOH, CH₂=CH-CH₂-O-CO-C₅H₁₀-COOH, CH₂=CH-CH₂-O-C₂H₄-(CF₂)ₙCF₃, CH₂=CH-CH₂-CO-O-C₂H₄-(CF₂)ₙCF₃, and CH₂=C(CH₃)-CO-O-CH₂-CF₃.

Meanwhile, it has been inferred from previous studies that, even compounds other than those containing a polar group as described above can slightly reduce the crystallinity of a copolymer of vinylidene fluoride and tetrafluoroethylene and impart flexibility to the material, thereby potentially improving adhesion to current collectors made of metal foil such as aluminum foil or copper foil. From this, for example, unsaturated hydrocarbon monomers such as ethylene and propylene (CH₂=CHR, where R represents a hydrogen atom, an alkyl group, or a halogen such as Cl), as well as fluorine-based monomers such as chlorotrifluoroethylene, hexafluoropropylene, hexafluoroisobutene, 2,3,3,3-tetrafluoropropene, CF₂=CF-O-CₙF₂ₙ₊₁ (where n is an integer of 1 or more), CH₂=CF-CₙF₂ₙ₊₁ (where n is an integer of 1 or more), CH₂=CF-(CF₂CF₂)ₙH (where n is an integer of 1 or more), and further CF₂=CF-O-(CF₂CF(CF₃)O)ₘ-CₙF₂ₙ₊₁ (where m and n are each an integer of 1 or more) can also be used.

In addition, a fluorine-containing ethylenic monomer containing at least one functional group represented by the formula (1): 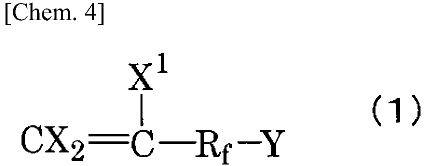 (wherein Y is -CH₂OH, -COOH, a carboxylate salt, a carboxy ester group, or an epoxy group; X and X¹ are the same as or different from each other and each represent a hydrogen atom or a fluorine atom; and R_{f} is a C1-C40 divalent fluorine-containing alkylene group or a C1-C40 divalent fluorine-containing alkylene group containing an ether bond) are also usable. By copolymerizing one or two or more of these monomers, adhesion to a current collector is further improved, preventing the electrode active material from peeling off the current collector even after repeated charge-discharge cycles, resulting in good charge-discharge cycle characteristics.

Among these monomers, from the viewpoint of flexibility and chemical resistance, hexafluoropropylene and 2,3,3,3-tetrafluoropropene are particularly preferred.

As described above, the VT may include a unit based on a different monomer in addition to the VdF unit and the TFE unit. Still, the VT preferably consists of the VdF unit and the TFE unit.

The VT preferably has a weight average molecular weight (polystyrene equivalent) of 50000 to 2000000. The weight average molecular weight is more preferably 80000 or more, still more preferably 100000 or more, while it is more preferably 1950000 or less, still more preferably 1900000 or less, particularly preferably 1700000 or less, most preferably 1500000 or less.

The weight average molecular weight can be determined by gel permeation chromatography (GPC) at 50°C using N,N-dimethylformamide as a solvent.

The VT preferably has a number average molecular weight (polystyrene equivalent) of 10000 to 1400000. The number average molecular weight is more preferably 16000 or more, still more preferably 20000 or more, while it is more preferably 1300000 or less, still more preferably 1200000 or less.

The number average molecular weight can be determined by gel permeation chromatography (GPC) at 50°C using N,N-dimethylformamide as a solvent.

The VT preferably has a melting point of 120°C or higher, more preferably 130°C or higher, while preferably 160°C or lower, more preferably 150°C or lower, still more preferably 140°C or lower, further preferably 135°C or lower.

The PVdF may be a homopolymer consisting of a polymerized unit based on VdF or may be a polymer including the polymerized unit based on VdF and a polymerized unit based on a monomer (α) copolymerizable with the polymerized unit based on VdF.

Examples of the monomer (α) include vinyl fluoride, trifluoroethylene, trifluorochloroethylene, fluoroalkyl vinyl ether, hexafluoropropylene, 2,3,3,3-tetrafluoropropene, and propylene. The examples also include: unsaturated dibasic acid monoesters as disclosed in JP H06-172452 A, such as monomethyl maleate, monomethyl citraconate, monoethyl citraconate, and vinylene carbonate; and compounds containing a hydrophilic polar group such as -SO₃M, -OSO₃M, -COOM, - OPO₃M (where M represents an alkali metal), or an amine-based polar group such as - NHR¹ or -NR²R³ (where R¹, R², and R³ each represent an alkyl group), as described in JP H07-201316 A. Examples thereof include compounds represented by CH₂=CH-CH₂-Y, CH₂=C(CH₃)-CH₂-Y, CH₂=CH-CH₂-O-CO-CH(CH₂COOR⁴)-Y, CH₂=CH-CH₂-O-CH₂-CH(OH)-CH₂-Y, CH₂=C(CH₃)-CO-O-CH₂-CH₂-CH₂-Y, CH₂=CH-CO-O-CH₂-CH₂-Y, and CH₂=CHCO-NH-C(CH₃)₂-CH₂-Y (where Y represents a hydrophilic polar group, and R⁴ represents an alkyl group); and maleic acid and maleic anhydride. Moreover, examples of similarly usable copolymerizable monomers include hydroxy allyl ether monomer such as CH₂=CH-CH₂-O-(CH₂)ₙ-OH (where 3 ≤ n ≤ 8), 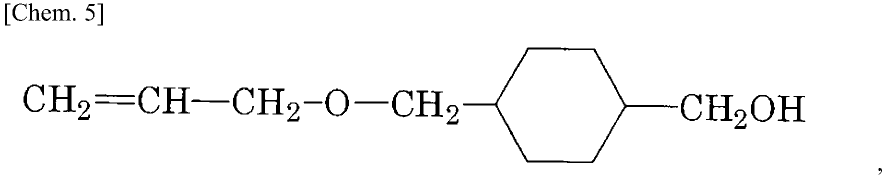 CH₂=CH-CH₂-O-(CH₂-CH₂-O)ₙ-H (where 1 ≤ n ≤ 14), and CH₂=CH-CH₂-O-(CH₂-CH(CH₃)-O)ₙ-H (where 1 ≤ n ≤ 14), allyl ethers and ester monomers each carboxylated and/or substituted with -(CF₂)ₙ-CF₃ (where 3 ≤ n ≤ 8) such as CH₂=CH-CH₂-O-CO-C₂H₄-COOH, CH₂=CH-CH₂-O-CO-C₅H₁₀-COOH, CH₂=CH-CH₂-O-C₂H₄-(CF₂)ₙCF₃, CH₂=CH-CH₂-CO-O-C₂H₄-(CF₂)ₙCF₃, and CH₂=C(CH₃)-CO-O-CH₂-CF₃. Meanwhile, it has been inferred from previous studies that, even compounds other than those containing a polar group as described above can slightly reduce the crystallinity of PVdF and impart flexibility to the material, thereby potentially improving adhesion to current collectors made of metal foil such as aluminum foil or copper foil. From this, for example, unsaturated hydrocarbon monomers such as ethylene and propylene (CH₂=CHR, where R represents a hydrogen atom, an alkyl group, or a halogen such as Cl), as well as fluorine-based monomers such as chlorotrifluoroethylene, hexafluoropropylene, hexafluoroisobutene, CF₂=CF-O-CₙF₂ₙ₊₁ (where n is an integer of 1 or more), CH₂=CF-CₙF₂ₙ₊₁ (where n is an integer of 1 or more), CH₂=CF-(CF₂CF₂)ₙH (where n is an integer of 1 or more), and further CF₂=CF-O-(CF₂CF(CF₃)O)ₘ-CₙF₂ₙ₊₁ (where m and n are each an integer of 1 or more) can also be used.

In addition, a fluorine-containing ethylenic monomer containing at least one functional group represented by the formula (1): 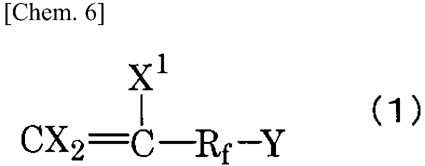 (wherein Y is -CH₂OH, -COOH, a carboxylate salt, a carboxy ester group, or an epoxy group; X and X¹ are the same as or different from each other and each represent a hydrogen atom or a fluorine atom; and R_{f} is a C1-C40 divalent fluorine-containing alkylene group or a C1-C40 divalent fluorine-containing alkylene group containing an ether bond) are also usable. By copolymerizing one or two or more of these monomers, adhesion to a current collector is further improved, preventing the electrode active material from peeling off the current collector even after repeated charge-discharge cycles, resulting in good charge-discharge cycle characteristics.

The PVdF preferably contains the polymerized unit based on the monomer (α) in an amount of 5 mol% or less, more preferably 4.5 mol% or less based on the total polymerized units.

The PVdF preferably has a weight average molecular weight (polystyrene equivalent) of 50000 to 2000000. The weight average molecular weight is more preferably 80000 or more, still more preferably 100000 or more, while it is more preferably 1700000 or less, still more preferably 1500000 or less.

The weight average molecular weight can be determined by gel permeation chromatography (GPC) at 50°C using N,N-dimethylformamide as a solvent.

The PVdF has a number average molecular weight (polystyrene equivalent) of 150000 to 1400000.

If the number average molecular weight is less than 150000, the adhesiveness of the resulting electrode will be poor. If the number average molecular weight is more than 1400000, the electrode mixture tends to gel more easily during preparation.

The number average molecular weight is preferably 200000 or more, more preferably 250000 or more, still more preferably 300000 or more, while it is preferably 1300000 or less, more preferably 1200000 or less, still more preferably 1000000, particularly preferably 800000.

The number average molecular weight can be determined by gel permeation chromatography (GPC) at 50°C using N,N-dimethylformamide as a solvent.

The PVdF preferably has a melting point of 130°C or higher, more preferably 150°C or higher, still more preferably 160°C or higher, while preferably 230°C or lower, more preferably 200°C or lower, still more preferably 180°C or lower.

The amounts of the respective monomer units in the aforementioned copolymer can be calculated by appropriate combination of NMR, FT-IR, elemental analysis, and X-ray fluorescence analysis in accordance with the types of the monomers.

The fluoropolymer as the thermoplastic resin is preferably a perfluoropolymer, and more preferably includes at least one selected from the group consisting of PFA and FEP.

The fluoropolymer as the thermoplastic resin is also preferably a VdF-based polymer, and more preferably includes at least one selected from the group consisting of PVdF and VT.

From the viewpoints of uniform dispersibility and superior strength and uniformity of the mixture sheet, the VdF-based polymer preferably has an average particle size of 10 µm or less, more preferably 8 µm or less, still more preferably 5 µm or less, further preferably 2 µm or less, while preferably 0.1 µm or more, more preferably 0.5 µm or more.

The average particle size of the VdF-based polymer can be adjusted by, for example, pulverization.

The average particle size is determined based on the particle size distribution by volume which was determined by dry measurement using a laser diffraction particle size distribution analyzer (LS13 320) available from Beckman Coulter, Inc. at a vacuum pressure of 20 mH₂O. The average particle size is defined as equivalent to the particle size corresponding to 50% of the cumulative volume in the particle size distribution.

The VdF-based polymer is preferably free from fluorine-containing surfactants. The VdF-based polymer free from fluorine-containing surfactants can be produced by suspension polymerization, for example.

As described in EXAMPLES below, the absence of fluorine-containing surfactants in the VdF-based polymer can be confirmed by the fact that the amount of the fluorine-containing surfactants measured using liquid chromatography-mass spectrometry is below the detection limit.

The elastomer preferably has a glass transition temperature of 25°C or lower, more preferably 10°C or lower, still more preferably 0°C or lower, while preferably - 50°C or higher, more preferably -30°C or higher.

Examples of the elastomer include nitrile rubber, hydrogenated nitrile rubber, styrene-butadiene rubber (SBR), chloroprene rubber (CR), butadiene rubber (BR), natural rubber (NR), isoprene rubber (IR), ethylene-α-olefin rubber, ethylene-α-olefin-non-conjugated diene rubber, chlorinated polyolefin rubber, chlorosulfonated polyolefin rubber, acrylic rubber, ethylene-based acrylic rubber, epichlorohydrin rubber, silicone rubber, butyl rubber (IIR), ethylene-vinyl ester rubber, ethylene-methacrylate rubber, and other non-fluororubbers; and fluoroelastomer. The elastomer is preferably a fluoroelastomer. The elastomer may be crosslinked or not crosslinked.

Specific examples of the fluoroelastomer include vinylidene fluoride (VdF) fluoroelastomer, TFE/propylene (Pr) fluoroelastomer, TFE/Pr/VdF fluoroelastomer, ethylene (Et)/HFP fluoroelastomer, Et/HFP/VdF fluoroelastomer, Et/HFP/TFE fluorine-containing elastomer, fluorosilicone fluorine-containing elastomer, and fluorophosphazene fluorine-containing elastomer. These can be used individually or in any combination as long as it does not impair the effects of the disclosure. In particular, use of a VdF-based fluorine-containing elastomer is preferred.

The VdF-based fluoroelastomer is a fluoroelastomer containing a VdF unit and a unit based on a different monomer copolymerizable with VdF. The VdF-based fluoroelastomer preferably contains the VdF unit in an amount of 20 mol% or more and 90 mol% or less, more preferably 40 mol% or more and 85 mol% or less based on the total amount of the VdF unit and the different monomer unit. The lower limit is still more preferably 45 mol%, particularly preferably 50 mol%. The upper limit is still more preferably 80 mol%.

The comonomer in the VdF-based fluoroelastomer is not limited as long as it is copolymerizable with VdF. Examples thereof include: fluorine-containing monomers such as tetrafluoroethylene (TFE), hexafluoropropylene (HFP), perfluoroalkyl vinyl ether (PAVE), chlorotrifluoroethylene (CTFE), trifluoroethylene, trifluoropropylene, tetrafluoropropylene, pentafluoropropylene, trifluorobutene, tetrafluoroisobutene, hexafluoroisobutene, vinyl fluoride, iodine-containing fluorinated vinyl ether, fluorine-containing monomers represented by formula (1-1):

CH₂=CFRf₁ (1-1)

(wherein Rf₁ is a C1-C12 linear or branched fluorinated alkyl group or fluorinated alkoxy group, and when it contains 2 or more carbon atoms, it may contain an oxygen atom between carbon atoms), and fluorine-containing monomers represented by formula (2-1):

CHF=CHRf₂ (2-1)

(wherein Rf₂ is a C1-C12 linear or branched fluorinated alkyl group or fluorinated alkoxy group, and when it contains 2 or more carbon atoms, it may contain an oxygen atom between carbon atoms); fluorine-free monomers such as ethylene (Et), propylene (Pr), and alkyl vinyl ether, monomers that provide a crosslinking group (cure site), and reactive emulsifiers. One or more of these monomers or compounds can be used in combination.

Rf₁ in the formula (1-1) is a C1-C12 linear or branched fluorinated alkyl group or a C1-C12 linear or branched fluorinated alkoxy group. Each of the fluorinated alkyl group and the fluorinated alkoxy group can contain an oxygen atom (-O-) between carbon atoms when the number of carbon atoms is 2 or more.

The fluorinated alkyl group for Rf₁ may be a partially fluorinated alkyl group in which a portion of the hydrogen atoms bonded to carbon atoms are replaced by fluorine atoms, or a perfluorinated alkyl group in which all of the hydrogen atoms bonded to carbon atoms are replaced by fluorine atoms. The fluorinated alkyl group for Rf₁ may have hydrogen atoms replaced by substituents other than fluorine atoms, but preferably contains no substituents other than fluorine atoms.

The fluorinated alkoxy group for Rf₁ may be a partially fluorinated alkoxy group in which a portion of the hydrogen atoms bonded to carbon atoms are replaced by fluorine atoms, or a perfluorinated alkoxy group in which all of the hydrogen atoms bonded to carbon atoms are replaced by fluorine atoms. Although the hydrogen atoms in the fluorinated alkoxy group for Rf₁ may be replaced by substituents other than fluorine atoms, the fluorinated alkoxy group preferably contains no substituents other than fluorine atoms.

The number of carbon atoms of Rf₁ is preferably 1 to 10, more preferably 1 to 6, still more preferably 1 to 4, particularly preferably 1.

Rf₂ in the formula (2-1) is a C1-C12 linear or branched fluorinated alkyl group or a C1-C12 linear or branched fluorinated alkoxy group. Each of the fluorinated alkyl group and the fluorinated alkoxy group can contain an oxygen atom (-O-) between carbon atoms when the number of carbon atoms is 2 or more.

The fluorinated alkyl group for Rf₂ may be a partially fluorinated alkyl group in which a portion of the hydrogen atoms bonded to carbon atoms are replaced by fluorine atoms, or a perfluorinated alkyl group in which all of the hydrogen atoms bonded to carbon atoms are replaced by fluorine atoms. The fluorinated alkyl group for Rf₂ may have hydrogen atoms replaced by substituents other than fluorine atoms, but preferably contains no substituents other than fluorine atoms.

The fluorinated alkoxy group for Rf₂ may be a partially fluorinated alkoxy group in which a portion of the hydrogen atoms bonded to carbon atoms are replaced by fluorine atoms, or a perfluorinated alkoxy group in which all of the hydrogen atoms bonded to carbon atoms are replaced by fluorine atoms. Although the hydrogen atoms in the fluorinated alkoxy group for Rf₂ may be replaced by substituents other than fluorine atoms, the fluorinated alkoxy group preferably contains no substituents other than fluorine atoms.

The number of carbon atoms of Rf₂ is preferably 1 to 10, more preferably 1 to 6, still more preferably 1 to 4, particularly preferably 1.

In particular, the copolymerized units are preferably derived from hexafluoropropylene (HFP), tetrafluoroethylene (TFE), 2,3,3,3-tetrafluoropropylene, 1,3,3,3-tetrafluoropropylene, or perfluoroalkyl vinyl ether (PAVE). Moreover, at least a portion of the copolymerized units are most preferably derived from hexafluoropropylene (HFP). Examples of the vinylidene fluoride-based elastomer in which at least a portion of the copolymerized units is derived from hexafluoropropylene (HFP) include binary elastomers composed of vinylidene fluoride and hexafluoropropylene, and ternary elastomers composed of vinylidene fluoride, tetrafluoroethylene, and hexafluoropropylene.

The PAVE is more preferably perfluoro(methyl vinyl ether) (PMVE), or perfluoro(propyl vinyl ether) (PPVE), particularly preferably PMVE.

As the PAVE, a perfluorovinyl ether represented by the formula: CF₂=CFOCF₂ORf^{c}
(wherein Rf^{c} is a C1-C6 linear or branched perfluoroalkyl group, a C5-C6 cyclic perfluoroalkyl group, or a C2-C6 linear or branched perfluorooxyalkyl group containing 1 to 3 oxygen atoms) may also be used. For example, CF₂=CFOCF₂OCF₃, CF₂=CFOCF₂OCF₂CF₃, or CF₂=CFOCF₂OCF₂CF₂OCF₃ is preferably used.

The VdF-based fluoroelastomer preferably includes at least one copolymer selected from the group consisting of a VdF/HFP copolymer, a VdF/TFE/HFP copolymer, a VdF/CTFE copolymer, a VdF/CTFE/TFE copolymer, a VdF/PAVE copolymer, a VdF/TFE/PAVE copolymer, a VdF/HFP/PAVE copolymer, a VdF/HFP/TFE/PAVE copolymer, a VdF/TFE/Pr copolymer, a VdF/Et/HFP copolymer, and a copolymer of VdF and a fluorine-containing monomer represented by the formula(1-1) or (2-1). The VdF-based fluoroelastomer more preferably contains, as a different comonomer other than VdF, at least one comonomer selected from the group consisting of TFE, HFP, and PAVE.

Among these, the VdF-based fluoroelastomer preferably includes at least one copolymer selected from the group consisting of a VdF/HFP copolymer, a VdF/TFE/HFP copolymer, a copolymer of VdF and a fluorine-containing monomer represented by the formula (1-1) or (2-1), a VdF/PAVE copolymer, a VdF/TFE/PAVE copolymer, a VdF/HFP/PAVE copolymer, and a VdF/HFP/TFE/PAVE copolymer, more preferably includes at least one selected from the group consisting of a VdF/HFP copolymer a VdF/TFE/HFP copolymer, a copolymer of VdF and a fluorine-containing monomer represented by the formula (1-1) or (2-1), and a VdF/PAVE copolymer, still more preferably includes at least one selected from the group consisting of a VdF/HFP copolymer, a VdF/TFE/HFP copolymer, and a copolymer of VdF and a fluorine-containing monomer represented by the formula (1-1), further preferably includes at least one selected from the group consisting of a VdF/HFP copolymer, a VdF/TFE/HFP copolymer, and a VdF/2,3,3,3-tetrafluoropropylene copolymer, and particularly preferably includes a VdF/HFP copolymer.

The VdF/HFP copolymer preferably has a VdF/HFP compositional ratio of (45 to 85)/(55 to 15) (mol%), more preferably (50 to 80)/(50 to 20) (mol%), still more preferably (60 to 80)/(40 to 20) (mol%). The VdF/HFP compositional ratio is also preferably (50 to 78)/(50 to 22) (mol%).

The VdF/TFE/HFP copolymer preferably has a VdF/TFE/HFP compositional ratio of (30 to 80)/(4 to 35)/(10 to 35) (mol%).

The VdF/PAVE copolymer preferably has a VdF/PAVE compositional ratio of (65 to 90)/(35 to 10) (mol%). In a preferred form, the VdF/PAVE compositional ratio is (50 to 78)/(50 to 22) (mol%).

The VdF/TFE/PAVE copolymer preferably has a VdF/TFE/PAVE compositional ratio of (40 to 80)/(3 to 40)/(15 to 35) (mol%).

The VdF/HFP/PAVE copolymer preferably has a VdF/HFP/PAVE compositional ratio of (65 to 90)/(3 to 25)/(3 to 25) (mol%).

The VdF/HFP/TFE/PAVE copolymer preferably has a VdF/HFP/TFE/PAVE compositional ratio of (40 to 90)/(0 to 25)/(0 to 40)/(3 to 35) (mol%), more preferably (40 to 80)/(3 to 25)/(3 to 40)/(3 to 25) (mol%).

Preferably, the copolymer of VdF and a fluorine-containing monomer (1-1) or (2-1) represented by the formula (1-1) or (2-1) has a VdF/fluorine-containing monomer (1-1) or (2-1) unit ratio of 87/13 to 20/80 (mol%) and contains 0 to 50 mol% of a unit based on a different monomer other than VdF and the fluorine-containing monomer (1-1) or (2-1). The VdF/fluorine-containing monomer (1-1) or (2-1) unit ratio (mol%) is more preferably 80/20 to 20/80. In a preferred form, the VdF/fluorine-containing monomer (1-1) or (2-1) unit compositional ratio is 78/22 to 50/50 (mol%). The copolymer also preferably has a VdF/fluorine-containing monomer (1-1) or (2-1) unit ratio of 87/13 to 50/50 (mol%) and contains 1 to 50 mol% of a unit based on a different monomer other than VdF and the fluorine-containing monomer (1-1) or (2-1) based on the total monomer units. The different monomer other than VdF and the fluorine-containing monomer (1-1) or (2-1) is preferably any of the comonomers exemplified for the VdF such as TFE, HFP, PMVE, perfluoroethyl vinyl ether (PEVE), PPVE, CTFE, trifluoroethylene, hexafluoroisobutene, vinyl fluoride, Et, Pr, alkyl vinyl ether, a monomer that provides a crosslinking group, or a reactive emulsifier, more preferably PMVE, CTFE, HFP, and/or TFE.

The TFE/Pr-based fluorine-containing elastomer refers to a fluorine-containing copolymer containing 45 to 70 mol% of TFE and 55 to 30 mol% of Pr. In addition to these two components, a specific third component (e.g., PAVE) may be contained in an amount of 0 to 40 mol%.

The Et/HFP copolymer preferably has an Et/HFP compositional ratio of (35 to 80)/(65 to 20) (mol%), more preferably (40 to 75)/(60 to 25) (mol%).

The Et/HFP/TFE copolymer preferably has an Et/HFP/TFE compositional ratio of (35 to 75)/(25 to 50)/(0 to 15) (mol%), more preferably (45 to 75)/(25 to 45)/(0 to 10) (mol%).

Examples of the perfluoro fluorine-containing elastomer include those composed of TFE/PAVE. The TFE/PAVE compositional ratio is preferably (50 to 90)/(50 to 10) (mol%), more preferably (50 to 80)/(50 to 20) (mol%), still more preferably (55 to 75)/(45 to 25) (mol%).

Examples of PAVE in this case include PMVE and PPVE, which can be used individually or in any combination.

The fluoroelastomer preferably has a fluorine content of 50% by mass or more, more preferably 55% by mass or more, still more preferably 60% by mass or more. The upper limit of the fluorine content is preferably, but not specifically limited to, 71% by mass or less.

The fluorine content is a value calculated from the chemical composition of the fluoroelastomer as measured by ¹⁹F-NMR.

The molecular weight was calculated from the compositional ratio, and the mass of fluorine atoms contained within it was determined to calculate the fluorine content.

The compositional ratio of each repeating unit of the fluoroelastomer herein is a value measured by an NMR method. Specifically, it is a value measured by the following solution NMR method.
Measurement device: VNMRS-400 from Varian
Resonance frequency: 376.04 (Sfrq)
Pulse width: 30° (pw = 6.8)

The non-perfluoro fluorine-containing elastomers and the perfluoro fluorine-containing elastomers described above can be produced by conventional methods such as emulsion polymerization, suspension polymerization, and solution polymerization. In particular, polymerization methods using iodine (bromine) compounds, particularly those known as iodine (bromine) transfer polymerization, can produce fluoroelastomers with a narrow molecular weight distribution.

The polymer may contain different constituent unit(s) other than the vinylidene fluoride unit and the copolymerized unit (A). In this case, the amount of different constituent unit(s) is preferably 50 mol% or less. The polymer may also consist of the vinylidene fluoride unit and the copolymerized unit (A). The amount of different constituent unit(s) is more preferably 30 mol% or less, still more preferably 15 mol% or less.

The polymer may use, as the different monomer, a monomer that provides a crosslinking site.

The monomer that provides a crosslinking site is not limited. For example, the different monomer used may include an iodine- or bromine-containing monomer represented by the formula:

CX¹₂=CX¹-Rf¹CHR¹X²

(wherein X¹ is a hydrogen atom, a fluorine atom, or -CH₃, Rf¹ is a fluoroalkylene group, a perfluoroalkylene group, a fluoro(poly)oxyalkylene group, or a perfluoro(poly)oxyalkylene group, R¹ is a hydrogen atom or -CH₃, and X² is an iodine atom or a bromine atom), a monomer represented by the formula:

CF₂=CFO(CF₂CF(CF₃)O)ₘ(CF₂)ₙ-X³

(wherein m is an integer of 0 to 5, n is an integer of 1 to 3, and X³ is a cyano group, a carboxy group, an alkoxycarbonyl group, an iodine atom, or a bromine atom), or a monomer represented by the formula:

CH₂=CFCF₂O(CF(CF₃)CF₂O)ₘ(CF(CF₃))ₙ-X⁴

(wherein m is an integer of 0 to 5, n is an integer of 1 to 3, and X⁴ is a cyano group, a carboxy group, an alkoxycarbonyl group, an iodine atom, a bromine atom, or -CH₂OH).

Among these, preferred is at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF₂CH₂I, CF₂=CFOCF₂CF(CF₃)OCF₂CF₂CH₂I, CH₂=CFCF₂OCF(CF₃)CF₂OCF(CF₃)CN, CH₂=CFCF₂OCF(CF₃)CF₂OCF(CF₃)COOH, and CH₂=CFCF₂OCF(CF₃)CF₂OCF(CF₃)CH₂OH. The polymer may contain a repeating unit based on the monomer that provides a crosslinking site. In one embodiment of the disclosure, the polymer does not contain a crosslinking agent.

In order to achieve good adhesiveness, good flexibility, and good solubility in solvents, the fluoroelastomer preferably has a number average molecular weight (Mn) of 7000 to 5000000, a weight average molecular weight (Mw) of 10000 to 10000000, and a Mw/Mn ratio of 1.0 to 30.0, more preferably 1.5 to 25.0. The number average molecular weight (Mn), the weight average molecular weight (Mw), and the Mw/Mn ratio are values measured by a GPC method.

The fluoroelastomer has a Mooney viscosity (ML1+10 (121°C)) at 121°C of 2 or higher, more preferably 5 or higher, still more preferably 10 or higher, particularly preferably 30 or higher, and may be 200 or lower.

The fluoroelastomer has a Mooney viscosity (ML1+10 (140°C)) at 140°C of 2 or higher, more preferably 5 or higher, still more preferably 10 or higher, further preferably 30 or higher, particularly preferably 50 or higher, and may be 200 or lower or 100 or lower.

The Mooney viscosity is a value measured in conformity with ASTM D1646-15 and JIS K6300-1:2013.

The fluoroelastomer preferably has a terminal structure satisfying the following inequality: 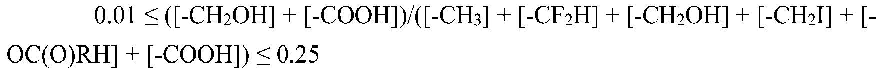 0.01 ≤ ([-CH2OH] + [-COOH])/([-CH3] + [-CF2H] + [-CH2OH] + [-CH2I] + [-OC(O)RH] + [-COOH]) ≤ 0.25 (wherein RH is a C1-C20 alkyl group). By containing terminal functional groups that satisfy the above inequality, the fluoroelastomer achieves good adhesiveness and flexibility, and thus exhibits excellent functionality.

Satisfying the above inequality does not mean that the fluorine-containing copolymer has all of the functional groups [-CH₃], [-CF₂H], [-CH₂OH], [-CH₂I], [-OC(O)RH], and [-COOH], but rather means that, among these, the number ratio of the terminal groups present in the fluorine-containing copolymer falls within the above range.

The amount of each terminal group in the fluorine-containing copolymer can be measured by NMR analysis.

For example, terminal group analysis by NMR is performed by a proton solution NMR method. The analytical sample is prepared as a 20% by mass solution using acetone-d₆ as a solvent, and the measurement is performed.

The reference peak is defined as the acetone peak top at 2.05 ppm.
Measurement device: VNMRS-400 from Varian
Resonance frequency: 399.74 (Sfrq)
Pulse width: 45°

Each terminal corresponds to the peak position shown below.
[-CH₃]: 1.72 to 1.86 ppm
[-CF₂H]: 6.1 to 6.8 ppm
[-CH₂OH]: 3.74 to 3.80 ppm
[-CH₂I]: 3.87 to 3.92 ppm
[-OC(O)RH]: 1.09 to 1.16 ppm
[-COOH]: 10 to 15 ppm

The amounts of the functional groups are calculated from the peak intensities based on the integral values of the respective peaks identified by the above measurements, and the calculation is then carried out based on the results using the following formula: 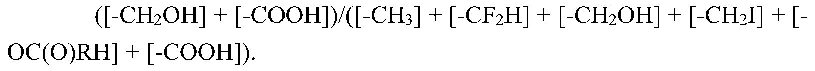 ([-CH2OH] + [-COOH])/([-CH3] + [-CF2H] + [-CH2OH] + [-CH2I] + [-OC(O)RH] + [-COOH]).

The method for setting [-CH₂OH] and [-COOH] within the predetermined ranges described above is not particularly limited, and the setting can be controlled by known methods (e.g., selection and amount of an initiator used in polymerization).

The thermoplastic polymer can be produced by a common radical polymerization method. The polymerization may be carried out by bulk polymerization, solution polymerization, suspension polymerization, or emulsion polymerization, and emulsion polymerization is preferred from the viewpoint of ease of industrial implementation.

In the polymerization, a polymerization initiator, a chain transfer agent, a surfactant, and a solvent can be used, and conventionally known ones can be used for each.

The copolymer may be in any form such as an aqueous dispersion or powder. In the case of emulsion polymerization, the copolymer powder can be obtained by coagulating the dispersion obtained after completion of polymerization, followed by water washing, dehydration, and drying. The coagulation can be performed by adding an inorganic salt such as aluminum sulfate or an inorganic acid, by applying mechanical shear force, or by freezing the dispersion. In the case of suspension polymerization, the copolymer powder can be obtained by recovery from the dispersion obtained after completion of polymerization, followed by drying. In the case of solution polymerization, the copolymer powder can be obtained by directly drying the solution containing the fluorine-containing polymer or by purifying the copolymer through dropwise addition of a poor solvent.

In particular, the thermoplastic polymer preferably includes at least one selected from the group consisting of a perfluoropolymer and a VdF-based polymer, more preferably at least one selected from the group consisting of PFA, FEP, PVdF, VT, and a VdF-based fluoroelastomer, still more preferably at least one selected from the group consisting of PFA, FEP, PVdF, VT, a VdF/HFP copolymer, a VdF/TFE/HFP copolymer, and a VdF/2,3,3,3-tetrafluoropropylene copolymer, further preferably at least one selected from the group consisting of PFA, FEP, PVdF, VT, and a VdF/HFP copolymer, particularly preferably at least one selected from the group consisting of PVdF and VT. The VdF-based polymer is also preferably a fluoroelastomer.

In order to further improve the coulombic efficiency of an electrochemical device, to further reduce the addition amount, to further improve adhesion between a mixture sheet and a substrate, and to further improve powder flowability, the amount of the thermoplastic polymer based on the polymer composition of the disclosure is preferably 1% by mass or more, more preferably 3% by mass or more, still more preferably 5% by mass or more, further preferably 8% by mass or more, particularly preferably 10% by mass or more, while it is preferably less than 50% by mass, more preferably 45% by mass or less, still more preferably 40% by mass or less, further preferably 35% by mass or less, particularly preferably 30% by mass or less.

The total amount of the fibrillatable polymer and the thermoplastic polymer based on the polymer composition of the disclosure may be 95.0% by mass or more, and is preferably 98.0% by mass or more, more preferably 99.0% by mass or more, still more preferably 99.5% by mass or more, particularly preferably 99.9% by mass or more, most preferably 99.95% by mass or more.

The polymer composition (1) of the disclosure contains at least one compound selected from the group consisting of a compound represented by the following formula (1) (hereafter, also referred to as compound (1)) and a compound represented by the following formula (2) (hereafter, also referred to as compound (2)). The polymer composition (2) of the disclosure may contain any of the above compounds.

formula (1): (H-(CF₂)ₘ₋₁-COO)ₚM¹

In the formula, m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2.

formula (2): (H-(CF₂)ₙ-SO₃)_{q}M²

In the formula, n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The metal atom for M¹ or M² may be a monovalent or divalent metal atom, an alkali metal (Group 1), or an alkaline earth metal (Group 2). Specific examples thereof include Na, K, and Li.

The four R⁵s may be the same as or different from each other. R⁵ is preferably H or a C1-C10 organic group, more preferably H or a C1-C4 organic group. The organic group as R⁵ is preferably a fluorine-free organic group.

In the formula (1), m is preferably 6 or more, more preferably 8 or more, still more preferably 11 or more, further preferably 13 or more, particularly preferably 15 or more, while it is preferably 18 or less, more preferably 16 or less.

In the formula (2), n is preferably 6 or more, more preferably 8 or more, still more preferably 11 or more, further preferably 13 or more, particularly preferably 15 or more, while it is preferably 18 or less, more preferably 16 or less.

The polymer composition of the disclosure may contain one or more compounds (1), two or more compounds (1), or three or more compounds (1).

When the polymer composition of the disclosure contains the compound (1), the amount of the compound (1) (if two or more compounds (1) are contained, the amount of each compound) based on the polymer composition may be 10 ppm by mass or less, preferably 5000 ppb by mass or less, more preferably 1000 ppb by mass or less, still more preferably 500 ppb by mass or less, further preferably 100 ppb by mass or less, further preferably 50 ppb by mass or less, further preferably 25 ppb by mass or less, particularly preferably 10 ppb by mass or less.

The lower limit is not limited, and may be 0.1 ppb by mass, 1 ppb by mass, 10 ppb by mass, or 50 ppb by mass.

The polymer composition of the disclosure may contain one or more compounds (2), two or more compounds (2), or three or more compounds (2).

When the polymer composition of the disclosure contains the compound (2), the amount of the compound (2) (if two or more compounds (2) are contained, the amount of each compound) based on the polymer composition may be 10 ppm by mass or less, preferably 5000 ppb by mass or less, more preferably 1000 ppb by mass or less, still more preferably 500 ppb by mass or less, further preferably 100 ppb by mass or less, further preferably 50 ppb by mass or less, further preferably 25 ppb by mass or less, further preferably 10 ppb by mass or less, further preferably 1 ppb by mass or less, further preferably less than 1 ppb by mass, particularly preferably below the limit of quantitation. The lower limit is not limited, and may be an amount below the limit of quantitation.

The polymer composition containing the compound (1) and/or the compound (2) can be obtained using a hydrocarbon surfactant. The polymer composition of the disclosure may contain a hydrocarbon surfactant in addition to the fibrillatable polymer, the thermoplastic polymer, and the compound (1) and/or the compound (2). The amount of the hydrocarbon surfactant in the polymer composition is not limited, and is typically 100 ppm by mass to 10% by mass.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The polymer composition of the disclosure is preferably substantially free from a compound represented by the following formula (3) (hereafter, also referred to as compound (3)),

formula (3): (H-(CF₂)₈-SO₃)_{q}M²

wherein M² is H, a metal atom, NR⁵₄ where R⁵s may be the same as or different from each other and each represent H or a C1-C10 organic group (preferably, a fluorine-free C1-C10 organic group), imidazolium optionally containing a substituent, pyridinium optionally containing a substituent, or phosphonium optionally containing a substituent; and q is 1 or 2.

The phrase "substantially free from the compound (3)" means that the amount of the compound (3) is 25 ppb by mass or less based on the polymer composition. The amount of the compound (3) is preferably 20 ppb by mass or less, more preferably 15 ppb by mass or less, still more preferably 10 ppb by mass or less, relative to the TFE-based polymer. The lower limit is not limited, and may be 0 ppb by mass, 0.1 ppb by mass, or 1 ppb by mass.

The polymer composition of the disclosure contains at least one compound selected from the group consisting of a compound represented by the following formula (4) (hereafter, also referred to as compound (4)) and a compound represented by the following formula (4') (hereafter, also referred to as compound (4')). The amounts thereof are each preferably 1000 ppb by mass or less based on the polymer composition.

formula (4): (H-(CF₂)₁₅-COO)ₚM¹

In the formula, M¹ is H, a metal atom, NR⁵₄ (where R⁵s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

formula (4'): (H-(CF₂)₁₆-COO)ₚM¹

In the formula, M¹ is H, a metal atom, NR⁵₄ (where R⁵ is as defined above), imidazolium optionally containing a substituent, pyridinium optionally containing a substituent, or phosphonium optionally containing a substituent; and p is 1 or 2.

When the polymer composition of the disclosure contains the compound (4), the amount of the compound (4) is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the polymer composition. The lower limit is not limited, and may be 0.1 ppb by mass or 1 ppb by mass.

When the polymer composition of the disclosure contains the compound (4'), the amount of the compound (4') is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the polymer composition. The lower limit is not limited, and may be 0.1 ppb by mass or 1 ppb by mass.

The polymer composition of the disclosure contains at least one compound selected from the group consisting of a compound represented by the following formula (5) (hereafter, also referred to as compound (5)) and a compound represented by the following formula (5') (hereafter, also referred to as compound (5')). The amounts thereof are each preferably 1000 ppb by mass or less based on the polymer composition.

formula (5): (H-(CF₂)₁₃-COO)ₚM¹

In the formula, M¹ is H, a metal atom, NR⁵₄ (where R⁵s may be the same as or different from each other and each represent H or a C1-C10 organic group (preferably, a fluorine-free C1-C10 organic group)), imidazolium optionally containing a substituent, pyridinium optionally containing a substituent, or phosphonium optionally containing a substituent; and p is 1 or 2.

formula (5'): (H-(CF₂)₁₄-COO)ₚM¹

In the formula, M¹ is H, a metal atom, NR⁵₄ (where R⁵ is as defined above), imidazolium optionally containing a substituent, pyridinium optionally containing a substituent, or phosphonium optionally containing a substituent; and p is 1 or 2.

When the polymer composition of the disclosure contains the compound (5), the amount of the compound (5) is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the polymer composition. The lower limit is not limited, and may be 0.1 ppb by mass or 1 ppb by mass.

When the polymer composition of the disclosure contains the compound (5'), the amount of the compound (5') is more preferably 500 ppb by mass or less, still more preferably 250 ppb by mass or less, further preferably 100 ppb by mass or less, further preferably 50 ppb by mass or less, further preferably 25 ppb by mass or less, further preferably 15 ppb by mass or less, particularly preferably 10 ppb by mass or less, based on the polymer composition. The lower limit is not limited, and may be 0.1 ppb by mass or 1 ppb by mass.

The amounts of the compounds (1), (2), (3), (4), (4'), (5), and (5') are values measured by liquid chromatography mass spectrometry as described later in EXAMPLES.

The polymer composition of the disclosure is preferably substantially free from water. Such a polymer composition can reduce or prevent gas generation and deterioration of electrochemical device characteristics. Moreover, the electrode active material or solid electrolyte to be used together can be selected from a wide range of selections, which is advantageous in terms of production process. The phrase "substantially free from water" means that the water content of the polymer composition is 0.050% by mass or less.

The water content is preferably 0.030% by mass or less, more preferably 0.010% by mass or less, still more preferably 0.005% by mass or less, further preferably 0.003% by mass or less, further preferably 0.002% by mass or less, particularly preferably 0.001% by mass or less.

The water content is determined by the following method.

The mass of the polymer composition is weighed before and after heating at 150°C for two hours, and the water content is calculated by the following equation. Three samples are taken, and this calculation is performed for each sample and the values are averaged. 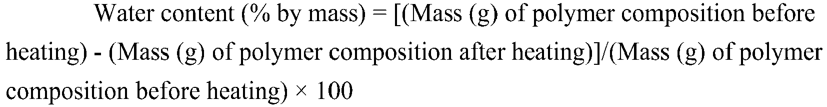 Water content (% by mass) = [(Mass (g) of polymer composition before heating) - (Mass (g) of polymer composition after heating)]/(Mass (g) of polymer composition before heating) × 100

The polymer composition of the disclosure is preferably substantially free from a fluorine-containing compound having a molecular weight of 1000 or less. The phrase "substantially free from a fluorine-containing compound" means that the amount of the fluorine-containing compound is 25 ppb by mass or less based on the polymer composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the limit of quantitation. The lower limit is not limited, and may be an amount below the limit of quantitation.

The amount of the fluorine-containing compound having a molecular weight of 1000 or less is measured by the following method.

To a 1-g portion of a sample weighed out is added 10 g (12.6 mL) of methanol, followed by ultrasonication for 60 minutes, whereby an extract is obtained. The resulting extract is appropriately concentrated by nitrogen purging, and the fluorine-containing compound in the concentrated extract is subjected to a LC/MS/MS assay. Based on the molecular weight information extracted from the LC/MS spectrum obtained, consistency with the structural formulas of the candidate fluorine-containing compounds is examined. Aqueous solutions having five or more different levels of standard substance concentrations are prepared, and LC/MS analysis is performed on the aqueous solutions containing varied amounts of the standard substance. The relation between the amount and the area relative to the amount is plotted, and a calibration curve is drawn. Based on the resulting calibration curve, the area of the fluorine-containing compound in the extract in the LC/MS chromatogram is converted to the amount of the fluorine-containing compound.

The lower limit of quantitation in this measurement method is 10 ppb by mass.

Examples of the fluorine-containing compound having a molecular weight of 1000 or less include a fluorine-containing compound containing a hydrophilic group and having a molecular weight of 1000 g/mol or less. The molecular weight of the fluorine-containing compound is preferably 800 or less, more preferably 500 or less.

Polymerized particles obtained by polymerization performed in the presence of a fluorine-containing surfactant usually contain the fluorine-containing surfactant in addition to the target polymer. The fluorine-containing surfactant herein is used in polymerization.

The fluorine-containing compound having a molecular weight of 1000 or less may be a compound that is not added in polymerization, for example, a compound that is produced as a by-product in polymerization.

When containing an anionic moiety and a cationic moiety, the fluorine-containing compound having a molecular weight of 1000 or less refers to a fluorine-containing compound in which the anionic moiety has a molecular weight of 1000 or less. The fluorine-containing compound having a molecular weight of 1000 or less does not include the fibrillatable polymer and the thermoplastic polymer.

The hydrophilic group may be, for example, -COOM, -SO₂M, or -SO₃M, and examples include anionic groups such as -COOM and -SO₃M wherein M is H, a metal atom, NR¹₄, imidazolium optionally containing a substituent, pyridinium optionally containing a substituent, or phosphonium optionally containing a substituent, and R¹ is H or an organic group.

The fluorine-containing surfactant may also be a fluorine-containing surfactant in which the anionic moiety has a molecular weight of 1000 or less (fluorine-containing anionic surfactant). The "anionic moiety" means a portion excluding the cation in the fluorine-containing surfactant. For example, in the case of F(CF₂)ₙ₁COOM, the anionic moiety refers to the portion "F(CF₂)ₙ₁COO".

Examples of the fluorine-containing anionic surfactant include a compound represented by the following formula (N⁰):

Xⁿ⁰-Rfⁿ⁰-Y⁰ (N⁰)

wherein Xⁿ⁰ is H, Cl, or F; Rfⁿ⁰ is a C3-C20 linear, branched, or cyclic alkylene group in which any or all of H atoms are replaced by F atoms; the alkylene group optionally containing one or more ether bonds, in which a part of the H atoms are replaced by Cl atoms; and Y⁰ is an anionic group.

The anionic group for Y⁰ may be -COOM, -SO₂M, or -SO₃M, and may be - COOM or -SO₃M.

M is H, a metal atom, NR¹₄, imidazolium optionally containing a substituent, pyridinium optionally containing a substituent, or phosphonium optionally containing a substituent, and R¹ is H or an organic group.

Examples of the metal atom include an alkali metal (Group 1) and an alkaline earth metal (Group 2), such as Na, K, and Li.

R¹ may be H or a C1-C10 organic group, may be H or a C1-C4 organic group, and may be H or a C1-C4 alkyl group.

M may be H, a metal atom, or NR¹₄, may be H, an alkali metal (Group 1), an alkaline earth metal (Group 2), or NR¹₄, and may be H, Na, K, Li, or NH₄.

Rfⁿ⁰ may be a group in which 50% or more of the H atoms are replaced by fluorine atoms.

The fluorine-containing surfactant may be a single fluorine-containing surfactant or may be a mixture of two or more fluorine-containing surfactants.

Examples of the fluorine-containing surfactant include compounds represented by the following formulas. The fluorine-containing surfactant may be a mixture of these compounds:

F(CF₂)₇COOM,

F(CF₂)₅COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM,

CF₂ClCF(CF₃)OCF₂CF(CF₃)OCF₂COOM, and

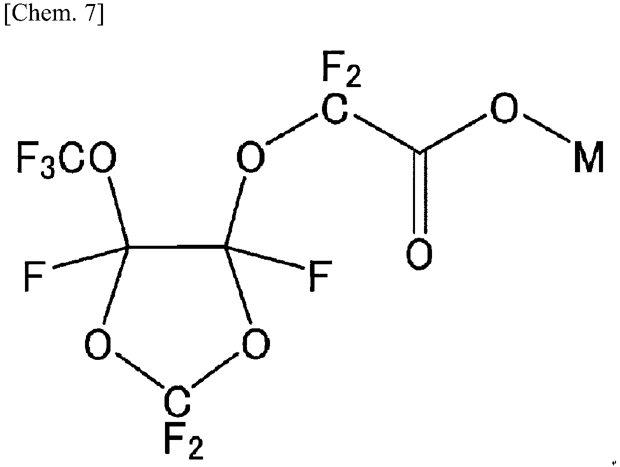

In each formula, M is H, a metal atom, NR¹₄, imidazolium optionally containing a substituent, pyridinium optionally containing a substituent, or phosphonium optionally containing a substituent, and R₁ is H or an organic group.

The polymer composition of the disclosure is preferably substantially free from any of the fluorine-containing compounds represented by the above formulas.

In each of the above formulas, M may be H, a metal atom, or NR¹₄, may be H, an alkali metal (Group 1), an alkaline earth metal (Group 2), or NR¹₄, or may be H, Na, K, Li, or NH₄.

R¹ may be H or a C1-C10 organic group, may be H or a C1-C4 organic group, or may be H or a C1-C4 alkyl group.

The polymer composition of the disclosure substantially free from any of the fluorine-containing compounds represented by the above formulas can further reduce or prevent gas generation and deterioration of electrochemical device characteristics.

The phrase "substantially free from any of the fluorine-containing compounds represented by the above formulas" means that the amount of any of the fluorine-containing compounds is 25 ppb by mass or less based on the polymer composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the limit of quantitation. The lower limit is not limited, and may be an amount below the limit of quantitation.

The polymer composition of the disclosure is also preferably substantially free from a fluorine-containing compound represented by the following formula:

[Cₙ₋₁F₂ₙ₋₁COO⁻]M⁺

wherein n is an integer of 9 to 14, preferably an integer of 9 to 12; and M⁺ is a cation. Such a composition can further reduce or prevent gas generation and deterioration of electrochemical device characteristics.

M constituting the cation M⁺ in the formula is the same as M mentioned above.

The phrase "substantially free from the fluorine-containing compound represented by the formula" means that the amount of the fluorine-containing compound is 25 ppb by mass or less based on the polymer composition.

The amount of the fluorine-containing compound is preferably 20 ppb by mass or less, more preferably 15 ppb by mass or less, still more preferably 10 ppb by mass or less, further preferably less than 10 ppb by mass, further preferably 1 ppb by mass or less, further preferably less than 1 ppb by mass, particularly preferably below the limit of quantitation. The lower limit is not limited, and may be an amount below the limit of quantitation.

The polymer composition preferably has an endothermic peak in each of a region of 330°C or lower and a region of higher than 330°C. The presence of an endothermic peak in each of the above regions indicates that the polymer composition contains the fibrillatable polymer and the thermoplastic polymer.

The temperature range of the region of 330°C or lower (also referred to as region (A)) is preferably lower than 330°C, while it is preferably 320°C or higher, more preferably 324°C or higher, still more preferably 326°C or higher.

The temperature range of the region of higher than 330°C (also referred to as region (B)) is preferably 333°C or higher, more preferably 335°C or higher, still more preferably 340°C or higher, while it is preferably 350°C or lower, more preferably 348°C or lower, still more preferably 346°C or lower.

Also, the polymer composition of the disclosure preferably has an endothermic peak at least in a region of 130°C to 200°C (also referred to as region (C)). The presence of an endothermic peak in the region (C) indicates that the polymer composition contains, as the thermoplastic polymer, at least one VdF-based polymer selected from the group consisting of PVdF and VT.

The temperature range of the region (C) is preferably 190°C or lower, more preferably 180°C or lower, while it is preferably 140°C or higher.

The endothermic peak temperature is the temperature corresponding to the minimum point in each of the regions (A) to (C) on a heat-of-fusion curve obtained by increasing the temperature of the polymer composition that has no history of being heated to a temperature of 300°C or higher at a temperature-increasing rate of 10°C/min using a differential scanning calorimeter (DSC).

The polymer composition of the disclosure also preferably has a 0.1% mass reduction temperature of 340°C or higher. The 0.1% mass reduction temperature within the above range indicates that the polymer composition contains, as the thermoplastic polymer, a perfluoropolymer such as PFA or FEP.

The 0.1% mass reduction temperature is more preferably 350°C or higher, still more preferably 370°C or higher, while it is preferably 400°C or lower, more preferably 390°C or lower.

The 0.1% mass reduction temperature is a value measured by the following method.

About 10 mg of the polymer composition that has never been heated to 300°C or higher is precisely weighed out, and placed in a special aluminum pan, followed by simultaneous thermogravimetry/differential thermal analysis (TG-DTA). The 0.1% mass reduction temperature is a temperature corresponding to a point at which the weight is reduced by 0.1% by mass when the temperature of the aluminum pan is increased in a temperature range from 25°C to 600°C at a rate of 10°C/min in the air atmosphere.

The polymer composition of the disclosure also preferably has a 1.0% mass reduction temperature of 370°C or higher.

The 1.0% mass reduction temperature within the above range indicates that the polymer composition contains, as the thermoplastic polymer, a perfluoropolymer such as PFA or FEP.

The 1.0% mass reduction temperature is more preferably 400°C or higher, still more preferably 420°C or higher, further preferably 440°C or higher, further preferably 460°C or higher, while it is preferably 492°C or lower.

The 1.0% mass reduction temperature is a value measured by the following method.

About 10 mg of the polymer composition that has never been heated to 300°C or higher is precisely weighed out, and placed in a special aluminum pan, followed by simultaneous thermogravimetry/differential thermal analysis (TG-DTA). The 1.0% mass reduction temperature is a temperature corresponding to a point at which the weight is reduced by 1.0% by mass when the temperature of the aluminum pan is increased in a temperature range from 25°C to 600°C at a rate of 10°C/min in the air atmosphere.

In order to further improve powder flowability, the polymer composition of the disclosure in the form of powder preferably has an average aspect ratio of 2.5 or lower, more preferably 2.0 or lower, still more preferably 1.9 or lower, further preferably 1.8 or lower, further preferably 1.7 or lower, further preferably 1.6 or lower, further preferably 1.5 or lower, further preferably 1.4 or lower, further preferably 1.3 or lower, particularly preferably 1.2 or lower. The average aspect ratio may be 1.0 or higher.

The average aspect ratio is determined as follows. Specifically, the polymer composition in the form of powder is thinly spread on a black paper surface using air while avoiding the application of shear. The polymer composition is observed under an electron microscope, and image analysis is performed on 100 or more randomly selected particles. The ratio of the major axis to the minor axis of each particle is then obtained, and the average thereof is defined as the average aspect ratio.

The polymer composition of the disclosure may have an average secondary particle size of 350 µm or greater, preferably 400 µm or more, more preferably 450 µm or more, still more preferably 500 µm or more, further preferably 550 µm or more, particularly preferably 600 µm or more, while preferably 1000 µm or less, more preferably 900 µm or less, still more preferably 800 µm or less, further preferably 700 µm or less.

The average secondary particle size is measured in conformity with JIS K 6891.

In order to achieve excellent handleability, the polymer composition of the disclosure preferably has an apparent density of 0.40 g/mL or higher, more preferably 0.43 g/mL or higher, still more preferably 0.45 g/mL or higher, further preferably 0.48 g/mL or higher, particularly preferably 0.50 g/mL or higher. The upper limit is not limited, and may be 0.70 g/mL.

The apparent density is determined in conformity with JIS K6892.

The polymer composition of the disclosure may be in any form, and is preferably in the form of powder so that it can be mixed with an electrode active material or a solid electrolyte without a large amount of dispersion medium.

The TFE-based polymer composition may be in a form other than powder, such as a dispersion or a molded article.

The polymer composition of the disclosure can be produced by mixing the fibrillatable polymer and the thermoplastic polymer. Any mixing method may be used. The fibrillatable polymer and the thermoplastic polymer may be mixed in the form of powder, both may be mixed in the form of an aqueous dispersion, or one in the form of an aqueous dispersion and the other in the form of powder may be mixed. In terms of enabling more uniform mixing, mixing both in the form of an aqueous dispersion or mixing one in the form of an aqueous dispersion and the other in the form of powder is preferred, and mixing both in the form of an aqueous dispersion is more preferred.

The polymer composition of the disclosure can be suitably produced by, for example, a production method including: (A) mixing an aqueous dispersion of the fibrillatable polymer and an aqueous dispersion or powder of the thermoplastic polymer; (B) coagulating the aqueous dispersion after the mixing to obtain a wet powder; and (C) drying (heating) the wet powder.

The aqueous dispersion of the fibrillatable polymer can be produced, for example, by a production method including a step of emulsion-polymerizing a required monomer in an aqueous medium in the presence of a hydrocarbon surfactant.

Hereinbelow, a production method for producing an aqueous dispersion in a case where the fibrillatable polymer is a TFE-based polymer is specifically described.

In the hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The hydrocarbon surfactant is preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). For example, a hydrocarbon surfactant containing a carboxy group or a group where a hydrogen atom of a carboxy group is replaced by an inorganic cation is usable from among specific hydrocarbon surfactants described later and other compounds with surface activity.

The hydrocarbon surfactant is also preferably a sulfonic acid-type hydrocarbon surfactant. The sulfonic acid-type hydrocarbon surfactant may be any surfactant that contains a -SO₃H group, a -OSO₃H group, or a group where a hydrogen atom of any of these groups is replaced by an inorganic cation (e.g., metal atom, ammonium). Usable is, for example, a hydrocarbon surfactant containing a -SO₃H group, a -OSO₃H group, or a group where a hydrogen atom of any of these groups is replaced by an inorganic cation, from among specific hydrocarbon surfactants described later and other compounds with surface activity.

In order to achieve good emulsification performance, the hydrocarbon surfactant is preferably water-soluble. The phrase "the hydrocarbon surfactant is water-soluble" means that the maximum concentration of the hydrocarbon surfactant dissolved in water is 100 ppm by mass or higher at 85°C. The maximum concentration in water is preferably 500 ppm by mass or higher, more preferably 1000 ppm by mass or higher, still more preferably 2000 ppm by mass or higher, further preferably 3000 ppm by mass or higher, further preferably 5000 ppm by mass or higher, further preferably 1% by mass or higher, further preferably 3% by mass or higher, further preferably 5% by mass or higher, particularly preferably 10% by mass or higher, while it may be 50% by mass or lower.

The emulsion polymerization preferably includes a step of performing emulsion polymerization of tetrafluoroethylene alone or emulsion polymerization of tetrafluoroethylene and a modifying monomer copolymerizable with the tetrafluoroethylene, in the presence of a specific hydrocarbon surfactant in an aqueous medium and a step of adding the specific hydrocarbon surfactant continuously in the emulsion polymerization step.

Adding the specific hydrocarbon surfactant continuously means, for example, adding the specific hydrocarbon surfactant not all at once, but adding over time and without interruption or adding in portions. The specific hydrocarbon surfactant is, for example, a hydrocarbon surfactant containing one or more carbonyl groups which are not in a carboxy group or a hydrocarbon surfactant obtained by radically treating or oxidizing the hydrocarbon surfactant containing one or more carbonyl groups which are not in a carboxy group. The radical treatment may be any treatment that generates radicals in the hydrocarbon surfactant containing one or more carbonyl groups which are not in a carboxy group. Examples include a treatment in which deionized water and the hydrocarbon surfactant are added to a reactor, the reactor is hermetically sealed, the inside of the reactor is replaced with nitrogen, the reactor is heated and pressurized, a polymerization initiator is charged, the contents are stirred for a certain time, then the reactor is depressurized to the atmospheric pressure, and the reactor is cooled. The oxidation treatment is a treatment in which an oxidizing agent is added to a hydrocarbon surfactant containing one or more carbonyl groups which are not in a carboxy group. Examples of the oxidizing agent include oxygen, ozone, hydrogen peroxide solution, manganese(IV) oxide, potassium permanganate, potassium dichromate, nitric acid, and sulfur dioxide. The above production method enables, even without a conventional fluorine-containing surfactant, the production of a TFE-based polymer having a molecular weight equivalent to a TFE-based polymer obtained by a production method using a conventional fluorine-containing surfactant.

In the production method, the step of continuously adding the specific hydrocarbon surfactant is preferably a step of starting to add the hydrocarbon surfactant to the aqueous medium when the solid content of the TFE-based polymer formed in the aqueous medium is less than 0.60% by mass. The specific hydrocarbon surfactant is preferably started to be added to the aqueous medium when the solid content is 0.5% by mass or less. The specific hydrocarbon surfactant is more preferably started to be added when the solid content is 0.3% by mass or less, still more preferably started to be added when the solid content is 0.2% by mass or less, further preferably started to be added when the solid content is 0.1% by mass or less, particularly preferably started to be added when the polymerization is initiated. The solid content means a concentration based on the total amount of the aqueous medium and the TFE-based polymer.

In the step of continuously adding the specific hydrocarbon surfactant, the addition amount of the specific hydrocarbon surfactant is preferably 0.01 to 10% by mass relative to 100% by mass of the aqueous medium. The lower limit thereof is more preferably 0.05% by mass, still more preferably 0.1% by mass, while the upper limit thereof is more preferably 5% by mass, still more preferably 1% by mass.

In the step of performing emulsion polymerization of tetrafluoroethylene alone or emulsion polymerization of tetrafluoroethylene and a modifying monomer copolymerizable with the tetrafluoroethylene in the presence of a specific hydrocarbon surfactant in an aqueous medium, the amount of the specific hydrocarbon surfactant is preferably large, and is preferably 0.0001 to 10% by mass relative to 100% by mass of the aqueous medium. The lower limit thereof is more preferably 0.001% by mass, while the upper limit thereof is more preferably 1% by mass. Less than 0.0001% by mass of the surfactant may cause insufficient dispersibility. More than 10% by mass of the surfactant may fail to give the effects corresponding to its amount; on the contrary, such an amount of the surfactant may cause a reduction in the polymerization rate or even stop the reaction. The amount of the specific hydrocarbon surfactant is appropriately determined in accordance with the type(s) of the monomer(s) used, the target molecular weight of the TFE-based polymer, and the like.

The specific hydrocarbon surfactant preferably includes at least one selected from the group consisting of surfactants represented by the formula: R-X (wherein R is a fluorine-free organic group containing one or more carbonyl groups which are not in a carboxy group and containing 1 to 2000 carbon atoms, X is -OSO₃X¹, -COOX¹, or - SO₃X¹, wherein X¹ is H, a metal atom, NR¹₄, imidazolium optionally containing a substituent, pyridinium optionally containing a substituent, or phosphonium optionally containing a substituent, and R¹s are each H or an organic group (preferably, a fluorine-free organic group) and may be the same as or different from each other) and surfactants (e) described later. R preferably contains 500 or less carbon atoms, more preferably 100 or less carbon atoms, still more preferably 50 or less carbon atoms, further more preferably 30 or less carbon atoms.

The specific hydrocarbon surfactant more preferably includes at least one selected from the group consisting of: surfactants (a) represented by the following formula (a): 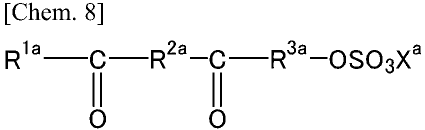 wherein R^{1a} is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; R^{2a} and R^{3a} are each independently a single bond or a divalent linking group; the total number of carbon atoms of R^{1a}, R^{2a}, and R^{3a} is 6 or more; X^{a} is H, a metal atom, NR^{4a}₄, imidazolium optionally containing a substituent, pyridinium optionally containing a substituent, or phosphonium optionally containing a substituent, and R^{4a}s are each H or an organic group (preferably a fluorine-free organic group) and may be the same as or different from each other; and any two of R^{1a}, R^{2a}, and R^{3a} optionally bind to each other to form a ring; surfactants (b) represented by the following formula (b): 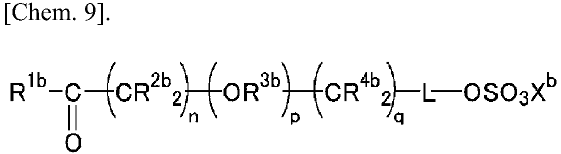 wherein R^{1b} is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; R^{2b} and R^{4b} are each independently H or a substituent; R^{3b} is an alkylene group containing 1 to 10 carbon atoms and optionally containing a substituent; n is an integer of 1 or more; p and q are each independently an integer of 0 or more; X^{b} is H, a metal atom, NR^{5b}₄, imidazolium optionally containing a substituent, pyridinium optionally containing a substituent, or phosphonium optionally containing a substituent, and R^{5b}s are each H or an organic group (preferably a fluorine-free organic group) and may be the same as or different from each other; and any two of R^{1b}, R^{2b}, R^{3b}, and R^{4b} optionally bind to each other to form a ring; L is a single bond, -CO₂-B-*, -OCO-B-*, - CONR^{6b}-B-*, -NR^{6b}CO-B-*, or -CO- other than the carbonyl groups in -CO₂-B-, - OCO-B-, -CONR^{6b}-B-, and -NR⁶CO-B-, wherein B is a single bond or an alkylene group containing 1 to 10 carbon atoms and optionally containing a substituent, R^{6b} is H or an alkyl group containing 1 to 4 carbon atoms and optionally containing a substituent; and * indicates the side bonded to -OSO₃X^{b} in the formula; surfactants (c) represented by the following formula (c): 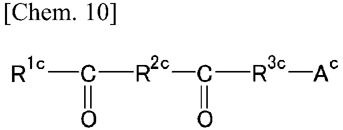 wherein R^{1c} is a linear or branched alkyl group containing 1 or more carbon atoms or a cyclic alkyl group containing 3 or more carbon atoms, with a hydrogen atom bonded to a carbon atom therein being optionally replaced by a hydroxy group or a monovalent organic group (preferably, a fluorine-free organic group) containing an ester bond, optionally contains a carbonyl group when containing 2 or more carbon atoms, and optionally contains a monovalent or divalent heterocycle or optionally forms a ring when containing 3 or more carbon atoms; R^{2c} and R^{3c} are each independently a single bond or a divalent linking group; the total number of carbon atoms of R^{1c}, R^{2c}, and R^{3c} is 5 or more; A^{c} is -COOX^{c} or -SO₃X^{c}, wherein X^{c} is H, a metal atom, NR^{4c}₄, imidazolium optionally containing a substituent, pyridinium optionally containing a substituent, or phosphonium optionally containing a substituent, and R^{4c}s are each H or an organic group (preferably, a fluorine-free organic group) and are the same as or different from each other; and any two of R^{1c}, R^{2c}, and R^{3c} optionally bind to each other to form a ring; surfactants (d) represented by the following formula (d): 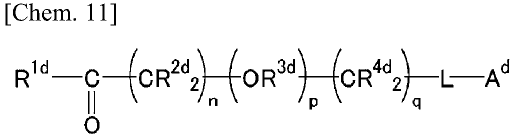 wherein R^{1d} is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; R^{2d} and R^{4d} are each independently H or a substituent; R^{3d} is an alkylene group containing 1 to 10 carbon atoms and optionally containing a substituent; n is an integer of 1 or more; p and q are each independently an integer of 0 or more; A^{d} is -SO₃X^{d} or - COOX^{d}, wherein X^{d} is H, a metal atom, NR^{5d}₄, imidazolium optionally containing a substituent, pyridinium optionally containing a substituent, or phosphonium optionally containing a substituent, and R^{5d}s are each H or an organic group (preferably a fluorine-free organic group) and are the same as or different from each other; any two of R^{1d}, R^{2d}, R^{3d} and R^{4d} optionally bind to each other to form a ring; L is a single bond, -CO₂-B-*, -OCO-B-*, -CONR^{6d}-B-*, -NR^{6d}CO-B-*, or -CO- other than the carbonyl groups in -CO₂-B-, -OCO-B-, -CONR^{6d}-B-, and -NR^{6d}CO-B-, wherein B is a single bond or an alkylene group containing 1 to 10 carbon atoms and optionally containing a substituent, R^{6d} is H or an alkyl group containing 1 to 4 carbon atoms and optionally containing a substituent; and * indicates the side bonded to A^{d} in the formula; and surfactants (e) represented by the following formula (e): 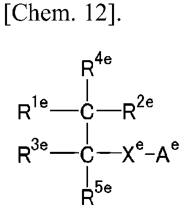 wherein R^{1e} to R^{5e} each represent H or a monovalent substituent, with the proviso that at least one of R^{1e} or R^{3e} represents a group represented by the formula: -Y^{e}-R^{6e} and at least one of R^{2e} or R^{5e} represents a group represented by the formula: -X^{e}-A^{e} or a group represented by the formula: -Y^{e}-R^{6e};
X^{e}s at respective occurrences are the same as or different from each other and are each a divalent linking group or a bond;
A^{e}s at respective occurrences are the same as or different from each other and are each -COOM^{e}, -SO₃M^{e}, or -OSO₃M^{e} (wherein M^{e} is H, a metal atom, NR^{7e}₄, imidazolium optionally containing a substituent, pyridinium optionally containing a substituent, or phosphonium optionally containing a substituent, and R^{7e}s are each H or an organic group (preferably a fluorine-free organic group));
Y^{e}s at respective occurrences are the same as or different from each other and are each a divalent linking group selected from the group consisting of -S(=O)₂-, -O-, - COO-, -OCO-, -CONR^{8e}-, and -NR^{8e}CO-, or a bond, and R^{8e} is H or an organic group (preferably, a fluorine-free organic group);
R^{6e}s at respective occurrences are the same as or different from each other and are each an alkyl group containing two or more carbon atoms and optionally containing, between carbon atoms, at least one selected from the group consisting of a carbonyl group, an ester group, an amide group, and a sulfonyl group; and
any two of R^{1e} to R^{5e} optionally bind to each other to form a ring.

The surfactant (a) can be produced by the production method disclosed in WO 2020/022355.

The surfactant (b) can be produced by the production method disclosed in WO 2020/022355.

The surfactant (c) can be produced by the production method disclosed in WO 2020/022355.

The surfactant (d) can be produced by the production method disclosed in WO 2020/022355.

The surfactant (e) can be produced by a known production method.

The specific hydrocarbon surfactant is also preferably a carboxylic acid-type hydrocarbon surfactant. The carboxylic acid-type hydrocarbon surfactant may be any surfactant that contains a carboxy group (-COOH) or a group where a hydrogen atom of a carboxy group is replaced by an inorganic cation (e.g., metal atom, ammonium). For example, a hydrocarbon surfactant containing a carboxy group or a group where a hydrogen atom of a carboxy group is replaced by an inorganic cation is usable among specific hydrocarbon surfactants described above.

In the carboxylic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The carboxylic acid-type hydrocarbon surfactant is preferably one containing a carboxy group (-COOH) or a group where a hydrogen atom of a carboxy group is replaced by an inorganic cation (e.g., metal atom, ammonium), among at least one selected from the group consisting of the surfactant (c) represented by the formula (c) and the surfactant (d) represented by the formula (d).

The specific hydrocarbon surfactant is also preferably a sulfonic acid-type hydrocarbon surfactant. The sulfonic acid-type hydrocarbon surfactant may be any surfactant that contains a -SO₃H group, a -OSO₃H group, or a group where a hydrogen atom of any of these groups is replaced by an inorganic cation (e.g., metal atom, ammonium). For example, a hydrocarbon surfactant containing a -SO₃H group, a - OSO₃H group, or a group where a hydrogen atom of any of these groups is replaced by an inorganic cation is usable from among specific hydrocarbon surfactants described above.

In the sulfonic acid-type hydrocarbon surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The polymer composition of the disclosure can be efficiently produced by using at least one of the specific hydrocarbon surfactants. The polymer composition of the disclosure may be produced by simultaneously using two or more of the specific hydrocarbon surfactants, or may be produced by simultaneously using a different compound with surface activity in addition to any of the specific hydrocarbon surfactants, as long as the compound is volatile or may remain in a molded article or the like of the TFE-based polymer.

The different compound with surface activity used may be any of those disclosed in JP 2013-542308 T, JP 2013-542309 T, and JP 2013-542310 T, for example.

The different compound with surface activity may be a surfactant including a hydrophilic moiety and a hydrophobic moiety on the same molecule, such as a hydrocarbon surfactant (other than the specific hydrocarbon surfactants). These may be cationic, nonionic, or anionic.

In the compound, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Cationic surfactants usually have a positively charged hydrophilic moiety such as alkylated ammonium halide (e.g., alkylated ammonium bromide) and a hydrophobic moiety such as long chain fatty acids.

In the cationic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Anionic surfactants usually have a hydrophilic moiety such as a carboxylate salt, a sulfonate salt, or a sulfate salt and a hydrophobic moiety that is a long chain hydrocarbon moiety such as alkyl.

In the anionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

Common nonionic surfactants are free from a charged group and have a hydrophobic moiety which is a long-chain hydrocarbon. The hydrophilic moiety of nonionic surfactants contains a water-soluble functional group such as an ethylene ether chain derived from polymerization with ethylene oxide.

In the nonionic surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The different compound with surface activity may also be an anionic surfactant represented by R-L-M wherein R is a linear or branched alkyl group containing 1 or more carbon atoms and optionally containing a substituent or a cyclic alkyl group containing 3 or more carbon atoms and optionally containing a substituent, and optionally contains a monovalent or divalent heterocycle or optionally forms a ring when containing 3 or more carbon atoms; L is -ArSO₃⁻, -SO₃⁻, -SO₄-, -PO₃⁻, or -COO⁻; and M is H, a metal atom, NR⁵₄ (wherein R⁵s may be the same as or different from each other and each are H or an organic group (preferably a fluorine-free organic group)), imidazolium optionally containing a substituent, pyridinium optionally containing a substituent, or phosphonium optionally containing a substituent, and -ArSO₃⁻ is aryl sulfonate. R⁵ is preferably H or an organic group containing 1 to 10 carbon atoms, more preferably H or an organic group containing 1 to 4 carbon atoms.

Specific examples thereof include a compound represented by CH₃-(CH₂)ₙ-L-M (wherein n is an integer of 6 to 17, and L and M are the same as described above) as typified by lauric acid.

Mixtures of those in which R is an alkyl group containing 12 to 16 carbon atoms and L-M is sulfate or sodium dodecyl sulfate (SDS) can also be used.

The different compound with surface activity may also be an anionic surfactant represented by R⁶(-L-M)₂ wherein R⁶ is a linear or branched alkylene group containing 1 or more carbon atoms and optionally containing a substituent or a cyclic alkylene group containing 3 or more carbon atoms and optionally containing a substituent, and optionally contains a monovalent or divalent heterocycle or optionally forms a ring when containing 3 or more carbon atoms; L is -ArSO₃⁻, -SO₃⁻, -SO₄-, -PO₃⁻, or -COO⁻; and M is H, a metal atom, NR⁵₄, imidazolium optionally containing a substituent, pyridinium optionally containing a substituent, or phosphonium optionally containing a substituent; R⁵ is H or an organic group (preferably, a fluorine-free organic group); and -ArSO₃⁻ is aryl sulfonate.

The different compound with surface activity may also be an anionic surfactant represented by R⁷(-L-M)₃ wherein R⁷ is a linear or branched alkylidyne group containing 1 or more carbon atoms and optionally containing a substituent or a cyclic alkylidyne group containing 3 or more carbon atoms and optionally containing a substituent, and optionally contains a monovalent or divalent heterocycle or optionally forms a ring when containing 3 or more carbon atoms; L is -ArSO₃⁻, -SO₃⁻, -SO₄-, -PO₃⁻, or -COO⁻; and M is H, a metal atom, NR⁵₄, imidazolium optionally containing a substituent, pyridinium optionally containing a substituent, or phosphonium optionally containing a substituent; R⁵ is H or an organic group (preferably, a fluorine-free organic group); and -ArSO₃⁻ is aryl sulfonate.

Examples of the siloxane hydrocarbon surfactant include those described in Silicone Surfactants, R. M. Hill, Marcel Dekker, Inc., ISBN: 0-8247-00104. The structure of the siloxane surfactant includes defined hydrophobic and hydrophilic moieties. The hydrophobic moiety contains one or more dihydrocarbyl siloxane units, where the substituents on the silicone atoms are completely hydrocarbon.

In the sense that the carbon atoms of the hydrocarbyl groups are fully replaced by hydrogen atoms, in the cases where they could be replaced by halogens such as fluorine, these siloxane surfactants can also be regarded as hydrocarbon surfactants, i.e., the monovalent substituents on the carbon atoms of the hydrocarbyl groups are hydrogen.

In the siloxane surfactant, hydrogen atoms bonded to carbon atoms are replaced by fluorine atoms at a proportion of preferably 50% or lower, more preferably 25% or lower, still more preferably 10% or lower, most preferably 0% (not replaced by fluorine atoms at all).

The siloxane hydrocarbon surfactants also include those disclosed in U.S. Pat. No. 6,841,616.

The different compound with surface activity is preferably an anionic hydrocarbon surfactant. The anionic hydrocarbon surfactant may be one described above. For example, the following hydrocarbon surfactant can be suitably used.

An example of the anionic hydrocarbon surfactant is a compound (α) represented by the following formula (α):

R¹⁰⁰-COOM (α)

wherein R¹⁰⁰ is a monovalent organic group (preferably a fluorine-free organic group) containing 1 or more carbon atoms; and M is H, a metal atom, NR¹⁰¹₄, imidazolium optionally containing a substituent, pyridinium optionally containing a substituent, or phosphonium optionally containing a substituent; and R¹⁰¹s are each H or an organic group (preferably a fluorine-free organic group) and may be the same as or different from each other. The organic group for R¹⁰¹ is preferably an alkyl group. R¹⁰¹ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in R¹⁰⁰ is preferably 2 or more, more preferably 3 or more. From the viewpoint of water-solubility, the number of carbon atoms in R¹⁰⁰ is preferably 29 or less, more preferably 23 or less.

Examples of the metal atom as M include alkali metals (Group 1) and alkaline earth metals (Group 2), and preferred is Na, K, or Li. M is preferably H, a metal atom, or NR¹⁰¹₄, more preferably H, an alkali metal (Group 1), an alkaline earth metal (Group 2), or NR¹⁰¹₄, still more preferably H, Na, K, Li, or NH₄, further preferably Na, K, or NH₄, particularly preferably Na or NH₄, most preferably NH₄.

The compound (α) may also be an anionic surfactant represented by R¹⁰²-COOM (wherein R¹⁰² is a linear or branched alkyl, alkenyl, alkylene, or alkenylene group containing one or more carbon atoms and optionally containing a substituent or a cyclic alkyl, alkenyl, alkylene, or alkenylene group containing three or more carbon atoms and optionally containing a substituent, which optionally contains an ether bond, and optionally contains a monovalent or divalent heterocycle or optionally forms a ring when containing three or more carbon atoms; and M is as defined above).

Specific examples include a compound represented by CH₃-(CH₂)ₙ-COOM wherein n is an integer of 2 to 28 and M is as defined above.

The anionic hydrocarbon surfactant may also be a compound (β) represented by the following formula (β):

R¹⁰⁰-SO₃M (β)

wherein R¹⁰⁰ is a monovalent organic group (preferably a fluorine-free organic group) containing 1 or more carbon atoms; and M is H, a metal atom, NR¹⁰¹₄, imidazolium optionally containing a substituent, pyridinium optionally containing a substituent, or phosphonium optionally containing a substituent; and R¹⁰¹s are each H or an organic group (preferably a fluorine-free organic group) and may be the same as or different from each other. The organic group for R¹⁰¹ is preferably an alkyl group. R¹⁰¹ is preferably H or an organic group containing 1 to 10 carbon atoms, more preferably H or an organic group containing 1 to 4 carbon atoms, still more preferably H or an alkyl group containing 1 to 4 carbon atoms.

From the viewpoint of surface activity, the number of carbon atoms in R¹⁰⁰ is preferably 2 or more, more preferably 3 or more. From the viewpoint of water-solubility, the number of carbon atoms in R¹⁰⁰ is preferably 29 or less, more preferably 23 or less.

Examples of the metal atom as M include alkali metals (Group 1) and alkaline earth metals (Group 2), and preferred is Na, K, or Li. M is preferably H, a metal atom, or NR¹⁰¹₄, more preferably H, an alkali metal (Group 1), an alkaline earth metal (Group 2), or NR¹⁰¹₄, still more preferably H, Na, K, Li, or NH₄, further preferably Na, K, or NH₄, particularly preferably Na or NH₄, most preferably NH₄.

The compound (β) may also be an anionic surfactant represented by R¹⁰²-SO₃M (wherein R¹⁰² is a linear or branched alkyl, alkenyl, alkylene, or alkenylene group containing one or more carbon atoms and optionally containing a substituent, or a cyclic alkyl, alkenyl, alkylene, or alkenylene group containing three or more carbon atoms and optionally containing a substituent, which optionally contains an ether bond, and optionally contains a monovalent or divalent heterocycle or optionally forms a ring when containing three or more carbon atoms; and M is as defined above).

Specific examples include a compound represented by CH₃-(CH₂)ₙ-SO₃M (wherein n is an integer of 2 to 28 and M is as defined above).

The anionic hydrocarbon surfactant may also be a compound I represented by the following formula I:

R-(XZ)ₙ (I)

wherein R is a hydrophobic hydrocarbon moiety containing one or more saturated or unsaturated, acyclic or cyclic aliphatic groups, where the percentage of the total CH₃ groups based on the sum of CH₃, CH₂, and CH groups in one or more aliphatic groups is at least about 70% and the hydrophobic moiety contains no siloxane unit; Xs may be the same as or different from each other and each represent an ionic hydrophilic moiety; and Zs may be the same as or different from each other and each represent one or more counter ions of the ionic hydrophilic moiety; and n is 1 to 3.

The compound I exhibits low reactivity with a polymerization initiator and/or a propagating fluoropolymer radical in emulsion polymerization of a fluoromonomer.

The compound I preferably includes a substituted moiety represented by the following formula: 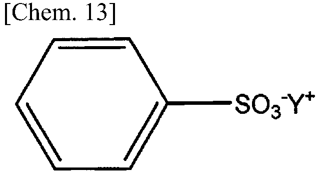 wherein Y⁺ is hydrogen, ammonium, quaternary ammonium, a nitrogen heterocycle, an alkali metal, or an alkaline earth metal.

The compound I is preferably a compound II represented by the following formula II: 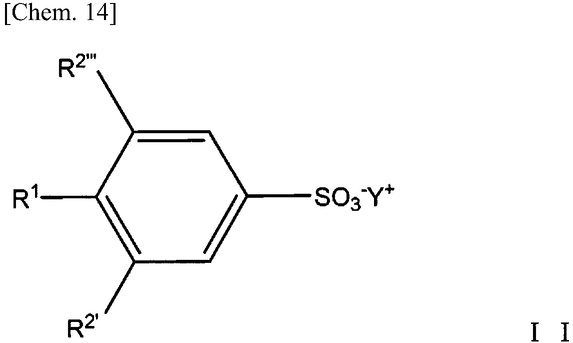 wherein R^{2'} and R^{2‴} are the same as or different from each other and are each a saturated or unsaturated, acyclic or cyclic aliphatic group containing 4 to 16 carbon atoms, where the percentage of total CH₃ groups based on the sum of CH₃, CH₂, and CH groups in R^{2'} and R^{2‴} groups is at least about 70% or R^{2'} and R^{2‴} optionally bind to each other to form a saturated or unsaturated aliphatic ring optionally containing an ether or ester bond, with the percentage of total CH₃ groups based on the sum of CH₃, CH₂, and CH groups in the ring being at least about 70%; R¹ is hydrogen, methoxy, ethoxy, or phenoxy; and Y⁺ is hydrogen, ammonium, quaternary ammonium, a nitrogen heterocycle, an alkali metal, or an alkaline earth metal.

The following compounds are preferred as the compound II, for example.

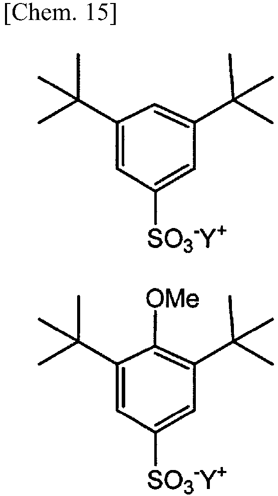

In the formula, Y⁺ may be hydrogen, ammonium, or an alkali metal.

The compound I is also preferably a compound III represented by the following formula III: 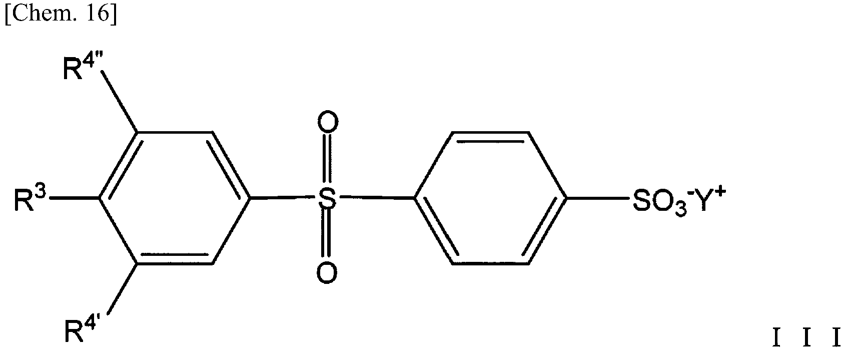 wherein R³, R^{4'}, and R^{4"} are the same as or different from each other and are each hydrogen or a saturated or unsaturated, acyclic or cyclic aliphatic group containing 4 to 16 carbon atoms, where the percentage of total CH₃ groups based on the sum of CH₃, CH₂, and CH groups in R³, R^{4'}, and R^{4"} groups is at least about 70%, at least one of R³, R^{4'}, and R^{4"} is not hydrogen, when R^{4'} and R^{4"} are each hydrogen, R³ is not hydrogen, and when R³ is hydrogen, R^{4'}, and R^{4"} are each not hydrogen; and Y⁺ is hydrogen, ammonium, quaternary ammonium, a nitrogen heterocycle, an alkali metal, or an alkaline earth metal.

The compound III is preferably the following compound, for example.

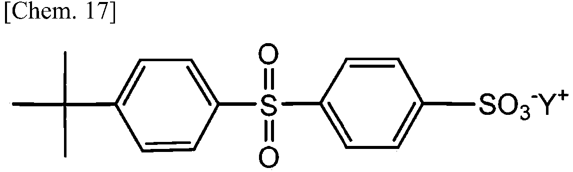

In the formula, Y⁺ may be hydrogen, ammonium, or an alkali metal.

The polymer composition of the disclosure can be obtained by a production method including a polymerization step of polymerizing tetrafluoroethylene alone or polymerizing tetrafluoroethylene and a modifying monomer copolymerizable with the tetrafluoroethylene in an aqueous medium having a pH of 4.0 or more in the presence of a hydrocarbon surfactant and a polymerization initiator to obtain a TFE-based polymer even in a case where the specific hydrocarbon surfactant is not used.

Conventionally, the pH of the aqueous medium used in the polymerization has been less than 4.0 because an acidic polymerization initiator has been used in the polymerization step for producing a TFE-based polymer. As a result of diligent studies by the disclosers, surprisingly, it has been found that by setting the pH of the aqueous medium used for polymerization to 4.0 or more, the stability of polymerization is improved and a TFE-based polymer having a high molecular weight can be produced.

The production method includes polymerizing tetrafluoroethylene alone or tetrafluoroethylene and a modifying monomer copolymerizable with the tetrafluoroethylene in an aqueous medium having a pH of 4.0 or more. The pH should be 4.0 or more, preferably more than 4.0, more preferably 4.5 or more, still more preferably 5.0 or more, further preferably 5.5 or more, even more preferably 6.0 or more, particularly preferably 6.5 or more, particularly preferably 7.0 or more, particularly preferably 7.5 or more, particularly preferably 8.0 or more. The upper limit of the pH is not limited, but may be, for example, 13.0 or less. From the viewpoint of corrosion of the polymerization tank, it is preferably 12.0 or less, more preferably 11.5 or less, still more preferably 11.0 or less.

The pH can be measured with a pH meter.

The polymer composition of the disclosure can be obtained by a production method including a polymerization step of polymerizing tetrafluoroethylene alone or polymerizing tetrafluoroethylene and a modifying monomer copolymerizable with tetrafluoroethylene in an aqueous medium in the presence of an anionic hydrocarbon surfactant and a polymerization initiator to obtain a TFE-based polymer even in a case where the specific hydrocarbon surfactant is not used, in which the hydrocarbon surfactant contains a salt of the hydrocarbon surfactant. In other words, at least a part of the anionic hydrocarbon surfactant in the polymerization step is in the form of a salt.

As a result of diligent studies by the disclosers and others, surprisingly, it has been found that an anionic hydrocarbon surfactant containing a salt of the anionic hydrocarbon surfactant improves the stability of polymerization and a TFE-based polymer having a high molecular weight can be produced.

This is presumably attributable to the fact that the anionic surfactant containing a salt has better water solubility to exhibit emulsifying performance more easily.

The anionic hydrocarbon surfactant will be described later.

It can be confirmed by measuring the conductivity that the anionic hydrocarbon surfactant contains a salt of the hydrocarbon surfactant.

In the production method, the anionic hydrocarbon surfactant preferably has a salt concentration of 50% by mass or more, more preferably 60% by mass or more, still more preferably 70% by mass or more, further preferably 80% by mass or more, even more preferably 90% by mass or more, particularly preferably 95% by mass or more, based on the total mass of the anionic hydrocarbon surfactant.

The proportion of the salt can be measured based on the solution concentration and the conductivity.

In the production method, the hydrocarbon surfactant is more preferably a carboxylic acid-type hydrocarbon surfactant. The hydrocarbon surfactant is free from fluorine.

In the salt of an anionic hydrocarbon surfactant, the cation that replaces the hydrogen atom of the acid (excluding hydrogen atom) is, for example, a metal atom, NR^{y}₄ (where R^{y}s may be the same as or different from each other and are each H or an organic group (preferably a fluorine-free organic group)), imidazolium optionally containing a substituent, pyridinium optionally containing a substituent, or phosphonium optionally containing a substituent. R^{y} is preferably H or an alkyl group, more preferably H or an alkyl group containing 1 to 10 carbon atoms, still more preferably H or an alkyl group containing 1 to 4 carbon atoms.

The cation in the salt of the anionic hydrocarbon surfactant is preferably a metal atom or NR^{y}₄, more preferably NR^{y}₄, still more preferably NH₄.

Since the conductivity varies greatly depending on the temperature, the conductivity is measured using a thermostatic bath while keeping the sample liquid temperature at 25°C and the cell temperature of the pH meter at the same temperature.

The polymer composition of the disclosure can be suitably produced by a production method including an addition step of adding at least one selected from the group consisting of a radical scavenger and a decomposer of a polymerization initiator. The addition step is performed during the step of performing the emulsion polymerization described above in an aqueous medium. The radical concentration during polymerization can be adjusted by adding a radical scavenger or a decomposer of a polymerization initiator. In order to lower the radical concentration, a radical scavenger is preferable.

The radical scavenger used is a compound that has no reinitiation ability after addition or chain transfer to free radicals in the polymerization system. Specifically, the compound used is a compound having a function of readily causing a chain transfer reaction with a primary radical or propagating radical and then generating a stable radical that does not react with the monomer or a compound having a function of readily causing an addition reaction with a primary radical or propagating radical to generate a stable radical.

In general, those called chain transfer agents are characterized by their activity in terms of chain transfer constant and reinitiation efficiency, and among them, those with almost 0% reinitiation efficiency are called radical scavengers.

The radical scavenger can also be described as, for example, a compound whose chain transfer constant to TFE at the polymerization temperature is greater than the polymerization rate constant and whose reinitiation efficiency is substantially 0%. The phrase "reinitiation efficiency is substantially 0%" means that the generated radicals make the radical scavenger a stable radical.

Preferably, the radical scavenger is a compound having a chain transfer constant (Cs) (= chain transfer rate constant (kc)/polymerization rate constant (kp)) to TFE at the polymerization temperature of greater than 0.1. The compound has a chain transfer constant (Cs) of more preferably 0.5 or more, still more preferably 1.0 or more, further preferably 5.0 or more, particularly preferably 10 or more.

The radical scavenger in the disclosure preferably includes, for example, at least one selected from the group consisting of aromatic hydroxy compounds, aromatic amines, N,N-diethylhydroxyamine, quinone compounds, terpenes, thiocyanates, and cupric chloride (CuCl₂).

Examples of aromatic hydroxy compounds include unsubstituted phenol, polyhydric phenol, salicylic acid, m- or p-salicylic acid, gallic acid, and naphthol.

Examples of unsubstituted phenols include o-, m-, or p-nitrophenol, o-, m-, or p-aminophenol, and p-nitrosophenol. Examples of polyhydric phenols include catechol, resorcinol, hydroquinone, pyrogallol, phloroglucin, and naphtresorcinol.

Examples of aromatic amines include o-, m-, or p-phenylenediamine, and benzidine.

Examples of quinone compounds include o-, m-, or p-benzoquinone, 1,4-naphthoquinone, and alizarin.

Examples of thiocyanates include ammonium thiocyanate (NH₄SCN), potassium thiocyanate (KSCN), and sodium thiocyanate (NaSCN).

Among these, the radical scavenger is preferably an aromatic hydroxy compound, more preferably an unsubstituted phenol or a polyhydric phenol, still more preferably hydroquinone.

In order to reduce the standard specific gravity, the addition amount of the radical scavenger is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), further preferably 15% (molar basis), even more preferably 20% (molar basis), particularly preferably 25% (molar basis), particularly preferably 30% (molar basis), particularly preferably 35% (molar basis). The upper limit thereof is more preferably 400% (molar basis), still more preferably 300% (molar basis), further preferably 200% (molar basis), even more preferably 100% (molar basis).

The decomposer of a polymerization initiator may be any compound that can decompose the polymerization initiator used, and preferably includes, for example, at least one selected from the group consisting of sulfites, bisulfites, bromates, diimine, diimine salts, oxalic acid, oxalates, copper salts, and iron salts. Examples of sulfites include sodium sulfite and ammonium sulfite. An example of copper salts is copper(II) sulfate and an example of iron salts is iron(II) sulfate.

The addition amount of the decomposer of a polymerization initiator is in the range of 25 to 300% by mass relative to the amount of the oxidizing agent combined as a polymerization initiator (redox initiator described later). The amount thereof is preferably 25 to 150% by mass, still more preferably 50 to 100% by mass.

In order to reduce the standard specific gravity, the addition amount of the decomposer of a polymerization initiator is preferably an amount equivalent to 3% to 500% (on a molar basis) of the polymerization initiator concentration. The lower limit thereof is more preferably 5% (molar basis), still more preferably 8% (molar basis), still more preferably 10% (molar basis), still more preferably 13% (molar basis), further preferably 15% (molar basis). The upper limit thereof is more preferably 400% (molar basis), still more preferably 300% (molar basis), further preferably 200% (molar basis), even more preferably 100% (molar basis).

At least one selected from the group consisting of a radical scavenger and a decomposer of a polymerization initiator is preferably added when the concentration of the TFE-based polymer formed in the aqueous medium is 5% by mass or more. More preferably, it is added when the concentration is 10% by mass or more.

Further, it is preferably added when the concentration of the TFE-based polymer formed in the aqueous medium is 40% by mass or less. It is more preferably added when the concentration is 35% by mass or less, still more preferably when the concentration is 30% by mass or less.

The addition step may be a step of continuously adding at least one selected from the group consisting of a radical scavenger and a decomposer of a polymerization initiator.

Continuously adding at least one selected from the group consisting of a radical scavenger and a decomposer of a polymerization initiator means, for example, adding the at least one selected from the group consisting of a radical scavenger and a decomposer of a polymerization initiator not all at once but over time without interruption or in portions.

The polymerization step may include polymerization of tetrafluoroethylene further in the presence of a nucleating agent.

The nucleating agent preferably includes at least one selected from the group consisting of, for example, fluoropolyethers, nonionic surfactants, and chain transfer agents.

In this case, the polymerization step is preferably a step of polymerizing tetrafluoroethylene in an aqueous medium in the presence of a hydrocarbon surfactant and the nucleating agent to obtain a TFE-based polymer.

As the fluoropolyether, perfluoropolyether is preferable.

The fluoropolyether preferably has a repeating unit represented by any of the formulas (1a) to (1d):

(-CFCF₃-CF₂-O-)ₙ (1a)

(-CF₂-CF₂-CF₂-O-)ₙ (1b)

(-CF₂-CF₂-O-)ₙ-(-CF₂-O-)ₘ (1c)

(-CF₂-CFCF₃-O-)ₙ-(-CF₂-O-)ₘ (1d)

wherein m and n are integers of 1 or more.

The fluoropolyether is preferably fluoropolyether acid or a salt thereof, and the fluoropolyether acid is preferably a carboxylic acid, a sulfonic acid, a sulfonamide, or a phosphonic acid, more preferably a carboxylic acid. Among the fluoropolyether acid or a salt thereof, a salt of fluoropolyether acid is preferable, an ammonium salt of fluoropolyether acid is more preferable, and an ammonium salt of fluoropolyethercarboxylic acid is still more preferable.

The fluoropolyether acid or a salt thereof can have any chain structure in which oxygen atoms in the main chain of the molecule are separated by saturated fluorocarbon groups containing 1 to 3 carbon atoms. Two or more types of fluorocarbon groups can be present in the molecule.

The fluoropolyether acid or its salt is preferably a compound represented by the following formula:

CF₃-CF₂-CF₂-O(-CFCF₃-CF₂-O-)ₙCFCF₃-COOH,

CF₃-CF₂-CF₂-O(-CF₂-CF₂-CF₂-O-)ₙ-CF₂-CF₂COOH,

or

HOOC-CF₂-O(-CF₂-CF₂-O-)ₙ-(-CF₂-O-)ₘCF₂COOH,

wherein m and n are the same as above, or
a salt of any of these compounds.

These structures are described in J. Appl. Polymer Sci., 57, 797 (1995) examined by Kasai. As disclosed herein, such fluoropolyethers can have a carboxylic acid group or a salt thereof at one end or both ends. Similarly, such fluoropolyethers may have a sulfonic acid or phosphonic acid group or a salt thereof at one end or both ends. In addition, fluoropolyethers having acid functional groups at both ends may have different groups at each end. Regarding a monofunctional fluoropolyether, the other end of the molecule is usually perfluorinated, but may contain a hydrogen or chlorine atom.

Fluoropolyethers having acid groups at one or both ends contain at least two ether oxygens, preferably at least four ether oxygens, still more preferably at least six ether oxygens. Preferably, at least one fluorocarbon group separating ether oxygens, more preferably at least two of such fluorocarbon groups contain 2 or 3 carbon atoms. Still more preferably, at least 50% of the fluorocarbon groups separating ether oxygens contains 2 or 3 carbon atoms. Also preferably, the fluoropolyether contains at least 15 carbon atoms in total, and for example, a preferable minimum value of n or n + m in the repeating unit structure is preferably at least 5. Two or more fluoropolyethers having an acid group at one end or both ends can be used in the method according to the disclosure. Typically, fluoropolyethers may contain a plurality of compounds in varying proportions within the molecular weight range based on the average molecular weight, unless special care is taken in the production of a single specific fluoropolyether compound.

The fluoropolyether preferably has a number-average molecular weight of 800 g/mol or higher. The fluoropolyether acid or a salt thereof preferably has a number-average molecular weight of lower than 6000 g/mol, because the fluoropolyether acid or a salt thereof may be difficult to disperse in an aqueous medium. The fluoropolyether acid or a salt thereof more preferably has a number-average molecular weight of 800 to 3500 g/mol, still more preferably 1000 to 2500 g/mol.

The amount of the fluoropolyether is preferably 5 to 3000 ppm, more preferably 5 to 2000 ppm in the aqueous medium. The lower limit thereof is still more preferably 10 ppm and the upper limit thereof is still more preferably 100 ppm.

Examples of the nonionic surfactant as the nucleating agent include the nonionic surfactant described above, and preferred is a fluorine-free nonionic surfactant. Examples of the nonionic surfactant include a compound represented by the following formula (i):

R³-O-A¹-H (i)

wherein R³ is a linear or branched primary or secondary alkyl group containing 8 to 18 carbon atoms, and A¹ is a polyoxyalkylene chain.
R³ preferably contains 10 to 16, more preferably 12 to 16 carbon atoms.

When R³ contains 18 or less carbon atoms, the aqueous dispersion tends to have good dispersion stability. When R³ contains more than 18 carbon atoms, it is difficult to handle due to its high flowing temperature. When R³ contains less than 8 carbon atoms, the surface tension of the aqueous dispersion becomes high, so that the permeability and wettability are likely to decrease.

The polyoxyalkylene chain may be composed of oxyethylene and oxypropylene. The polyoxyalkylene chain is composed of an average repeating number of 5 to 20 oxyethylene groups and an average repeating number of 0 to 2 oxypropylene groups, and is a hydrophilic group. The number of oxyethylene units may have either a broad or narrow monomodal distribution as typically supplied, or a broader or bimodal distribution which may be obtained by blending. When the average repeating number of oxypropylene groups is more than 0, the oxyethylene groups and oxypropylene groups in the polyoxyalkylene chain may be arranged in blocks or randomly.

From the viewpoint of viscosity and stability of the aqueous dispersion, a polyoxyalkylene chain composed of an average repeating number of 7 to 12 oxyethylene groups and an average repeating number of 0 to 2 oxypropylene groups is preferred. In particular, when A¹ has 0.5 to 1.5 oxypropylene groups on average, good low foaming properties can be achieved, which is preferable.

More preferably, R³ is (R')(R'')HC-, where R' and R'' are the same or different linear, branched, or cyclic alkyl groups, and the total number of carbon atoms is at least 5, preferably 7 to 17. Preferably, at least one of R' or R'' is a branched or cyclic hydrocarbon group.

Specific examples of the polyoxyethylene alkyl ether include C₁₃H₂₇-O-(C₂H₄O)₁₀-H, C₁₂H₂₅-O-(C₂H₄O)₁₀-H, C₁₀H₂₁CH(CH₃)CH₂-O-(C₂H₄O)₉-H, C₁₃H₂₇-O-(C₂H₄O)₉-(CH(CH₃)CH₂O)-H, C₁₆H₃₃-O-(C₂H₄O)₁₀-H, and HC(C₅H₁₁)(C₇H₁₅)-O-(C₂H₄O)₉-H. Examples of commercially available products of the polyoxyethylene alkyl ethers include Genapol X080 (product name, available from Clariant), NOIGEN TDS series (available from DKS Co., Ltd.) exemplified by NOIGEN TDS-80 (trade name), LEOCOL TD series (available from Lion Corp.) exemplified by LEOCOL TD-90 (trade name), LIONOL^{®} TD series (available from Lion Corp.), T-Det A series (available from Harcros Chemicals Inc.) exemplified by T-Det A 138 (trade name), and TERGITOL^{®} 15 S series (available from Dow).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all product names, available from Dow Chemical Co., Ltd.).

The hydrophobic group of the nonionic surfactant may be any of an alkylphenol group, a linear alkyl group, and a branched alkyl group. Examples of the polyoxyethylene alkylphenyl ether-based nonionic compound include, for example, a compound represented by the following formula (ii):

R⁴-C₆H₄-O-A²-H (ii)

wherein R⁴ is a linear or branched primary or secondary alkyl group containing 4 to 12 carbon atoms, and A² is a polyoxyalkylene chain. Specific examples of the polyoxyethylene alkylphenyl ether-based nonionic compound include Triton^{®} X-100 (product name, available from Dow Chemical Co., Ltd.).

Examples of other nonionic surfactants include bifunctional block copolymers supplied from BASF as Pluronic^{®} R series, tridecyl alcohol alkoxylates supplied from BASF Corporation as Iconol^{®} TDA series, and hydrocarbon-containing siloxane surfactants, preferably hydrocarbon surfactants. In the sense that the hydrocarbyl groups are fully replaced by hydrogen atoms where they can be replaced by halogen such as fluorine, these siloxane surfactants can also be regarded as hydrocarbon surfactants, i.e., the monovalent substituents on the hydrocarbyl groups are hydrogen.

In the production method, in addition to the specific hydrocarbon surfactant and other compounds with surface activity used as necessary, an additive may also be used to stabilize the compounds. Examples of the additive include a buffer, a pH adjuster, a stabilization aid, and a dispersion stabilizer.

Preferred examples of the stabilization aid include paraffin wax, fluorine oil, fluorine solvent, and silicone oil. One stabilization aid may be used alone or two or more thereof may be used in combination. The stabilization aid is more preferably paraffin wax. The paraffin wax may be liquid, semi-solid, or solid at room temperature, and is preferably a saturated hydrocarbon containing 12 or more carbon atoms. The paraffin wax commonly has a melting point of preferably 40°C to 65°C, more preferably 50°C to 65°C.

The amount of the stabilizing aid used is preferably 0.1 to 12% by mass, more preferably 0.1 to 8% by mass, based on the mass of the aqueous medium used. It is desirable that the stabilizing aid is sufficiently hydrophobic so that the stabilizing aid is completely separated from the TFE-based polymer aqueous emulsion after emulsion polymerization of TFE, and does not serve as a contaminating component.

In the production method, the emulsion polymerization may be performed by charging a polymerization reactor with an aqueous medium, the hydrocarbon surfactant, a monomer, and optionally other additives, stirring the contents of the reactor, maintaining the reactor at a predetermined polymerization temperature, and adding a predetermined amount of a polymerization initiator to thereby initiate the polymerization reaction. After the initiation of the polymerization reaction, the components such as the monomer, the polymerization initiator, a chain transfer agent, and the surfactant may additionally be added depending on the purpose. The hydrocarbon surfactant may be added after the polymerization reaction is initiated.

In the emulsion polymerization, the polymerization temperature and the polymerization pressure are determined as appropriate in accordance with the type(s) of the monomer(s) used, the target molecular weight of the TFE-based polymer, and the reaction rate. Usually, the polymerization temperature is 5°C to 150°C, preferably 10°C or higher, more preferably 30°C or higher, still more preferably 50°C or higher. The polymerization temperature is more preferably 120°C or lower, still more preferably 100°C or lower.

The polymerization pressure is 0.05 to 10 MPaG. The polymerization pressure is more preferably 0.3 MPaG or higher, still more preferably 0.5 MPaG or higher. The polymerization pressure is more preferably 5.0 MPaG or lower, still more preferably 3.0 MPaG or lower.

In particular, in order to improve the yield, the polymerization pressure is preferably 1.0 MPaG or higher, more preferably 1.2 MPaG or higher, still more preferably 1.5 MPaG or higher, further preferably 1.8 MPaG or higher, particularly preferably 2.0 MPaG or higher.

In the emulsion polymerization, the hydrocarbon surfactant is preferably added when the concentration of the TFE-based polymer formed in the aqueous medium is less than 0.60% by mass. The hydrocarbon surfactant is more preferably added when the concentration is 0.50% by mass or less, still more preferably 0.36% by mass or less, further preferably 0.30% by mass or less, even more preferably 0.20% by mass or less, particularly preferably 0.10% by mass or less. Most preferably, the hydrocarbon surfactant is added along with the initiation of polymerization. The concentration is the concentration relative to the total of the aqueous medium and the TFE-based polymer.

In the emulsion polymerization, the amount of the hydrocarbon surfactant at the initiation of the polymerization is preferably 1 ppm or more relative to the aqueous medium. The amount of the hydrocarbon surfactant at the initiation of the polymerization is preferably 10 ppm or more, more preferably 50 ppm or more, still more preferably 100 ppm or more, further preferably 200 ppm or more. The upper limit thereof is preferably, but not limited to, 100000 ppm, more preferably 50000 ppm, for example. When the amount of the hydrocarbon surfactant at the initiation of polymerization is in the above range, it is possible to obtain an aqueous dispersion having a smaller average primary particle size and superior stability.

The polymerization initiator may be any initiator capable of generating radicals within the above polymerization temperature range, and any known oil-soluble and/or water-soluble polymerization initiator may be used. The polymerization initiator may be combined with a reducing agent, for example, into the form of a redox agent, which initiates the polymerization. The concentration of the polymerization initiator is appropriately determined in accordance with the type(s) of the monomer(s), the target molecular weight of the TFE-based polymer, and the reaction rate.

The polymerization initiator used may be an oil-soluble radical polymerization initiator or a water-soluble radical polymerization initiator.

The oil-soluble radical polymerization initiator may be a known oil-soluble peroxide. Examples thereof include dialkyl peroxycarbonate such as diisopropyl peroxydicarbonate and di-sec-butyl peroxydicarbonate, peroxyester such as t-butyl peroxyisobutyrate and t-butyl peroxypivalate, and dialkyl peroxide such as di-t-butyl peroxide.

The water-soluble radical polymerization initiator may be a known water-soluble peroxide. Examples thereof include ammonium salt, potassium salt, and sodium salt of any of persulfuric acid, perboric acid, perchloric acid, perphosphoric acid, and percarbonic acid, t-butyl permaleate, and t-butyl hydroperoxide. The initiator may also contain a reducing agent such as a sulfite or a sulfurous acid salt. The amount thereof used may be 0.1 to 20 times the amount of the peroxide.

For example, in the case of the polymerization at a low temperature of 30°C or lower, a polymerization initiator used is preferably a redox initiator that is a combination of an oxidizing agent and a reducing agent. Examples of the oxidizing agent include persulfate salt, organic peroxide, potassium permanganate, manganese triacetate, ammonium cerium nitrate, and bromate salt. Examples of the reducing agent include sulfite salt, bisulfite salt, bromate salt, diimine, and oxalic acid. Examples of the persulfate salt include ammonium persulfate and potassium persulfate. Examples of the sulfite salt include sodium sulfite and ammonium sulfite. In order to increase the decomposition rate of the initiator, the combination of the redox initiator is also preferably combined with a copper salt or an iron salt. An example of copper salts is copper(II) sulfate and an example of iron salts is iron(II) sulfate.

The oxidizing agent of the redox initiator is preferably permanganic acid or its salt, a persulfate salt, manganese triacetate, a cerium(IV) salt, or bromic acid or its salt. The reducing agent of the redox initiator is preferably a dicarboxylic acid or its salt, or a diimine.

More preferably, the oxidizing agent is permanganic acid or its salt, a persulfate salt, or bromic acid or its salt, and the reducing agent is a dicarboxylic acid or its salt.

Examples of the redox initiator include combinations of potassium permanganate/oxalic acid, potassium permanganate/ammonium oxalate, manganese triacetate/oxalic acid, manganese triacetate/ammonium oxalate, ammonium cerium nitrate/oxalic acid, and ammonium cerium nitrate/ammonium oxalate.

In the case of using a redox initiator, a polymerization vessel may be charged with an oxidizing agent or a reducing agent in advance, and the other may be continuously or intermittently added thereto to start polymerization. For example, in the case of using potassium permanganate/ammonium oxalate, preferably, a polymerization vessel is charged with ammonium oxalate and potassium permanganate is continuously added thereto.

In the redox initiator herein, "potassium permanganate/ammonium oxalate" refers to a combination of potassium permanganate and ammonium oxalate. The same applies to other compounds.

As the redox initiator, an oxidizing agent or a reducing agent capable of adjusting the pH of an aqueous solution of the redox initiator to 4.0 or more is preferably used. The aqueous solution of the redox initiator means a 0.50% by mass aqueous solution of an oxidizing agent or a 0.50% by mass aqueous solution of a reducing agent.

That is, at least one of the 0.50% by mass aqueous solution of the oxidizing agent and the 0.50% by mass aqueous solution of the reducing agent has a pH of 4.0 or more, and it is preferable that both the 0.50% by mass aqueous solution of the oxidizing agent and the 0.50% by mass aqueous solution of the reducing agent have a pH of 4.0 or more.

The pH of the aqueous solution of the redox initiator (0.50% by mass aqueous solution of oxidizing agent or 0.50% by mass aqueous solution of reducing agent) is more preferably 5.0 or more, still more preferably 5.5 or more, particularly preferably 6.0 or more.

The redox initiator is particularly preferably a combination of an oxidizing agent in the form of a salt and a reducing agent in the form of a salt.

For example, the oxidizing agent in the form of a salt more preferably includes at least one selected from the group consisting of persulfate salts, permanganate salts, cerium(IV) salts, and bromate salts, still more preferably a permanganate salt, particularly preferably potassium permanganate.

The reducing agent in the form of a salt more preferably includes at least one selected from the group consisting of oxalate salts, malonate salts, succinate salts, glutarate salts, and bromate salts, still more preferably an oxalate salt, particularly preferably ammonium oxalate.

Specifically, the redox initiator preferably includes at least one selected from the group consisting of potassium permanganate/ammonium oxalate, potassium bromate/ammonium sulfite, manganese triacetate/ammonium oxalate, and ammonium cerium nitrate/ammonium oxalate, preferably at least one selected from the group consisting of potassium permanganate/ammonium oxalate, potassium bromate/ammonium sulfite, and ammonium cerium nitrate/ammonium oxalate.

Use of a redox initiator in the polymerization step can increase the molecular weight of the resulting TFE-based polymer. Therefore, the SSG can be made small and the TFE-based polymer is expandable.

Use of a redox initiator in the polymerization step can also increase the number of TFE-based polymer particles generated in the aqueous dispersion. The yield of the resulting TFE-based polymer can also be increased.

When a redox initiator is used, the oxidizing agent and the reducing agent may be added all at once at the initial stage of polymerization, or the reducing agent may be added all at once at the initial stage of polymerization and the oxidizing agent may be added continuously. Alternatively, the oxidizing agent may be added all at once at the initial stage of polymerization and the reducing agent may be added continuously, or both the oxidizing agent and the reducing agent may be added continuously.

When a redox initiator is used as the polymerization initiator, the addition amount of the oxidizing agent is preferably 5 to 10000 ppm, more preferably 10 to 1000 ppm relative to the aqueous medium, and the addition amount of the reducing agent is preferably 5 to 10000 ppm, more preferably 10 to 1000 ppm relative to the aqueous medium.

When a redox initiator is used in the polymerization step, the polymerization temperature is preferably 100°C or lower, more preferably 95°C or lower, still more preferably 90°C or lower. The polymerization temperature is preferably 10°C or higher, more preferably 20°C or higher, still more preferably 30°C or higher.

The polymerization initiator may be added in any amount. For example, it may be added in an amount that does not significantly decrease the polymerization rate (e.g., at a concentration of several parts per million relative to water) or more at one time in an early stage of polymerization or intermittently or continuously. The upper limit thereof falls within a range where the reaction temperature is allowed to increase while the heat is removed owing to the polymerization reaction heat through the device surfaces. The upper limit more preferably falls within a range where the polymerization reaction heat can be removed through the device surfaces. More specifically, the addition amount of the polymerization initiator is preferably 1 ppm or more, more preferably 10 ppm or more, still more preferably 50 ppm or more, relative to the aqueous medium. The addition amount of the polymerization initiator is preferably 100000 ppm or less, more preferably 10000 ppm or less, still more preferably 5000 ppm or less.

The aqueous medium is a reaction medium in which polymerization is allowed to occur, and means a liquid that contains water. The aqueous medium may be any one containing water, and may be one containing water as well as, for example, a fluorine-free organic solvent such as alcohol, ether, and ketone and/or a fluorine-containing organic solvent having a boiling point of 40°C or lower.

In the emulsion polymerization, a known chain transfer agent may be further added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, isopentane, methane, ethane, propane, isobutane, methanol, ethanol, isopropanol, acetone, a variety of mercaptans, a variety of halogenated hydrocarbons such as carbon tetrachloride, and cyclohexane.

The chain transfer agent to be used may be a bromine compound or an iodine compound. An example of a polymerization method using a bromine compound or an iodine compound is a method of performing polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the following formula:

R^{a}IₓBr_{y}

wherein x and y are each an integer of 0 to 2 and satisfy 1 ≤ x + y ≤ 2; and R^{a} is a saturated or unsaturated fluorohydrocarbon or chlorofluorohydrocarbon group containing 1 to 16 carbon atoms, or a hydrocarbon group containing 1 to 3 carbon atoms, each of which optionally contains an oxygen atom. Use of a bromine compound or an iodine compound allows iodine or bromine to be introduced into the polymer to serve as a crosslinking point.

Examples of the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1, 2-bromo-4-iodoperfluorobutene-1, monoiodomonobromo-substituted benzene, diiodomonobromo-substituted benzene, and (2-iodoethyl)-substituted and (2-bromoethyl)-substituted benzenes. These compounds may be used alone or in any combination.

Of these, 1,4-diiodoperfluorobutane, 1,6-diiodoperfluorohexane, and 2-iodoperfluoropropane are preferably used in terms of polymerization reactivity, crosslinkability, availability, and the like.

The amount of the chain transfer agent used is usually 1 to 50000 ppm, preferably 1 to 20000 ppm, relative to the total amount of the fluoromonomer fed.

The chain transfer agent may be added to the reaction vessel all at once before initiation of the polymerization, may be added all at once after initiation of the polymerization, may be added in multiple portions during the polymerization, or may be added continuously during the polymerization.

An aqueous dispersion of a TFE-based polymer can be obtained by the above emulsion polymerization. The aqueous dispersion normally contains a TFE-based polymer, the compound (1) and/or the compound (2), and an aqueous medium. The aqueous dispersion may have any solid concentration. For example, the solid concentration may be 1.0 to 70% by mass. The solid concentration is preferably 8.0% by mass or higher, more preferably 10.0% by mass or higher, while it is preferably 60.0% by mass or lower, more preferably 50.0% by mass or lower.

In the production method, the amount attached is preferably 3.0% by mass or less, more preferably 2.0% by mass or less, more preferably 1.0% by mass or less, still more preferably 0.8% by mass or less, further preferably 0.7% by mass or less, particularly preferably 0.6% by mass or less, based on the TFE-based polymer finally obtained.

The aqueous dispersion or powder of the thermoplastic polymer in the step (A) can be produced by any known method such as suspension polymerization, emulsion polymerization, or solution polymerization. Preferred among these are suspension polymerization and emulsion polymerization, and more preferred is emulsion polymerization.

The coagulation in the step (B) can be performed by a known method.

In the case of an aqueous dispersion of the TFE-based polymer, coagulation is normally performed by diluting the aqueous dispersion obtained by polymerization, such as polymer latex, to a polymer concentration of 10 to 25% by mass (preferably a polymer concentration of 10 to 20% by mass) using water, optionally adjusting the pH to a neutral or alkaline pH, and stirring the dilution in a container equipped with a stirrer more vigorously than the stirring during the reaction. In the coagulation, stirring may be performed with addition of a coagulant such as a water-soluble organic compound (e.g., methanol, acetone), an inorganic salt (e.g., potassium nitrate, ammonium carbonate), or an inorganic acid (e.g., hydrochloric acid, sulfuric acid, nitric acid). The coagulation may be continuously performed using, for example, an inline mixer.

The drying (heat treatment) in the step (C) is typically performed by means such as vacuum, high frequency, or hot air, while the wet powder is kept in a state where it does not flow so much, preferably in a stationary state. Friction between powders, especially at high temperatures, generally has an unfavorable effect on a fine powder fibrillatable polymer. This is because particles made of the fibrillatable polymer of this type are easily fibrillated even by a small shearing force to lose their original stable particle structure.

In order to more efficiently remove water and the fluorine-containing compound, the drying temperature in the step (C) is preferably 130°C or higher, more preferably 140°C or higher, still more preferably 150°C or higher, further preferably 160°C or higher, further preferably 180°C or higher, further preferably 200°C or higher, particularly preferably 220°C or higher, while preferably 300°C or lower, more preferably 280°C or lower, still more preferably 250°C or lower.

In the case of drying in vacuum, drying at low temperature such as 60°C or higher, 70°C or higher, 80°C or higher, or 90°C or higher is also preferred.

In order to more efficiently remove water and the fluorine-containing compound, the duration of the drying in the step (C) is preferably 2 hours or longer, more preferably 5 hours or longer, still more preferably 10 hours or longer, further preferably 15 hours or longer. The upper limit is not limited. Still, it is preferably 100 hours, more preferably 50 hours, still more preferably 30 hours, for example.

In order to more efficiently remove water and the fluorine-containing compound, the wind speed in the step (C) is preferably 0.01 m/s or higher, more preferably 0.03 m/s or higher, still more preferably 0.05 m/s or higher, further preferably 0.1 m/s or higher. In order to reduce or prevent powder scattering, the wind speed is preferably 50 m/s or lower, more preferably 30 m/s or lower, still more preferably 10 m/s or lower.

The drying in the step (C) can be performed using an electric furnace or a steam furnace. For example, the heat treatment may be performed with an electric furnace such as a co-flow box electric furnace, a ventilated box electric furnace, a ventilated conveyor electric furnace, a band electric furnace, a radiant conveyor electric furnace, a fluidized bed electric furnace, a vacuum electric furnace, a stirring electric furnace, an convection electric furnace, or a hot air circulating electric furnace, or a steam furnace corresponding to any of the foregoing electric furnaces (a device of the type defined by replacing the "electric furnace" in the device name of the foregoing electric furnace with "steam furnace"). In order to more efficiently remove water and the fluorine-containing compound, preferred are a co-flow box electric furnace, a ventilated box electric furnace, a ventilated conveyor electric furnace, a band electric furnace, a fluidized bed electric furnace, a hot air circulating electric furnace, and steam furnaces corresponding to the forgoing furnaces (devices of the types determined by replacing the "electric furnace" in the device names of the foregoing electric furnaces with "steam furnace").

In the drying in the step (C), in order to more efficiently remove water and the fluorine-containing compound, the wet powder is preferably placed in a container with air permeability on the bottom and/or sides. The container with air permeability on the bottom and/or sides may be any container capable of withstanding the drying temperature. Preferably, it is made of metal such as stainless steel.

The container with air permeability on the bottom and/or sides is preferably a tray (vat) having air permeability on the bottom and/or sides, more preferably a tray (mesh tray) having the bottom and/or sides made of mesh.

The mesh is preferably either a woven wire mesh or perforated metal.

The opening of the mesh is preferably 2000 µm or less (mesh No. 10 or higher (ASTM)), more preferably 595 µm or less (mesh No. 30 or higher), still more preferably 297 µm or less (mesh No. 50 or higher), further preferably 177 µm or less (mesh No. 80 or higher), even more preferably 149 µm or less (mesh No. 100 or higher), particularly preferably 74 µm or less (mesh No. 200 or higher). The opening is preferably 25 µm or more (mesh No. 500 or lower).

When the mesh is a woven wire mesh, examples of weaving methods include plain weave, twill weave, plain Dutch weave, and twilled Dutch weave.

When the mesh is a perforated metal, the aperture ratio is preferably 10% or higher, more preferably 20% or higher, still more preferably 30% or higher. The aperture ratio is preferably 95% or lower.

In order to more efficiently remove water and the fluorine-containing compound, the amount of the wet powder placed in the step (C) is preferably 10 g/cm² or less, more preferably 8 g/cm² or less, still more preferably 5 g/cm² or less, particularly preferably 3 g/cm² or less, while preferably 0.01 g/cm² or more, more preferably 0.05 g/cm² or more, still more preferably 0.1 g/cm² or more.

In order to more efficiently remove water and the fluorine-containing compound, the water content of the wet powder to be dried in the step (C) is preferably 10% by mass or higher, more preferably 20% by mass or higher, still more preferably 30% by mass or higher, while preferably 150% by mass or lower, more preferably 100% by mass or lower based on the wet powder.

The polymer composition of the disclosure can be also suitably produced by a production method including step (D) of mixing the fibrillatable polymer powder and the thermoplastic polymer powder.

The fibrillatable polymer powder in the step (D) can be produced, for example, by coagulating an aqueous dispersion of the fibrillatable polymer obtained by emulsion polymerization, followed by drying. The aqueous dispersion can be produced by the same method as that used for producing the aqueous dispersion of the fibrillatable polymer obtained by emulsion polymerization in the step (A). The coagulation and drying can be performed by the same methods as those used in the steps (B) and (C).

The thermoplastic polymer powder in the step (D) can be produced by the same method as that used for producing the thermoplastic polymer powder in the step (A).

The mixing in the step (D) can be performed by a dry mixing method. From the standpoint of improving powder flowability, a mixing method with weak shear force is preferably employed so as to reduce or prevent fibrillation of the fibrillatable polymer. For example, a method not using a stirring blade, such as airflow mixing or mixing using a V-type blender, is preferably employed.

The polymer composition of the disclosure is for use in a binder for an electrochemical device. In the electrochemical device binder, the polymer composition of the disclosure may be used alone or mixed with other materials. Still, the polymer composition of the disclosure is preferably substantially used alone, more preferably used alone. The phrase "the polymer composition of the disclosure is substantially used alone" means that the polymer composition is used such that the amount of the polymer composition in the binder for an electrochemical device falls within the range described below.

The disclosure also provides a binder for an electrochemical device essentially consisting of a polymer composition, the polymer composition containing a fibrillatable polymer, a thermoplastic polymer, and at least one compound selected from the group consisting of a compound represented by the following formula (1) and a compound represented by the following formula (2) (hereafter, also referred to as binder (1) of the disclosure),

formula (1): (H-(CF₂)ₘ₋₁-COO)ₚM¹

wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

The disclosure also provides a binder for an electrochemical device essentially consisting of a polymer composition, the polymer composition containing a fibrillatable polymer and a thermoplastic polymer, the fibrillatable polymer having a thermal instability index (TII) of 10 or higher (hereafter, also referred to as binder (2) of the disclosure).

The binders (1) and (2) of the disclosure are herein correctively referred to as "binder of the disclosure", unless otherwise stated.

The binder of the disclosure containing a specific polymer composition can improve the coulombic efficiency of an electrochemical device. In addition, a mixture sheet can be produced even when the amount of the binder added is small. Since a mixture sheet having excellent adhesion to a substrate such as metal foil can be obtained, the mixture sheet can be bonded to the substrate without increasing the density of the mixture layer (without densification/compaction), thereby enabling processing under a wider range of forming conditions.

When in the form of powder, the binder of the disclosure can exhibit better flowability.

Since the binder of the disclosure can be used in a dry process, it is not necessary to use a large amount of dispersion medium such as water or an organic solvent and the electrode active material or solid electrolyte to be used together can be selected from a wide range of selections, which is advantageous in terms of production process. The process and cost derived from use of a dispersion medium can be reduced.

Moreover, the binder of the disclosure has excellent binding force to active materials and electrolytes, which can reduce the amount of the binder used.

The polymer composition in the binder of the disclosure may be the same composition as the polymer composition of the disclosure described above, and preferred embodiments are also the same.

The binder of the disclosure consists essentially of the polymer composition. This allows remarkable exertion of the effect attributable to the polymer composition. The phrase "consists essentially of the polymer composition" means that the amount of the polymer composition is 95.0% by mass or more based on the binder.

The amount of the polymer composition is preferably 98.0% by mass or more, more preferably 99.0% by mass or more, still more preferably 99.5% by mass or more, particularly preferably 99.9% by mass or more, most preferably 99.95% by mass or more based on the binder.

The binder of the disclosure also preferably consists of the polymer composition.

Preferably, the binder of the disclosure is substantially free from organic solvents. This can reduce the process and cost derived from use of organic solvents. The phrase "substantially free from organic solvents" means that the organic solvent content of the binder is 5% by mass or less.

The organic solvent content is preferably 3% by mass or less, more preferably 1% by mass or less, still more preferably 0.1% by mass or less, further preferably 0.01% by mass or less, particularly preferably 0.001% by mass or less.

The binder of the disclosure is preferably in the form of powder, and may also be in the form other than powder, such as a dispersion or a molded article.

The binder of the disclosure is for use in electrochemical devices such as batteries and capacitors.

Examples of batteries include secondary batteries such as lithium-ion batteries.

The binder may be used in any capacitor. An electrochemical capacitor is preferred. Examples of electrochemical capacitors include electric double layer capacitors, hybrid capacitors, and redox capacitors. Examples of hybrid capacitors include sodium-ion capacitors, lithium-ion capacitors, and magnesium-ion capacitors. Among these, electric double layer capacitors are particularly preferred.

The binder of the disclosure can be suitably used as a binder for batteries, and can be particularly suitably used as a binder for secondary batteries such as lithium-ion batteries.

The binder of the disclosure may be used for producing electrochemical device members, preferably battery members.

The binder of the disclosure can be particularly suitably used as a binder for an electrode.

The binder of the disclosure can be also suitably used as a binder in a solid electrolyte layer of a solid-state secondary battery.

The disclosure also provides an electrode mixture containing the polymer composition of the disclosure or the binder of the disclosure, and an electrode active material. Use of the electrode mixture of the disclosure can improve the coulombic efficiency of an electrochemical device. In addition, since the electrode active material can be held even when the amount of the binder is small, the electrode mixture can contain larger amounts of materials for improving electrochemical device characteristics, such as active materials or conductive aids. Since a mixture sheet having excellent adhesion to a substrate such as metal foil can be obtained, the mixture sheet can be bonded to the substrate without increasing the density of the mixture layer (without densification/compaction), thereby enabling processing under a wider range of forming conditions.

Examples of the electrode active material include a positive electrode active material and a negative electrode active material.

The positive electrode active material may be any material that can electrochemically occlude and release alkali metal ions. Still, the positive electrode active material is preferably, for example, a material containing an alkali metal and at least one transition metal. Specific examples include alkali metal-containing transition metal composite oxides and alkali metal-containing transition metal phosphate compounds. Particularly preferred among these positive electrode active materials is an alkali metal-containing transition metal complex oxide which produces high voltage. Examples of the alkali metal ions include lithium ions, sodium ions, and potassium ions. In a preferred mode, the alkali metal ions may be lithium ions. That is, in this mode, the alkali metal ion secondary battery is a lithium-ion secondary battery.

Examples of the alkali metal-containing transition metal composite oxides include alkali metal-manganese spinel composite oxides (e.g., lithium-manganese spinel composite oxides) represented by the formula:

MₐMn_{2-b}M¹_{b}O₄

wherein M includes at least one metal selected from the group consisting of Li, Na, and K; 0.9 ≤ a; 0 ≤ b ≤ 1.5; and M¹ includes at least one metal selected from the group consisting of Fe, Co, Ni, Cu, Zn, Al, Sn, Cr, V, Ti, Mg, Ca, Sr, B, Ga, In, Si, and Ge;
   alkali metal-nickel composite oxides (e.g., lithium-nickel composite oxides) represented by the formula:
      MNi_{1-c}M²_{c}O₂ wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
   alkali metal-cobalt composite oxides (e.g., lithium-cobalt composite oxides) represented by the formula:

      MCo_{1-d}M³_{d}O₂
wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge. In the above formulas, M is preferably a metal selected from the group consisting of Li, Na, and K, more preferably Li or Na, still more preferably Li.

In order to achieve high-energy-density, high-output secondary batteries, preferred among these are MCoO₂, MMnO₂, MNiO₂, MMn₂O₄, MNi_{0.8}Co_{0.15}Al_{0.05}O₂, and MNi_{1/3}Co_{1/3}Mn_{1/3}O₂, and preferred is a compound represented by the following formula (3):

MNiₕCoᵢMnⱼM⁵ₖO₂ (3)

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula (4):

MₑM⁴_{f}(PO₄)_{g} (4)

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formula, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄, Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Examples of a different positive electrode active material include a lithium-nickel composite oxide. The lithium-nickel composite oxide is preferably a positive electrode active material represented by the following formula (5):

Li_{y}Ni₁₋ₓMₓO₂ (5)

wherein 0.01 ≤ x ≤ 0.7, 0.9 ≤ y ≤ 2.0, and M is a metal atom (other than Li and Ni).

Other examples of the different positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ (wherein M includes at least one metal selected from the group consisting of Li, Na, and K) is preferred because the crystal structure thereof does not collapse even when the secondary battery is operated at a voltage exceeding 4.4 V or at a voltage of 4.6 V or higher. Thus, an electrochemical device such as a secondary battery including a positive electrode material containing any of the above-exemplified positive electrode active materials is preferred because the residual capacity thereof is less likely to decrease and the percentage increase in resistance thereof is less likely to change even after storage at high temperatures and the battery performance thereof may not be impaired even when the battery is operated at high voltages.

Other examples of the different positive electrode active material also include solid solution materials of M₂MnO₃ and MM⁶O₂ (wherein M includes at least one metal selected from the group consisting of Li, Na, and K; and M⁶ is a transition metal such as Co, Ni, Mn, or Fe).

The solid solution material is, for example, an alkali metal manganese oxide represented by the formula Mₓ[Mn_{(1-y)}M⁷_{y}]O_{z}. In the formula, M includes at least one metal selected from the group consisting of Li, Na, and K; and M⁷ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material such as Li_{1.2}Mn_{0.5}Co_{0.14}Ni_{0.14}O₂, which is a Li₂MnO₃-based solid solution of LiNiO₂ and LiCoO₂, is preferred because it can provide an alkali metal ion secondary battery with a high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more, based on the sum of the amounts of the positive electrode active material and lithium phosphate. The upper limit thereof is preferably 10% by mass or less, more preferably 8% by mass or less, still more preferably 5% by mass or less.

Particles of the positive electrode active material may have any shape conventionally used, such as a bulky shape, a polyhedral shape, a spherical shape, an ellipsoidal shape, a plate shape, a needle shape, or a pillar shape. The primary particles may aggregate to form secondary particles.

The particles of the positive electrode active material have a median size d50 (or a secondary particle size when the primary particles aggregate to form secondary particles) of preferably 0.1 µm or greater, more preferably 0.5 µm or greater, still more preferably 0.8 µm or greater, most preferably 1.0 µm or greater, while preferably 30 µm or smaller, more preferably 27 µm or smaller, still more preferably 25 µm or smaller, most preferably 22 µm or smaller. The particles having a median size below the lower limit may fail to provide a product with a high tap density. The particles having a median size greater than the upper limit may cause prolonged diffusion of lithium in the particles, possibly impairing the battery performance. Mixing two or more positive electrode active materials having different median sizes d50 can further improve the ease of packing in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1% by mass aqueous solution of sodium hexametaphosphate and the measurement refractive index is set to 1.24 after 5-minute ultrasonic dispersion.

The positive electrode active material has a BET specific surface area of preferably 0.1 m²/g or more, more preferably 0.2 m²/g or more, still more preferably 0.3 m²/g or more. The upper limit thereof is preferably 50 m²/g or less, more preferably 40 m²/g or less, still more preferably 30 m²/g or less. The positive electrode active material having a BET specific surface area smaller than the above range may easily impair the battery performance. The positive electrode active material having a BET specific surface area larger than the above range may less easily have an increased tap density, easily causing a difficulty in processing the material in formation of the positive electrode active material layer.

The BET specific surface area is defined by a value determined by single point BET nitrogen adsorption utilizing a gas flow method using a surface area analyzer (e.g., fully automatic surface area measurement device, available from Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

The particles of the positive electrode active material mainly include secondary particles. The particles of the positive electrode active material preferably include 0.5 to 30.0% by volume of fine particles having an average primary particle size of 1 µm or smaller, wherein secondary particles have an average particle size of 40 µm or smaller. The presence of fine particles having an average primary particle size of 1 µm or less enlarges the contact area with the electrolyte and enables more rapid diffusion of lithium ions between the electrode mixture and the electrolyte, improving the output performance of the battery.

In production of the positive electrode, one of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or one obtained by replacing one or more Mn atoms in LiMn₂O₄ with a different transition metal, and a combination of LiFePO₄ with LiMn₂O₄.

In order to achieve a high battery capacity, the amount of the positive electrode active material is preferably 50 to 99.5% by mass, more preferably 80 to 99% by mass, of the positive electrode mixture. The amount of the positive electrode active material in the positive electrode active material layer is preferably 80% by mass or more, more preferably 82% by mass or more, particularly preferably 84% by mass or more. The upper limit thereof is preferably 99% by mass or less, more preferably 98% by mass or less. Too small an amount of the positive electrode active material in the positive electrode active material layer may lead to an insufficient electric capacity. In contrast, too large an amount thereof may lead to insufficient strength of the positive electrode.

The negative electrode active material is not limited, and may be, for example, any one selected from lithium metal; a material containing a carbonaceous material such as artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, or non-graphitizable carbon; a silicon-containing compound such as silicon or a silicon alloy; and Li₄Ti₅O₁₂, or a mixture of two or more of these. Among these, a material at least partially containing a carbonaceous material and/or a silicon-containing compound can be particularly suitably used.

A negative electrode active material used in the disclosure suitably contains silicon as a constituent element. With a negative electrode active material containing silicon as a constituent element, a high-capacity battery can be produced.

As a material containing silicon, silicon particles, particles having a structure where fine silicon particles are dispersed in a silicon-based compound, silicon oxide particles represented by the formula: SiOx (0.5 ≤ x ≤ 1.6), or a mixture of these is/are preferred. The use of any of these can provide a negative electrode mixture for lithium-ion secondary batteries with higher initial charge-discharge efficiency, high capacity, and excellent cycle characteristics.

The physical properties of the silicon-containing particles can be appropriately selected according to the aimed composite particles. For example, the average particle size is preferably 0.1 to 50 µm. The lower limit is more preferably 0.2 µm or more, still more preferably 0.5 µm or more. The upper limit is more preferably 30 µm or less, still more preferably 20 µm or less. The average particle size is expressed as a weight average particle size determined by particle size distribution measurement by a laser diffraction method.

The BET specific surface area is preferably 0.5 to 100 m²/g, more preferably 1 to 20 m²/g. With the BET specific surface area of 0.5 m²/g or more, there is no risk of decreasing the adhesiveness of the negative electrode material upon processing into the electrode and impairing the battery characteristics. A BET specific surface area of 100 m²/g or less does not increase the proportion of silicon dioxide on the particle surface too much, which eliminates the risk of battery capacity reduction upon use of the silicon particles as a negative electrode material for a lithium-ion secondary battery.

The silicon-containing particles are provided with conductivity when coated with carbon, which improves the battery characteristics. Examples of the method for imparting conductivity include a method including mixing the silicon-containing particles with conductive particles such as graphite particles, a method including coating the silicon-containing particle surface with a carbon film, and a method combining these two methods. Preferred is a method including coating with a carbon film, and more preferred is a method including chemical vapor deposition (CVD).

In order to increase the capacity of the resulting electrode mixture, the amount of the negative electrode active material in the electrode mixture is preferably 40% by mass or more, more preferably 50% by mass or more, particularly preferably 60% by mass or more. The upper limit thereof is preferably 99% by mass or less, more preferably 98% by mass or less.

The electrode mixture of the disclosure preferably further contains a conductive aid.

Any known conductive material can be used as the conductive aid. Specific examples include metal materials such as copper and nickel, and carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these may be used alone or two or more thereof may be used in any combination at any ratio.

The conductive aid is used in an amount of usually 0.01% by mass or more, preferably 0.1% by mass or more, more preferably 1% by mass or more, while usually 50% by mass or less, preferably 30% by mass or less, more preferably 15% by mass or less, in the electrode mixture. The conductive aid in an amount below this range may cause insufficient conductivity. In contrast, the conductive aid in an amount above this range may cause a low battery capacity.

The electrode mixture of the disclosure may further contain a thermoplastic resin. Examples of the thermoplastic resin include polyvinylidene fluoride, polypropylene, polyethylene, polystyrene, polyethylene terephthalate, and polyethylene oxide. One of these may be used alone or two or more thereof may be used in any combination at any ratio.

The proportion of the thermoplastic resin relative to the electrode active material is commonly 0.01% by mass or more, preferably 0.05% by mass or more, more preferably 0.10% by mass or more, while commonly 3.0% by mass or less, preferably 2.5% by mass or less, more preferably 2.0% by mass or less. Adding a thermoplastic resin can improve the mechanical strength of the electrode. The thermoplastic resin added in excess of the above range may lower the proportion of the electrode active material in the electrode mixture, resulting in a low capacity of the battery and high resistance between the active materials.

The amount of the binder in the electrode mixture of the disclosure may be 0.1% by mass or more, preferably 0.2% by mass or more, more preferably 0.5% by mass or more based on the electrode mixture. The amount may be 50% by mass or less, preferably 40% by mass or less, more preferably 30% by mass or less, further preferably 10% by mass or less, particularly preferably 5% by mass or less, most preferably 3% by mass or less based on the electrode mixture. Too low a proportion of the binder may fail to sufficiently hold the electrode mixture active material and cause insufficient mechanical strength of the electrode mixture sheet, impairing the battery performance such as cycle characteristics. Too high a proportion of the binder may lead to a decrease in battery capacity and conductivity. Since the binder of the disclosure has excellent binding force, the electrode active material can be sufficiently held even when the binder content is small.

In the electrode mixture of the disclosure, the binder component preferably consists essentially of the polymer composition, more preferably consists of the polymer composition. The phrase "the binder component consists essentially of the polymer composition" means that the amount of the polymer composition in the binder component constituting the electrode mixture is 95.0% by mass or more based on the binder component. The amount of the polymer composition is preferably 98.0% by mass or more, more preferably 99.0% by mass or more, still more preferably 99.5% by mass or more, particularly preferably 99.9% by mass or more, most preferably 99.95% by mass or more based on the binder component.

The electrode mixture of the disclosure is preferably in the form of a sheet.

The electrode mixture of the disclosure can suitably be used as an electrode mixture for a secondary battery. In particular, the electrode mixture of the disclosure is suitable for a lithium-ion secondary battery. The electrode mixture of the disclosure, when used for a secondary battery, is commonly used in the form of a sheet.

The electrode mixture sheet preferably has a thickness of 300 µm or less, more preferably 250 µm or less, still more preferably 200 µm or less, further preferably 180 µm or less, particularly preferably 150 µm or less, while preferably 10 µm or more, more preferably 15 µm or more, still more preferably 20 µm or more.

An exemplary specific method of producing an electrode mixture sheet containing an electrode mixture is described below. The electrode mixture sheet is obtainable by a production method including: (1) mixing an electrode active material, a binder, and optionally a conductive aid to prepare a raw material composition containing these; (2) molding the raw material composition obtained in the step (1) into a bulky shape; and (3) rolling the bulky raw material composition obtained in the step (2) into a sheet.

The raw material composition mixed in the step (1) is in a state where materials such as the electrode active material and the binder are simply mixed and does not have a fixed shape. Specific examples of mixing methods include mixing with use of a drum mixer, a conical screw mixer, a single screw kneader, a twin-screw kneader, a mix muller, a stirring mixer, a planetary mixer, a Henschel mixer, or a rapid mixer.

For the binder mixing conditions in the step (1), the rotational speed is preferably 3000 rpm or less. The rotational speed is preferably 10 rpm or more, more preferably 15 rpm or more, still more preferably 20 rpm or more, while preferably 2000 rpm or less, more preferably 1500 rpm or less, still more preferably 1000 rpm or less. Mixing at a rotational speed below this range may take a long time, affecting the productivity. Mixing at a rotational speed above the range may cause excessive fibrillation, resulting in an electrode mixture sheet having poor strength and poor flexibility.

Molding the raw material composition into a bulky shape in the step (2) means forming the raw material composition into a single mass. Specific examples of a method of molding the raw material composition into a bulky shape include extrusion molding and press molding. The term "bulky" does not specify the shape and means any state of single mass, including a rod shape, a sheet shape, a spherical shape, a cubic shape, and the like.

A specific example of a rolling method in the step (3) is a method of rolling the bulky raw material composition using, for example, a roller press, a flat plate press, or a calender roller.

The step (3) is also preferably followed by a step (4) of applying a larger load to the resulting rolled sheet to form a thinner sheet-shaped product. Repeating the step (4) is also preferred. Thinning the rolled sheet not in one time but in steps as described can lead to better flexibility. The number of performing the step (4) is preferably twice or more and 10 times or less, more preferably 3 times or more and 9 times or less. A specific example of a rolling method is a method of rotating two or a plurality of rollers and passing the rolled sheet therebetween to provide a thinner sheet-shaped product.

To control the fibril size, the step (3) or the step (4) is also preferably followed by a step (5) of coarsely crushing the rolled sheet, again forming the coarsely crushed product into a bulky product, and then rolling the bulky product into a sheet-shaped product. Repeating the step (5) is also preferred. The number of performing the step (5) is preferably once or more and 12 times or less, more preferably twice or more and 11 times or less.

Specific examples of a method of coarsely crushing the rolled sheet and again forming the coarsely crushed product into a bulky product in the step (5) include a method of folding the sheet, a method of forming the sheet into a rod- or a thin sheet-shaped product, and a method of forming the sheet into chips. The term "coarsely crushing" herein means changing the form of the rolled sheet obtained in the step (3) or step (4) into a different form so as to roll the product into a sheet-shaped product in the subsequent step, and encompasses simply folding the rolled sheet.

The step (5) may be followed by the step (4), and the step (4) may be repeated. In any of the steps (2), (3), (4), and (5), uniaxial stretching or biaxial stretching may be performed. The fibril size can also be controlled in accordance with the degree of coarse crushing in the step (5).

In the step (3), (4), or (5), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility. The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The electrode mixture sheet can also suitably be produced by a production method including:
a step (a) of mixing a powdery component (such as electrode active material) and a binder to prepare an electrode mixture; and
a step (b) of calendering or extrusion-molding the electrode mixture to form a sheet,
the mixing in the step (a) including:
   (a1) homogenizing the powdery component and the binder into powder; and
   (a2) mixing the powdery raw material mixture obtained in the step (a1) to prepare the electrode mixture.

For example, PTFE has two transition temperatures at about 19°C and about 30°C. At lower than 19°C, PTFE can be easily mixed while maintaining its shape. In contrast, at higher than 19°C, the PTFE particulate structure loosens and becomes more sensitive to mechanical shearing. At temperatures higher than 30°C, more significant fibrillation occurs.

Accordingly, the homogenizing in the step (a1) is preferably performed at 19°C or lower, preferably at a temperature of 0°C to 19°C.

In other words, such a step (a1) is preferably performed such that the materials are mixed and thereby homogenized while fibrillation is suppressed.

The mixing in the subsequent step (a2) is preferably performed at a temperature of 30°C or higher to promote fibrillation.

The step (a2) is preferably performed at 30°C to 150°C, more preferably 35°C to 120°C, still more preferably 40°C to 100°C.

In an embodiment, the calendering or extrusion molding in the step (b) is performed at a temperature of 30°C to 150°C, preferably 35°C to 120°C, more preferably 40°C to 100°C.

The mixing in the step (a) is preferably performed with shearing force applied.

Specific examples of mixing methods include mixing with use of a drum mixer, a conical screw mixer, a single screw kneader, a twin-screw kneader, a mix muller, a stirring mixer, a planetary mixer, a Henschel mixer, or a rapid mixer.

For the mixing conditions, the number of rotations and the mixing duration are set as appropriate. For example, the number of rotations is suitably 15000 rpm or less. The number of rotations is preferably 10 rpm or more, more preferably 50 rpm or more, still more preferably 100 rpm or more, while preferably 12000 rpm or less, more preferably 10000 rpm or less, still more preferably 8000 rpm or less. At the number of rotations below this range, mixing may take a long time, affecting the productivity. At the number of rotations above this range, fibrillation may occur excessively, resulting in an electrode mixture sheet having poor strength.

The step (a1) is preferably performed with a weaker shearing force than that in the step (a2).

The step (a1) is preferably performed for a shorter time than that in the step (a2).

In the step (a2), the raw material composition preferably contains no liquid solvent, but a lubricant in a small amount may be used. In other words, the powdery raw material mixture obtained in the step (a1) may be combined with a lubricant, whereby a paste may be prepared.

Examples of the lubricant include, but are not limited to, water, ether compound, alcohol, ionic liquid, carbonate, aliphatic hydrocarbon (e.g., low polar solvent such as heptane and xylene), isoparaffinic hydrocarbon compound, and petroleum distillate (e.g., gasoline (C4-C10), naphtha (C4-C11), kerosene/paraffin (C10-C16), and mixture of these).

The lubricant has a water content of preferably 1000 ppm or less.

A water content of 1000 ppm or less is preferred to reduce deterioration of the electrochemical device. The water content is more preferably 500 ppm or less.

In the case of using the lubricant, particularly preferably used is a low polar solvent such as butyl butyrate or an ether compound.

The amount of the lubricant, when used, is 5.0 to 35.0 parts by weight, preferably 10.0 to 30.0 parts by weight, more preferably 15.0 to 25.0 parts by weight relative to the total weight of the composition fed to the step (a1).

The raw material composition preferably contains substantially no liquid medium. In a conventional method for producing an electrode mixture, typically, a solvent containing a binder dissolved therein is used to prepare a slurry containing an electrode mixture component in the form of powder dispersed therein, and the slurry is applied and dried to produce an electrode mixture sheet. In this case, a solvent to disperse or dissolve a binder is used. Still, solvents that can dissolve a binder resin commonly used in conventional cases are limited to specific solvents such as N-methyl pyrrolidone. Since such a solvent is highly polar and the use thereof requires a drying step, the use of the solvent leads to additional steps and cost. These solvents react with an electrolyte such as an electrolyte solution and a solid electrolyte to deteriorate the electrolyte and may cause poor battery performance due to residual components in preparation of a slurry or after drying. In addition, low polar solvents such as heptane can dissolve very limited types of binder resin and have a low flash point, which may cause a difficulty in handling.

Not using a solvent but using a powdery binder containing less water in forming an electrode mixture sheet can provide a battery in which the electrolyte is less likely to be deteriorated. The above production method can provide an electrode mixture sheet containing a binder having a fine fibrous structure and can reduce a burden on the production process owing to elimination of slurry production.

The step (b) includes calendering or extrusion. The calendering and extrusion can be performed by known methods. Thereby, the material can be formed into the shape of an electrode mixture sheet.

The step (b) preferably includes (b1) forming the electrode mixture obtained in the step (a) into a bulky electrode mixture and (b2) calendering or extrusion-molding the bulky electrode mixture.

Forming into a bulky electrode mixture means forming the electrode mixture into a single mass.

Specific examples of methods of forming into a bulky shape include extrusion molding and press molding.

The term "bulky" does not specify the shape and means any state of single mass, including a rod shape, a sheet shape, a spherical shape, a cubic shape, and the like. The size of the mass is preferably such that the diameter or minimum side of the cross section is 10000 µm or more. The size is more preferably 20000 µm or more.

A specific example of the calendering or extrusion molding in the step (b2) is a method of rolling the electrode mixture using a roller press or a calender roller.

The step (b) is preferably performed at 30°C to 150°C. As described above, PTFE has a glass transition temperature around 30°C and is thus easily fibrillated at 30°C or higher. Accordingly, the step (b) is preferably performed at such temperatures.

The calendering or extrusion molding applies a shearing force, which fibrillates the PTFE and gives the shape.

The step (b) is also preferably followed by a step (c) of applying a larger load on the resulting rolled sheet to form a thinner sheet-shaped product. Repeating the step (c) is also preferred. Thinning the rolled sheet not in one time but in steps as described can lead to better flexibility.

The number of performing the step (c) is preferably twice or more and 10 times or less, more preferably 3 times or more and 9 times or less.

A specific example of a rolling method is a method of rotating two or a plurality of rollers and passing the rolled sheet therebetween to provide a thinner sheet-shaped product.

In order to control the sheet strength, the step (b) or the step (c) is also preferably followed by a step (d) of coarsely crushing the rolled sheet, again forming the coarsely crushed product into a bulky product, and then rolling the bulky product into a sheet-shaped product. Repeating the step (d) is also preferred. The number of performing the step (d) is preferably once or more and 12 times or less, more preferably twice or more and 11 times or less.

Specific examples of a method of coarsely crushing the rolled sheet and again forming the coarsely crushed product into a bulky product in the step (d) include a method of folding the rolled sheet, a method of forming the rolled sheet into a rod- or a thin sheet-shaped product, and a method of forming the rolled sheet into chips. The phrase "coarsely crushing" herein means changing the form of the rolled sheet obtained in the step (b) or step (c) into a different form so as to roll the product into a sheet-shaped product in the subsequent step, and encompasses simply folding the rolled sheet.

The step (d) may be followed by the step (c), or may be repeated.

In any of the steps (a), (b), (c), and (d), uniaxial stretching or biaxial stretching may be performed.

The sheet strength can also be adjusted in accordance with the degree of coarse crushing in the step (d).

In the step (b), (c), or (d), the rolling percentage is preferably 10% or higher, more preferably 20% or higher, while preferably 80% or lower, more preferably 65% or lower, still more preferably 50% or lower. A rolling percentage below this range may cause an increase in the number of rolling operations and a longer duration, affecting the productivity. A rolling percentage above the range may cause excessive fibrillation, resulting in an electrode mixture sheet having poor strength and poor flexibility.

The rolling percentage herein refers to the reduction in thickness of a sample after rolling processing relative to that before the processing. The sample before rolling may be a bulky material composition or may be a sheet-shaped material composition. The thickness of a sample refers to the thickness in the direction along which a load is applied during rolling.

The steps (c) and (d) are preferably performed at 30°C or higher, more preferably 60°C or higher. The steps (c) and (d) are preferably performed at 150°C or lower.

The electrode mixture sheet may be used as an electrode mixture sheet for a secondary battery. The electrode mixture sheet may be for either a negative electrode or a positive electrode. In particular, the electrode mixture sheet is suitable for a lithium-ion secondary battery.

The disclosure also provides an electrode containing the polymer composition of the disclosure or the binder of the disclosure, an electrode active material, and a current collector. The electrode of the disclosure can improve the coulombic efficiency of an electrochemical device. In addition, since the electrode active material can be held even when the amount of the binder is small, the electrode can contain larger amounts of materials for improving electrochemical device characteristics, such as active materials or conductive aids. Also, adhesion between the mixture sheet and the substrate such as metal foil is excellent.

The electrode of the disclosure may contain the aforementioned electrode mixture of the disclosure (preferably the electrode mixture sheet) and a current collector.

The electrode of the disclosure may be a positive electrode or may be a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

The density of the positive electrode mixture sheet is preferably 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. The positive electrode mixture sheet having a density above this range may easily have cracks inside the sheet. The positive electrode mixture sheet having a density below this range may cause poor conductivity between the active materials and increase the battery resistance, failing to provide high output.

The positive electrode may have any thickness. In order to achieve a high capacity and high output, the lower limit of the thickness of the mixture layer on one side of the current collector excluding the thickness of the metal foil of the current collector is preferably 10 µm or more, more preferably 20 µm or more, while preferably 500 µm or less, more preferably 450 µm or less.

The negative electrode is suitably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

The density of the negative electrode mixture sheet is preferably 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. The negative electrode mixture sheet having a density higher than the above range may easily have cracks inside the sheet. The negative electrode mixture sheet having a density below this range may cause poor conductivity between the active materials and increase the battery resistance, failing to provide high output.

The negative electrode may have any thickness. In order to achieve a high capacity and high output, the lower limit of the thickness of the mixture layer on one side of the current collector excluding the thickness of the metal foil of the current collector is preferably 10 µm or more, more preferably 20 µm or more, while preferably 500 µm or less, more preferably 450 µm or less.

The current collectors in the positive electrode and the negative electrode may be in the form of metal foil, expanded metal, perforated metal, metal form, or the like. Preferred among these is metal foil. The metal foil may be in the form of a mesh, as appropriate. The metal foil may have any thickness, and the thickness is usually 1 µm or more, preferably 3 µm or more, more preferably 5 µm or more, while it is usually 1 mm or less, preferably 100 µm or less, more preferably 50 µm or less. The metal foil having a thickness below this range may have insufficient strength as a current collector. Conversely, the metal foil having a thickness above this range may have poor handleability.

In order to improve the adhesion between the current collector and the positive electrode active material layer and to reduce the electric contact resistance between the current collector and the positive electrode active material layer, the surface of the current collector is also preferably roughened.

The surface roughness of the current collector, expressed as Sa (arithmetic mean height), is preferably about 260 nm or higher, more preferably about 280 nm or higher, still more preferably about 300 nm or higher.

In order to reduce the electric contact resistance between the current collector and the positive electrode active material layer, the current collector also preferably has a conductive aid applied on the surface thereof. Examples of the conductive aid include carbon and noble metal such as gold, platinum, and silver. Carbon is particularly preferred because of its light weight.

The positive electrode and the negative electrode may be produced by a usual method. In an exemplary method, the electrode mixture sheet and the current collector are laminated via an adhesive, followed by pressing.

The disclosure also provides a secondary battery including the aforementioned electrode of the disclosure.

The secondary battery of the disclosure may be a secondary battery using an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery using an electrolyte solution may include components used for a known secondary battery, such as an electrolyte solution and a separator. These will be explained in detail below.

A non-aqueous electrolyte solution is preferably used as the electrolyte solution. The non-aqueous electrolyte solution used may be a solution obtained by dissolving a known electrolyte salt in a known organic solvent for dissolving an electrolyte salt.

Any organic solvents for dissolving electrolyte salts may be used. One or more types of solvents selected from known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate can be used.

Examples of electrolyte salts include LiClO₄, LiAsF₆, LiBF₄, LiPF₆, LiN(SO₂CF₃)₂, and LiN(SO₂C₂F₅)₂. In order to achieve favorable cycle characteristics, particularly preferred is LiPF₆, LiBF₄, LiN(SO₂CF₃)₂, LiN(SO₂C₂F₅)₂, or a combination of these.

The concentration of the electrolyte salt is preferably 0.8 mol/L or higher, more preferably 1.0 mol/L or higher. The upper limit is usually 4.0 mol/L or lower, though it depends on the organic solvent for dissolving an electrolyte salt used.

The secondary battery containing an electrolyte solution preferably further includes a separator. The separator may be formed from any known material and may have any known shape as long as the resulting separator is stable to the electrolyte solution and has excellent liquid-retaining ability. The separator is preferably in the form of a porous sheet or a nonwoven fabric formed from a material stable to the electrolyte solution, such as resin, glass fiber, or inorganic matter, and having excellent liquid-retaining ability.

The solid-state secondary battery is preferably an all-solid-state secondary battery. The solid-state secondary battery is preferably a lithium-ion battery or is preferably a sulfide-based solid-state secondary battery.

The solid-state secondary battery preferably includes a positive electrode, a negative electrode, and a solid electrolyte layer between the positive electrode and the negative electrode.

In the solid-state secondary battery, the binder of the disclosure may be used for an electrode layer or a solid electrolyte layer.

According to a preferred embodiment of the disclosure, the disclosure relates to a mixture for a solid-state secondary battery (preferably a mixture sheet) containing the binder of the disclosure and a solid electrolyte and a solid electrolyte layer (preferably a solid electrolyte layer sheet) containing the binder of the disclosure and a solid electrolyte.

The solid electrolyte used in a mixture for a solid-state secondary battery may be a sulfide-based solid electrolyte or an oxide-based solid electrolyte. In particular, when a sulfide-based solid electrolyte is used, the mixture for a solid-state secondary battery is advantageously flexible.

The sulfide-based solid electrolyte is not limited. The sulfide-based solid electrolyte used may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄, Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more thereof.

The sulfide-based solid electrolyte preferably contains lithium. Sulfide-based solid electrolytes containing lithium are used in solid-state batteries in which lithium ions are used as carriers, and are particularly preferred in that they provide electrochemical devices having high energy density.

The oxide-based solid electrolyte is preferably a compound that contains an oxygen atom (O), has conductivity of metal ions belonging to Group 1 or Group 2 of the periodic table, and has electronic insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one element selected from Al, Mg, Ca, Sr, V, Nb, Ta, Ti, Ge, In, and Sn; xb satisfies 5 ≤ xb ≤ 10; yb satisfies 1 ≤ yb ≤ 4; zb satisfies 1 ≤ zb ≤ 4; mb satisfies 0 ≤ mb ≤ 2; and nb satisfies 5 ≤ nb ≤ 20), Li_{xc}B_{yc}M^{cc}_{zc}O_{nc} (wherein M^{cc} includes at least one element selected from C, S, Al, Si, Ga, Ge, In, and Sn; xc satisfies 0 ≤ xc ≤ 5; yc satisfies 0 ≤ yc ≤ 1; zc satisfies 0 ≤ zc ≤ 1; and nc satisfies 0 ≤ nc ≤ 6), Li_{xd}(Al,Ga)_{yd}(Ti,Ge)_{zd}Si_{ad}P_{md}O_{nd} (1 ≤ xd ≤ 3, 0 ≤ yd ≤ 2, 0 ≤ zd ≤ 2, 0 ≤ ad ≤ 2, 1 ≤ md ≤ 7, and 3 ≤ nd ≤ 15), Li₍₃₋₂ₓₑ₎M^{ee}ₓₑD^{ee}O (wherein xe is a number of 0 or more and 0.1 or less, M^{ee} is a divalent metal atom, D^{ee} is a halogen atom or a combination of two or more halogen atoms), Li_{xf}Si_{yf}O_{zf} (1 ≤ xf ≤ 5, 0 < yf ≤ 3, and 1 ≤ zf ≤ 10), Li_{xg}S_{yg}O_{zg} (1 ≤ xg ≤ 3, 0 < yg ≤ 2, and 1 ≤ zg ≤ 10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w < 1), Li_{3.5}Zn_{0.25}GeO₄ having a lithium super ionic conductor (LISICON) crystal structure, La_{0.51}Li_{0.34}TiO_{2.94} having a perovskite crystal structure, La_{0.55}Li_{0.35}TiO₃, LiTi₂P₃O₁₂ having a natrium super ionic conductor (NASICON) crystal structure, Li_{1+xh+yh}(Al,Ga)ₓₕ(Ti,Ge)₂₋ₓₕSi_{yh}P_{3-yh}O₁₂ (0 ≤ xh ≤ 1 and 0 ≤ yh ≤ 1), and Li₇La₃Zr₂O₁₂ (LLZ) having a garnet crystal structure. Ceramic materials obtained by element substitution of LLZ are also known. Examples thereof include Li_{6.24}La₃Zr₂Al_{0.24}O_{11.98} and Li_{6.25}Al_{0.25}La₃Zr₂O₁₂ obtained by partial element substitution of LLZ with Al, Li_{6.6}La₃Zr_{1.6}Ta_{0.4}O₁₂ obtained by partial element substitution of LLZ with Ta, and Li_{6.75}La₃Zr_{1.75}Nb_{0.25}O₁₂ obtained by partial element substitution of LLZ with Nb. Other examples include LLZ-based ceramic materials obtained by element substitution of LLZ with at least one of magnesium (Mg) and A (A includes at least one element selected from the group consisting of calcium (Ca), strontium (Sr), and barium (Ba)). Phosphorus compounds containing Li, P and O are also desirable. Examples include lithium phosphate (Li₃PO₄), LiPON obtained by replacing one or more oxygen atoms in lithium phosphate with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA¹ON (wherein A¹ includes at least one selected from Si, B, Ge, Al, C, Ga, and the like) can also be preferably used. Specific examples include Li₂O-Al₂O₃-SiO₂-P₂O₅-TiO₂-GeO₂ and Li₂O-Al₂O₃-SiO₂-P₂O₅-TiO₂.

The oxide-based solid electrolyte preferably contains lithium. Oxide-based solid electrolytes containing lithium are used in solid-state batteries in which lithium ions are used as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type (e.g., La_{0.51}Li_{0.34}TiO_{2.94}), NASICON type (e.g., Li_{1.3}Al_{0.3}Ti_{1.7}(PO₄)₃), or garnet type (e.g., Li₇La₃Zr₂O₁₂ (LLZ)). Preferred among these is the garnet type.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components such as the positive electrode, the negative electrode, and the solid electrolyte layer. Specifically, the battery may be of cylindrical type, square type, coin type, or laminate type.

The solid-state secondary battery can be produced by, for example, laminating a positive electrode, a solid electrolyte layer sheet, and a negative electrode in this order and pressing them.

It should be appreciated that a variety of modifications and changes in the structure and other details may be made to the aforementioned embodiments without departing from the spirit and scope of the claims.

### EXAMPLES

The disclosure is described in more detail below with reference to examples, but is not limited to these examples.

Physical properties were measured by the following methods.

### <Average primary particle size>

The average primary particle size was determined by a dynamic light scattering method. An aqueous dispersion of a fluoropolymer with a fluoropolymer solid concentration adjusted to about 1.0% by mass was prepared. The average primary particle size was determined from total 70 measured values using ELSZ-1000S (available from Otsuka Electronics Co., Ltd.) at 25°C. The refractive index of the solvent (water) was 1.3328 and the viscosity of the solvent (water) was 0.8878 mPa·s.

### <Polymer solid concentration>

A polymer aqueous dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Amount of modifying monomer in PTFE>

The polymer composition was press-molded into a thin-film disc and this thin-film disc was subjected to FT-IR measurement, so that the infrared absorbances were obtained. The HFP content was determined by multiplying the ratio (absorbance at 982 cm⁻¹)/(absorbance at 935 cm⁻¹) by 0.3.

### <Endothermic peak temperature>

The endothermic peak temperature was the temperature corresponding to the minimum point on a heat-of-fusion curve obtained by performing differential scanning calorimetry (DSC) at a temperature-increasing rate of 10°C/min on a polymer composition that had never been heated to a temperature of 300°C or higher. When two or more minimum points were present in one melting peak, the temperatures corresponding to the respective points were considered as endothermic peak temperatures.

### <Standard specific gravity (SSG)>

The SSG was determined by the water displacement method in conformity with ASTM D792 using a sample molded in conformity with ASTM D4895-89.

### <Average aspect ratio of polymer composition (powder)>

The average aspect ratio was determined as follows. Specifically, the polymer composition in the form of powder was thinly spread on a black paper surface using air while avoiding the application of shear. The polymer composition was observed under an electron microscope, and image analysis was performed on 100 or more randomly selected particles. The ratio of the major axis to the minor axis of each particle was then obtained, and the average thereof was defined as the average aspect ratio.

### <Presence or absence of fibrillation>

The polymer composition in the form of powder was thinly spread on a black paper surface using air while avoiding the application of shear. The fibrillatable polymer (PTFE) contained in the polymer composition was observed under an electron microscope, and image analysis was performed on 100 or more randomly selected particles. The ratio of the major axis to the minor axis of each particle was then obtained, and the average thereof was defined as the average aspect ratio. When the average aspect ratio was 2.5 or lower, the fibrillatable polymer powder was determined to be not fibrillated.

### <Chemical composition of thermoplastic polymer>

Measurement was performed by ¹H-NMR analysis and ¹⁹F-NMR analysis.

### <MFR>

In conformity with ASTM D1238, the mass (g/10 min) of a polymer flowing out of a nozzle (inner diameter: 2 mm, length: 8 mm) per 10 minutes was measured using a melt indexer at the measurement temperature and load specified for each type of fluoropolymer.

### <Melting point of thermoplastic polymer>

The melting point was determined as the temperature corresponding to the maximum value on a heat-of-fusion curve obtained during the second heating at a temperature increase rate of 10°C/min using a differential scanning calorimeter (DSC).

### <Weight average molecular weight of VT>

Measurement was performed by gel permeation chromatography (GPC). The value was calculated from data obtained by measurement at 50°C using an HLC-8320GPC (available from Tosoh Corporation) equipped with columns (three SuperAWM-H columns connected in series), and employing dimethylformamide (DMF) as a solvent and using polystyrene as the reference.

### <Average particle size of PVdF and VT powders>

The particle size distribution by volume was determined by dry measurement using a laser diffraction particle size distribution analyzer (LS13 320) available from Beckman Coulter, Inc. at a vacuum pressure of 20 mH₂O. The average particle size was defined as equivalent to the particle size corresponding to 50% of the cumulative volume in the particle size distribution.

### <Amount of fluorine-containing surfactant in PVdF and VT powders>

To a 1-g portion of each powder weighed was added 10 g (12.6 mL) of methanol, followed by ultrasonication for 60 minutes, whereby an extract was obtained. The resulting extract was subjected to a LC/MS/MS assay. Measurement was performed on fluorine-containing compounds in the extract using a liquid chromatograph-mass spectrometer (Waters, LC-MS ACQUITY UPLC/TQD). Table 1 shows the instrument configuration and LC-MS measurement conditions. Aqueous solutions having five or more different levels of fluorine-containing compound concentrations were prepared using an aqueous solution of a fluorine-containing compound with a known concentration, and LC/MS analysis was performed on the aqueous solutions containing varied amounts of the fluorine-containing compound. The relation between the amount and the area relative to the amount was plotted, and a calibration curve was drawn. Based on the resulting calibration curve, the area of the fluorine-containing compound in the extract in the LC/MS chromatogram was converted to the amount of the fluorine-containing compound.

The detection limit in this measurement method is 10 ppb by mass.

**[Table 1]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detecter | | |
| | Measurement mode | MRM (Multiple Reaction Monitoring) | | |
| | Ionization method | Electrospray ionization | | |
| | | Negative mode | | |

### <Mooney viscosity (ML1+10 (121°C, 140°C)) of fluoroelastomer>

Measurement was performed in conformity with ASTM D1646-15 and JIS K6300-1:2013.
Measurement device: MV 2000 E available from Alpha Technologies
Rotor revolution speed: 2 rpm
Measurement temperature: 121°C, 140°C
Measurement time: After 1 minute of preheating, the rotor was immediately started, and the value after 10 minutes was measured.

### <Heat of fusion of fluoroelastomer>

A DSC curve was obtained by heating a 10 mg sample at a temperature increase rate of 20°C/min using a differential scanning calorimeter (available from Hitachi Techno Science, X-DSC823e), and the heat of fusion was calculated from the magnitude of the melting peak (ΔH) observed in the DSC curve.

### <Glass transition temperature (Tg) of fluoroelastomer>

A DSC curve was obtained by heating a 10 mg sample at a rate of 20°C/min using a differential scanning calorimeter (available from Hitachi Techno Science, X-DSC823e). The glass transition temperature was defined as the temperature at the intersection of the extensions of the baselines before and after the second-order transition and the tangent drawn at the inflection point of the DSC curve.

### <Weight average molecular weight of fluoroelastomer>

Measurement was performed by gel permeation chromatography (GPC). The value was calculated from data obtained by measurement using AS-8010 and CO-8020 systems available from Tosoh Corporation, columns (three GMHHR-H columns connected in series), and RID-10A available from Shimadzu Corporation, with dimethylformamide (DMF) as a solvent at a flow rate of 1.0 mL/min, using polystyrene as the reference.

### <Water content>

The mass of the polymer composition in an amount of about 20 g was weighed before and after heating at 150°C for two hours, and the water content was calculated by the following equation. Three samples were taken, and this calculation was performed for each sample. Then, the values were averaged. This average was taken as the water content. 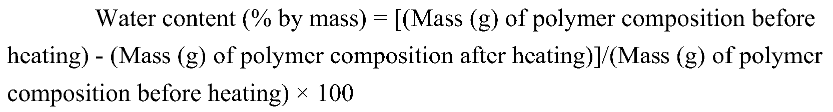 Water content (% by mass) = [(Mass (g) of polymer composition before heating) - (Mass (g) of polymer composition after heating)]/(Mass (g) of polymer composition before heating) × 100

### <0.1% Mass reduction temperature>

About 10 mg of the polymer composition that had never been heated to 300°C or higher was precisely weighed out, and placed in a special aluminum pan, followed by simultaneous thermogravimetry/differential thermal analysis (TG-DTA). The 0.1% mass reduction temperature was defined as a temperature corresponding to a point at which the weight was reduced by 0.1% by mass when the temperature of the aluminum pan was increased in a temperature range from 25°C to 600°C at a rate of 10°C/min in the air atmosphere.

### <1.0% Mass reduction temperature>

About 10 mg of the polymer composition that had never been heated to 300°C or higher was precisely weighed out, and placed in a special aluminum pan, followed by simultaneous thermogravimetry/differential thermal analysis (TG-DTA). The 1.0% mass reduction temperature was defined as a temperature corresponding to a point at which the weight was reduced by 1.0% by mass when the temperature of the aluminum pan was increased in a temperature range from 25°C to 600°C at a rate of 10°C/min in the air atmosphere.

### <Thermal instability index (TII)>

The thermal instability index was measured in conformity with ASTM D4895-89.

### <Amount of specific compound containing fluorine>

The amount was measured by liquid chromatography mass spectrometry under the following conditions.

### (Method of measuring amount of compound represented by formula (1))

### Extraction from composition

To a 1-g portion of the composition was added 10 g (12.6 mL) of methanol, followed by ultrasonication for 60 minutes, whereby a supernatant solution containing the compound represented by the formula (1) was extracted. The resulting extract was appropriately concentrated by nitrogen purging, whereby a concentrated extract was obtained.

### Measurement of amount of compound represented by formula (1) contained in extract

The amount of the compound represented by the formula (1) contained in the extract was obtained by conversion to perfluorooctanoic acid.

### Calibration curve for perfluorooctanoic acid

Methanol standard solutions having five different known levels from 1 ng/mL to 100 ng/mL of perfluorooctanoic acid were prepared, and analyzed using a liquid chromatograph-mass spectrometer (Waters, LC-MS ACQUITY UPLC/TQD). By first order approximation based on the sample concentrations and the peak integral values, the values of a and b were obtained by the following relational equation (1). $A = a \times X + b$ (1)
A: The peak area of perfluorooctanoic acid
X: The concentration (ng/mL) of perfluorooctanoic acid

### Instrument configuration and LC-MS measurement conditions

**[Table 2]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detecter | | |
| | Measurement mode | MRM (Multiple Reaction Monitoring) | | |
| | Ionization method | Electrospray ionization | | |
| | | Negative mode | | |

### MRM measurement parameter

**[Table 3]**

| Compound | Precursor | Product |
|---|---|---|
| Perfluorooctanoic acid | 413 | 369 |

### Amount of compound represented by formula (1) containing 4 to 20 carbon atoms in extract

The amount of the compound represented by the formula (1) containing 4 to 20 carbon atoms was measured using a liquid chromatograph-mass spectrometer. For the extracted liquid phase, the peak areas of the compounds represented by the formula (1) with respective numbers of carbon atoms were determined by the MRM method.

### MRM measurement parameter

**[Table 4]**

| Compound name | Number of carbon atoms | Precursor | Product |
|---|---|---|---|
| (H-(CF₂)₃-COO)M | 4 | 195 | 131 |
| (H-(CF₂)₄-COO)M | 5 | 245 | 181 |
| (H-(CF₂)₅-COO)M | 6 | 295 | 231 |
| (H-(CF₂)₆-COO)M | 7 | 345 | 281 |
| (H-(CF₂)₇-COO)M | 8 | 395 | 331 |
| (H-(CF₂)₈-COO)M | 9 | 445 | 381 |
| (H-(CF₂)₉-COO)M | 10 | 495 | 431 |
| (H-(CF₂)₁₀-COO)M | 11 | 545 | 481 |
| (H-(CF₂)₁₁-COO)M | 12 | 595 | 531 |
| (H-(CF₂)₁₂-COO)M | 13 | 645 | 581 |
| (H-(CF₂)₁₃-COO)M | 14 | 695 | 631 |
| (H-(CF₂)₁₄-COO)M | 15 | 745 | 681 |
| (H-(CF₂)₁₅-COO)M | 16 | 795 | 731 |
| (H-(CF₂)₁₆-COO)M | 17 | 845 | 781 |
| (H-(CF₂)₁₇-COO)M | 18 | 895 | 831 |
| (H-(CF₂)₁₈-COO)M | 19 | 945 | 881 |
| (H-(CF₂)₁₉-COO)M | 20 | 995 | 931 |

The amount of the compound represented by the formula (1) containing (m + 1) carbon atoms in the extract was calculated using the following equation (3). The values of a and b in the equation (3) were determined using the relational equation (1). $Xcm = \left(\left(ACm-b\right)/a\right) \times \left(\left(50\times m+45\right)/413\right)$ (3)
XCm: The amount (ng/mL) of the compound represented by the formula (1) containing (m + 1) carbon atoms in the extract
ACm: The peak area of the compound represented by the formula (1) containing (m + 1) carbon atoms in the extract

The quantitation limit in this measurement is 1 ng/mL.

### Amount of compound represented by formula (1) containing (m + 1) carbon atoms in composition

The amount of the compound represented by the formula (1) containing (m + 1) carbon atoms in the composition was determined using the following equation (4). $YCm = XCm \times 12.6$ (4) YCm: The amount of the compound represented by the formula (1) containing (m + 1) carbon atoms in the composition (ppb relative to TFE-based polymer)

The quantitation limit is 10 ppb by mass.

### (Method of measuring amount of compound represented by formula (2))

### Extraction from composition

To a 1-g portion of the composition was added 10 g (12.6 mL) of methanol, followed by ultrasonication for 60 minutes, whereby a supernatant solution containing the compound represented by the formula (2) was extracted. The resulting extract was appropriately concentrated by nitrogen purging, whereby a concentrated extract was obtained.

### Measurement of amount of compound represented by formula (2) in extract

The amount of the compound represented by the formula (2) contained in the extract was obtained by conversion to perfluorooctanesulfonic acid.

### Calibration curve for perfluorooctanesulfonic acid

Methanol standard solutions having five different known levels from 1 ng/mL to 100 ng/mL of perfluorooctanesulfonic acid were prepared, and analyzed using a liquid chromatograph mass spectrometer (Waters, LC-MS ACQUITY UPLC/TQD). By first order approximation based on the sample concentrations and the peak integral values, the values of a and b were obtained by the following relational equation (1). $A = a \times X + b$ (1)
A: The peak area of perfluorooctanesulfonic acid
X: The concentration (ng/mL) of perfluorooctanesulfonic acid

### Instrument configuration and LC-MS measurement conditions

**[Table 5]**

| LC system | | | | |
|---|---|---|---|---|
| | Device | Acquity UPLC from Waters | | |
| | Column | Acquity UPLC BEH C18 1.7 µm (2.1 × 50 mm) from Waters | | |
| | Mobile phase | A CH₃CN | | |
| | | B 20 mM CH₃COONH₄/H₂O | | |
| | | | 0 → 1.5 min | A:B = 10:90 |
| | | | 1.5 → 8.5 min | A:B = 10:90 → A:B = 90:10 Linear gradient |
| | | | 8.5 → 10 min | A:B = 90:10 |
| | Flow rate | | 0.4 mL/min | |
| | Column temperature | 40°C | | |
| | Sample injection amount | 5 µL | | |

| MS system | | | | |
|---|---|---|---|---|
| | Device | TQ Detecter | | |
| | Measurement mode | MRM (Multiple Reaction Monitoring) | | |
| | Ionization method | Electrospray ionization | | |
| | | Negative mode | | |

### MRM measurement parameter

**[Table 6]**

| Compound | Precursor | Product |
|---|---|---|
| Perfluorooctanesulfonic acid | 499 | 99 |

### Amount of compound represented by formula (2) containing 4 to 20 carbon atoms in extract

The amount of the compound represented by the formula (2) containing 4 to 20 carbon atoms was measured using a liquid chromatograph-mass spectrometer. For the extracted liquid phase, the peak areas of the compounds represented by the formula (2) with respective numbers of carbon atoms were determined by the MRM method.

### MRM measurement parameter

**[Table 7]**

| Compound | Number of carbon atoms | Precursor | Product |
|---|---|---|---|
| (H-(CF₂)₄-SO₃)M | 4 | 281 | 99 |
| (H-(CF₂)₅-SO₃)M | 5 | 331 | 99 |
| (H-(CF₂)₆-SO₃)M | 6 | 381 | 99 |
| (H-(CF₂)₇-SO₃)M | 7 | 431 | 99 |
| (H-(CF₂)₈-SO₃)M | 8 | 481 | 99 |
| (H-(CF₂)₉-SO₃)M | 9 | 531 | 99 |
| (H-(CF₂)₁₀-SO₃)M | 10 | 581 | 99 |
| (H-(CF₂)₁₁-SO₃)M | 11 | 631 | 99 |
| (H-(CF₂)₁₂-SO₃)M | 12 | 681 | 99 |
| (H-(CF₂)₁₃-SO₃)M | 13 | 731 | 99 |
| (H-(CF₂)₁₄-SO₃)M | 14 | 781 | 99 |
| (H-(CF₂)₁₅-SO₃)M | 15 | 831 | 99 |
| (H-(CF₂)₁₆-SO₃)M | 16 | 881 | 99 |
| (H-(CF₂)₁₇-SO₃)M | 17 | 931 | 99 |
| (H-(CF₂)₁₈-SO₃)M | 18 | 981 | 99 |
| (H-(CF₂)₁₉-SO₃)M | 19 | 1031 | 99 |
| (H-(CF₂)₂₀-SO₃)M | 20 | 1081 | 99 |

The amount of the compound represented by the formula (2) containing n carbon atoms in the extract was calculated using the following equation (3). The values of a and b in the equation (3) were determined using the relational equation (1). $XSn = \left(\left(ASn-b\right)/a\right) \times \left(\left(50\times n+81\right)/499\right)$ (3)
XSn: The amount (ng/mL) of the compound represented by the formula (2) containing n carbon atoms in the extract
ASn: The peak area of the compound represented by the formula (2) containing n carbon atoms in the extract

The quantitation limit in this measurement is 1 ng/mL.

### Amount of compound represented by formula (2) containing n carbon atoms in composition

The amount of the compound represented by the formula (2) containing n carbon atoms in the composition was determined using the following equation (4). $YSn = XSn \times 12.6$ (4) YSn: The amount of the compound represented by the formula (2) containing n carbon atoms in the composition (ppb relative to TFE-based polymer)

The quantitation limit is 10 ppb by mass.

A white solid A was obtained by the method disclosed in Synthesis Example 1 of WO 2021/045228.

### Preparation Example 1

To 16 g of deionized water was added 0.273 g of lauric acid, to which 2.77 g of a 2.8% aqueous solution of ammonia was gradually added with stirring, whereby aqueous solution C was obtained.

To 100 g of deionized water was added 10 g of lauric acid, to which 25 g of a 10% aqueous solution of ammonia was gradually added with stirring, whereby aqueous solution D was obtained. The pH at this time was 9.6.

### Production Example 1

A 3-L SUS reactor equipped with a stirrer was charged with 1748 g of deionized water, 90 g of paraffin wax, the aqueous solution C obtained in Preparation Example 1, and 0.5 g of ammonium oxalate. The pH of the aqueous dispersion at this time was 9.0. The reactor was hermetically sealed, and the inside of the reactor was replaced with nitrogen so that oxygen was removed. The temperature of the reactor was increased to 70°C, and 2.0 g of HFP was added to the reactor. Further, the pressure inside the reactor was increased with TFE to 2.70 MPa. When continuous feeding of an aqueous solution of potassium permanganate at a concentration of 0.5% by mass, as a polymerization initiator, to the reactor was started, the pressure dropped and the reaction started. TFE was fed so that the reaction pressure was constant at 2.70 MPa. Stirring was stopped when 80 g of TFE had been fed, and depressurization was performed until the reaction pressure reached the atmospheric pressure.

Immediately thereafter, the reactor was filled with TFE to set the reaction pressure to 2.70 MPa, and stirring was restarted, whereby the reaction was continued. At the same time, continuous feeding of the aqueous solution D obtained in Preparation Example 1 to the reactor was started. Stirring was stopped when 680 g of TFE had been added, and depressurization was performed until the pressure inside the reactor reached the atmospheric pressure. By the end of the reaction, 56.0 g of the aqueous solution of potassium permanganate and 26.2 g of the aqueous solution D were fed. The resulting aqueous dispersion was taken out of the reactor and cooled, and the paraffin wax was separated, whereby an aqueous dispersion of PTFE was obtained. The resulting aqueous dispersion of PTFE had a pH of 8.8, a solid concentration of 27.1% by mass, and a primary particle size of 220 nm.

The resulting aqueous dispersion of PTFE was diluted with deionized water to a solid concentration of 13% by mass. The dilution was stirred vigorously in a container equipped with a stirrer to be coagulated, and water was filtered out, whereby a wet powder was obtained.

The resulting wet powder was placed in a stainless-steel mesh tray and the mesh tray was heated in a hot air circulating electric furnace at 210°C. After 18 hours, the mesh tray was taken out and air-cooled, whereby a PTFE powder was obtained.

The resulting PTFE powder had a water content of 0.002% by mass, a standard specific gravity of 2.170, a thermal instability index of 44, a HFP content of 0.002% by mass, a 0.1% mass reduction temperature of 391°C, and a 1.0% mass reduction temperature of 491°C.

The amount of the compound represented by the formula (1) containing m (4 to 20) carbon atoms in the resulting PTFE powder was 67 ppb by mass and the amount of the compound represented by the formula (2) containing n (4 to 20) carbon atoms in the resulting PTFE powder was less than 10 ppb by mass.

### Production Example 2

A 6-L SUS reactor equipped with a stirrer was charged with 3580 g of deionized water and 7.56 g of the white solid A. The contents of the reactor were then heated to 70°C while being suctioned and simultaneously the reactor was purged with TFE to remove oxygen in the reactor, and the contents were stirred. Into the reactor were injected 0.5 g of ethane and 71 g of perfluoropropyl vinyl ether (PPVE), followed by addition of TFE to a pressure of 2.4 MPaG. Into the reactor, 306 mg of an ammonium persulfate (APS) initiator dissolved in 20 g of deionized water was injected. Injection of the initiator was followed by a pressure drop, and start of polymerization was observed. TFE was added to the reactor so that the pressure was constant at 2.4 MPaG. After polymerization started, 108 mg of ammonium persulfate and 84 g of PPVE were continuously added. When TFE consumed in the reaction reached about 1600 g, TFE feed was stopped and stirring was stopped, so that the reaction was terminated. The reactor was vented until the pressure inside the reactor reached ambient pressure, and PFA aqueous dispersion 1 was obtained.

The PFA aqueous dispersion 1 was taken out of the reactor and cooled, and PFA aqueous dispersion 2 was obtained. The resulting PFA aqueous dispersion 2 had a solid concentration of 30.5% by mass.

The resulting PFA aqueous dispersion 2 was stirred, coagulated, and dried, whereby a PFA powder was obtained.

The PFA powder had a PPVE content of 6.5% by mass, a MFR of 2.1 g/10 min., and a melting point of 295°C.

### Production Example 3

A 1000-L SUS reactor equipped with a stirrer was charged with 655 L of deionized water and 6 kg the white solid A. The reactor was subjected to nitrogen purging and vacuum degassing to remove oxygen, and the contents were stirred. Thereafter, 100 kg of HFP monomer was charged, followed by charging a monomer mixture of TFE and HFP (TFE:HFP = 86:14 (% by mass)). While stirring, the temperature was increased to set the temperature of the contents in the reactor to 95°C, and the pressure was raised to 1.5 MPaG. As an initiator, 70 kg of a 10% by mass aqueous solution of ammonium persulfate (APS) was added to initiate the reaction. The monomer mixture was continuously fed to maintain the pressure inside the reaction system at 1.5 MPaG. After 30 minutes from the initiation of the reaction, stirring was stopped and the reaction was terminated. The gas in the reactor was discharged to atmospheric pressure, and an aqueous dispersion of a TFE/HFP binary polymer was obtained. The resulting aqueous dispersion of a TFE/HFP binary polymer had a solid concentration of 4.5% by mass.

Separately, a similar SUS reactor was charged with 600 L of deionized water and 20 kg the binary polymer emulsified dispersion. The reactor was subjected to nitrogen purging and vacuum degassing to remove oxygen, and the contents were stirred. Thereafter, 138 kg of HFP monomer and 4 kg of PPVE were charged. While stirring, the temperature was increased to set the temperature of the contents in the reactor to 95°C, and a monomer mixture of TFE and HFP (TFE: HFP = 87.3:12.7 (% by mass)) was injected to increase the pressure to 4.2 MPaG. As an initiator, 2.8 kg of a 10% by mass aqueous solution of APS was added to initiate the reaction. After the reaction started, the 10% by mass aqueous solution of APS was continuously added at a rate of about 20 g/min. During the reaction, 180 g of PPVE was charged each time when the amount of the monomer mixture fed reached 25% by mass, 50% by mass, and 75% by mass of the total monomer fed. The monomer mixture was continuously fed to maintain the pressure inside the reaction system at 4.2 MPaG. After 51 minutes from the initiation of the reaction, addition of the 10% by mass aqueous solution of APS was stopped, stirring was stopped, and the reaction was terminated. The gas in the reactor was discharged to atmospheric pressure, and an aqueous dispersion of FEP (TFE/HFP/PPVE) was obtained. The resulting aqueous dispersion of FEP (TFE/HFP/PPVE) had a solid concentration of 20.2% by mass.

The resulting polymer had a MFR of 35.7 g/10 min., a compositional ratio (% by mass) of TFE/HFP/PPVE = 87.6/11.5/0.9, and a melting point of 257°C.

### Production Example 4

An aqueous dispersion of PVdF was obtained with reference to Example 1 of JP 2014 141673 A. Specifically, 1,700 g of purified water, 0.85 g of H-(CF₂CF₂)₃-CH₂-O-CO-CH₂CH(-SO₃Na)-CO-O-CH₂-(CF₂CF₂)₃-H (surface tension: 22 mN/m) as a fluorine-containing surfactant, and 17 g of paraffin wax were charged into a 3.0-L SUS reactor. After nitrogen purging to remove oxygen, 150 g of vinylidene fluoride (VdF) was added, and the inside of the reactor was heated to 115°C. While stirring the contents, 0.5 g of acetone and 5.6 g of di-t-butyl peroxide were added to initiate the reaction. Vinylidene fluoride was additionally fed in an amount of 427 g over nine hours so as to maintain the internal pressure of the reactor at 4.0 MPaG. During the course of the reaction, 1.45 g of H-(CF₂CF₂)₃-CH₂-O-CO-CH₂CH(-SO₃Na)-CO-O-CH₂-(CF₂CF₂)₃-H was added, thereby obtaining an aqueous dispersion of PVdF.

The resulting aqueous dispersion of PVdF had a solid concentration of 20.6% by mass.

The resulting aqueous dispersion of PVdF was subjected to coagulation, drying at 120°C, and pulverization, whereby a PVdF powder was obtained.

The PVdF had a melting point of 161°C, an average particle size of 1.1 µm, and a fluorine-containing surfactant content of 110 ppb by mass.

### Production Example 5

Into a reactor having an internal volume of 4 L, 1.3 kg of purified water was charged. After nitrogen purging to remove oxygen, 0.88 kg of octafluorocyclobutane was charged, the temperature inside the reactor was adjusted to 37°C, and the contents were stirred. Thereafter, a gas mixture of TFE/VdF = 5/95 mol% was charged until the pressure inside the reactor reached 1.3 MPaG, after which 1.5 g of a 50% by mass methanol solution of di-n-propyl peroxydicarbonate was added to initiate the reaction. As the pressure inside the reactor decreased with the progress of the reaction, a gas mixture of TFE/VdF = 15/85 mol% was continuously supplied to maintain the pressure inside the reactor at 1.3 MPaG. The reaction was continued for 44 hours. Stirring was stopped to terminate the reaction, followed by depressurization to atmospheric pressure. The reaction product was washed with water and dried at 120°C, thereby obtaining a white powder. The resulting white powder was pulverized using a high-speed mill, whereby a VT powder was obtained.

The resulting VT powder had a melting point of 136°C, a compositional ratio of VdF/TFE = 85.0/15.0 (mol%), a weight average molecular weight of 1100000, and an average particle size of the powder of 1.0 µm.

Since no fluorine-containing surfactant was used, the VT powder was free from fluorine-containing surfactants.

### Production Example 6

A 3-L SUS polymerization vessel equipped with a stirrer was charged with 1,500 g of deionized water, 4.8 g of the white solid A as a fluorine-containing surfactant, and 0.3 g of CH₂=CFCF₂OCF(CF₃)CF₂OCF(CF₃)COONH₄, and then sealed. After vacuum-nitrogen purging of the vessel, the vessel was evacuated, and 400 cc (equivalent) of isopropyl alcohol as a chain transfer agent was charged by syringe while applying vacuum suction. Thereafter, while stirring at 70°C, a gas monomer mixture of vinylidene fluoride (VdF) and tetrafluoroethylene (TFE) having a compositional ratio of 67/33 mol% was charged into the vessel until the internal pressure reached 0.8 MPaG. Then, an aqueous solution prepared by dissolving 0.15 g of ammonium persulfate was injected with nitrogen to initiate the reaction. In order to maintain the pressure inside the vessel, a monomer mixture of VdF/TFE having a compositional ratio of 67/33 mol% was additionally fed. When the amount of the monomer additionally fed reached 346 g, stirring was stopped, the gas inside the vessel was discharged, and the reaction was terminated. The vessel was cooled and an aqueous dispersion of VT was obtained. The resulting aqueous dispersion of VT had a solid concentration of 20% by mass.

The resulting aqueous dispersion of VT had a compositional ratio of VdF/TFE = 67.0/33.0 (mol%), a weight average molecular weight of 1300000, and a melting point of 160°C.

The resulting aqueous dispersion of VT was stirred, coagulated, and dried at 120°C, whereby a powder was obtained. The resulting powder was pulverized using a high-speed mill, whereby a VT powder was obtained.

The resulting VT powder had an average particle size of 1.1 µm and a fluorine-containing surfactant content of 340 ppb by mass.

### Production Example 7

A 3-L SUS autoclave was charged with 1650 ml of purified water, purged with nitrogen, and slightly pressurized with hexafluoropropylene (HFP). The temperature of the autoclave was adjusted to 80°C with stirring, and HFP was injected to 0.23 MPaG. Moreover, a monomer mixture of vinylidene fluoride (VdF) and HFP at a molar ratio of 78.2/21.8 was injected to 1.472 MPaG. 2-Methylbutane in an amount of 0.097 mL was injected with nitrogen and a solution of 36.4 g of ammonium persulfate in 80 ml of purified water was injected with nitrogen to start the reaction. When the pressure dropped to 1.44 MPaG, the pressure was increased to and maintained at 1.50 MPaG using the continuous monomers. Approximately 9.3 hours after the start of the reaction, stirring was stopped when 607 g of the continuous monomers had been fed. The gas inside the autoclave was discharged and the autoclave was cooled to recover 2299 g of a dispersion. The resulting aqueous dispersion of an elastomer had a solid concentration of 26.9% by mass.

The resulting elastomer had a compositional ratio of VdF/HFP = 77.9/22.1 (mol%). The resulting elastomer had a Mooney viscosity (ML1+10 (140°C)) of 77, a weight average molecular weight of 850000, and the Tg thereof was determined to be - 18°C by DSC. The heat of fusion was not observed in the second run.

### Production Example 8

A 6-L SUS reactor equipped with a SUS stirring blade and a temperature-controlling jacket was charged with 3480 g of deionized water, 100 g of paraffin wax, and 5.3 g of the white solid A. The inside of the reactor was purged with nitrogen gas with warming to 70°C so that oxygen was removed. TFE was injected to set the pressure inside the reactor to 0.78 MPaG and the temperature inside the reactor was maintained at 70°C under stirring. Next, an aqueous solution prepared by dissolving 15.0 mg of ammonium persulfate in 20 g of water was injected with TFE, whereby a polymerization reaction was started. The pressure inside the reactor dropped as the polymerization reaction progressed. TFE was thus added so that the temperature inside the reactor was maintained at 70°C and the pressure inside the reactor was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached about 1200 g from the start of the polymerization, stirring and feeding of TFE were stopped. Immediately thereafter, the gas inside the reactor was discharged to normal pressure and the polymerization reaction was terminated. The resulting aqueous dispersion was taken out and cooled, and the paraffin wax was separated, whereby an aqueous dispersion of PTFE was obtained. The resulting aqueous dispersion of PTFE had an average primary particle size of 310 nm and a solid concentration of 25.3% by mass.

The resulting aqueous dispersion of PTFE was coagulated and dried, whereby a PTFE powder was obtained.

The resulting PTFE powder had an SSG of 2.156 and an endothermic peak temperature of 343°C.

### Preparation Example 2

A mixture of 10-undecen-1-ol (16 g), 1,4-benzoquinone (10.2 g), DMF (160 mL), water (16 mL), and PdCl₂ (0.34 g) was heated and stirred at 90°C for 12 hours.

Then, the solvent was removed under reduced pressure. The resulting residue was purified by separation and column chromatography, whereby 11-hydroxyundecan-2-one (15.4 g) was obtained.

A mixture of 11-hydroxyundecan-2-one (13 g), sulfur trioxide-triethylamine complex (13.9 g), and tetrahydrofuran (140 mL) was stirred at 50°C for 12 hours. A solution of sodium methoxide (3.8 g)/methanol (12 mL) was added dropwise to the reaction solution.

The precipitated solid was filtered under reduced pressure and washed with ethyl acetate, whereby sodium 10-oxoundecyl sulfate (15.5 g) (hereinafter referred to as surfactant A) was obtained.

To a 1-L glass reactor equipped with a stirrer was added 588.6 g of deionized water and 70.0 g of the surfactant A. The reactor was hermetically sealed, and the inside of the reactor was replaced with nitrogen so that oxygen was removed. The temperature of the reactor was increased to 90°C and the pressure was increased with nitrogen to 0.4 MPaG. Ammonium persulfate (APS) in an amount of 41.4 g was fed, followed by stirring for three hours. Stirring was stopped, and depressurization was performed until the pressure inside the reactor reached the atmospheric pressure, followed by cooling, whereby a surfactant aqueous solution B was obtained.

### Production Example 9

To a 6-L SUS reactor equipped with a stirrer was added 3600 g of deionized water, 180 g of paraffin wax, and 0.540 g of the surfactant A. The reactor was hermetically sealed, and the inside of the reactor was replaced with nitrogen so that oxygen was removed. The temperature of the reactor was increased to 70°C and the reactor was filled with TFE to set the pressure at 2.70 MPa. As polymerization initiators, 0.620 g of ammonium persulfate (APS) and 1.488 g of disuccinic acid peroxide (DSP) were fed. TFE was fed so that the reaction pressure was constant at 2.70 MPa. While feeding of TFE was started, continuous feeding of the surfactant aqueous solution B was started. When 540 g of TFE had been fed, 20 g of deionized degassed water containing 0.76 g of hydroquinone dissolved therein was added. Stirring was stopped when 1200 g of TFE had been fed, and depressurization was performed until the pressure inside the reactor reached the atmospheric pressure. By the end of the reaction, 103 g of the surfactant aqueous solution B was fed. The contents were taken out of the reactor and cooled, and the paraffin wax was separated, whereby TFE-based polymer aqueous dispersion B was obtained.

The resulting TFE-based polymer aqueous dispersion B had a solid concentration of 25.9% by mass and an average primary particle size of 290 nm.

The resulting TFE-based polymer aqueous dispersion B was diluted with deionized water to a solid concentration of 13% by mass. The dilution was stirred vigorously in a container equipped with a stirrer to be coagulated, and water was filtered out, whereby a wet powder was obtained.

The resulting wet powder was placed in a stainless-steel mesh tray and the mesh tray was heated in a hot air circulating electric furnace at 210°C. After 18 hours, the mesh tray was taken out and air-cooled, whereby a PTFE powder was obtained.

The resulting PTFE powder had a water content of 0.003% by mass, a standard specific gravity of 2.151, a thermal instability index of 42, a 0.1% mass reduction temperature of 397°C, and a 1.0% mass reduction temperature of 492°C.

Compounds represented by the formula (1) with the number of carbon atoms m of 15 and 16 were detected in the resulting PTFE powder. The amount of the compound represented by the formula (1) with the number of carbon atoms m of 15 was 73 ppb by mass and the amount of the compound represented by the formula (1) with the number of carbon atoms of 16 was 141 ppb by mass. Also, compounds represented by the formula (2) with the number of carbon atoms n of 4, 6, 8, 10, 12, and 14 were detected. The amount of the compound represented by the formula (2) with the number of carbon atoms n of 8 was 1413 ppb by mass.

### Manufacturing Example 1

A container was charged with 886 g of the aqueous dispersion of PTFE obtained in Production Example 1 and 197 g of the PFA aqueous dispersion 2 obtained in Production Example 2. The mixture was diluted with deionized water so that the solid concentration became 13% by mass, and while being subjected to high-speed stirring, a PTFE/PFA mixture was co-coagulated. The mixture was then separated from water by filtration, whereby a wet powder was obtained.

The resulting wet powder was placed in a stainless-steel mesh tray and the mesh tray was heated in a hot air circulating electric furnace at 240°C. After 20 hours, the mesh tray was taken out and air-cooled, whereby a PTFE/PFA mixed powder was obtained. The mixing ratio (mass ratio) of the PTFE/PFA mixed powder was PTFE/PFA = 80/20.

The resulting PTFE/PFA mixed powder was named polymer composition A.

The polymer composition A had endothermic peak temperatures of 295°C and 342°C, a thermal instability index of 56, a 0.1% mass reduction temperature of 385°C, a 1.0% mass reduction temperature of 486°C, and a water content of 0.000% by mass.

The amount of the compound represented by the formula (1) containing m (4 to 20) carbon atoms in the polymer composition A was less than 10 ppb by mass and the amount of the compound represented by the formula (2) containing n (4 to 20) carbon atoms in the polymer composition A was less than 10 ppb by mass.

### Manufacturing Example 2

A container was charged with 886 g of the aqueous dispersion of PTFE obtained in Production Example 1 and 297 g of the aqueous dispersion of FEP obtained in Production Example 3. The mixture was diluted with deionized water so that the solid concentration became 13% by mass, and while being subjected to high-speed stirring, a PTFE/FEP mixture was co-coagulated. The mixture was then separated from water by filtration, whereby a wet powder was obtained.

The resulting wet powder was placed in a stainless-steel mesh tray and the mesh tray was heated in a hot air circulating electric furnace at 210°C. After 20 hours, the mesh tray was taken out and air-cooled, whereby a PTFE/FEP mixed powder was obtained. The mixing ratio (mass ratio) of the PTFE/FEP mixed powder was PTFE/FEP = 80/20.

The resulting PTFE/FEP mixed powder was named polymer composition B.

The polymer composition B had endothermic peak temperatures of 257°C and 342°C, a thermal instability index of 64, a 0.1% mass reduction temperature of 382°C, a 1.0% mass reduction temperature of 484°C, and a water content of 0.000% by mass.

The amount of the compound represented by the formula (1) containing m (4 to 20) carbon atoms in the polymer composition B was 67 ppb by mass and the amount of the compound represented by the formula (2) containing n (4 to 20) carbon atoms in the polymer composition B was less than 10 ppb by mass.

### Manufacturing Example 3

A container was charged with 775 g of the aqueous dispersion of PTFE obtained in Production Example 1 and 437 g of the aqueous dispersion of PVdF obtained in Production Example 4. The mixture was diluted with deionized water so that the solid concentration became 13% by mass, and while being subjected to stirring with addition of nitric acid as a coagulant, a PTFE/PVdF mixture was co-coagulated. The mixture was then separated from water by filtration, whereby a wet powder was obtained.

The resulting wet powder was placed in a stainless-steel mesh tray and the mesh tray was heated in a hot air circulating electric furnace at 120°C. After 30 hours, the mesh tray was taken out and air-cooled, whereby a PTFE/PVdF mixed powder was obtained. The mixing ratio (mass ratio) of the PTFE/PVdF mixed powder was PTFE/PVdF = 70/30.

The resulting PTFE/PVdF mixed powder was named polymer composition C.

The polymer composition C had endothermic peak temperatures of 161°C and 342°C and a water content of 0.003% by mass.

The amount of the compound represented by the formula (1) containing m (4 to 20) carbon atoms in the polymer composition C was 3786 ppb by mass and the amount of the compound represented by the formula (2) containing n (4 to 20) carbon atoms in the polymer composition C was less than 10 ppb by mass.

### Manufacturing Example 4

A container was charged with 886 g of the aqueous dispersion of PTFE obtained in Production Example 1, 60 g of the VT powder obtained in Production Example 5, and 960 g of deionized water. While being subjected to stirring with addition of nitric acid as a coagulant, the mixture was co-coagulated and dried as in Manufacturing Example 3, whereby a mixed powder was obtained. The mixing ratio (mass ratio) of the PTFE/VT mixed powder was PTFE/VT = 80/20.

The resulting PTFE/VT mixed powder was named polymer composition D.

The polymer composition D had endothermic peak temperatures of 136°C and 342°C, a water content of 0.005% by mass, and an average aspect ratio of 1.1. The PTFE powder was not fibrillated.

The amount of the compound represented by the formula (1) containing m (4 to 20) carbon atoms in the polymer composition D was 4326 ppb by mass and the amount of the compound represented by the formula (2) containing n (4 to 20) carbon atoms in the polymer composition D was less than 10 ppb by mass.

### Manufacturing Example 5

A container was charged with 996 g of the aqueous dispersion of PTFE obtained in Production Example 1, 30 g of the VT powder obtained in Production Example 6, and 1080 g of deionized water. While being subjected to stirring with addition of nitric acid as a coagulant, the mixture was co-coagulated and dried as in Manufacturing Example 3, whereby a mixed powder was obtained. The mixing ratio (mass ratio) of the PTFE/VT mixed powder was PTFE/VT = 90/10.

The resulting PTFE/VT mixed powder was named polymer composition E.

The polymer composition E had endothermic peak temperatures of 160°C and 342°C, a water content of 0.003% by mass, and an average aspect ratio of 1.2. The PTFE powder was not fibrillated.

The amount of the compound represented by the formula (1) containing m (4 to 20) carbon atoms in the polymer composition E was 4867 ppb by mass and the amount of the compound represented by the formula (2) containing n (4 to 20) carbon atoms in the polymer composition E was less than 10 ppb by mass.

### Manufacturing Example 6

The PTFE powder obtained in Production Example 1 in an amount of 135 g and the VT powder obtained in Production Example 6 in an amount of 15 g were placed in a V-type mixer (VK-1, available from Irie Shokai Co., Ltd.) and mixed at 30 rpm for 10 minutes. The mixing ratio (mass ratio) of the PTFE/VT mixed powder was PTFE/VT = 90/10.

The resulting PTFE/VT mixed powder was named polymer composition F.

The polymer composition F had endothermic peak temperatures of 160°C and 342°C, a water content of 0.001% by mass, and an average aspect ratio of 1.5. The PTFE powder was not fibrillated.

The amount of the compound represented by the formula (1) containing m (4 to 20) carbon atoms in the polymer composition F was 60 ppb by mass and the amount of the compound represented by the formula (2) containing n (4 to 20) carbon atoms in the polymer composition F was less than 10 ppb by mass.

### Manufacturing Example 7

A container was charged with 886 g of the aqueous dispersion of PTFE obtained in Production Example 1 and 223 g of the aqueous dispersion of the elastomer obtained in Production Example 7. The mixture was diluted with deionized water so that the solid concentration became 15% by mass, and while being subjected to high-speed stirring with addition of nitric acid as a coagulant, a PTFE/elastomer mixture was co-coagulated. The mixture was then separated from water by filtration, whereby a wet powder was obtained.

The resulting wet powder was placed in a stainless-steel mesh tray and the mesh tray was heated in a hot air circulating electric furnace at 120°C. After 30 hours, the mesh tray was taken out and air-cooled, whereby a PTFE/elastomer mixed powder was obtained. The mixing ratio (mass ratio) of the PTFE/elastomer mixed powder was PTFE/elastomer = 80/20.

The resulting PTFE/elastomer mixed powder was named polymer composition G.

The polymer composition G had an endothermic peak temperature of 342°C, a water content of 0.005% by mass, and an average aspect ratio of 1.1. The PTFE powder was not fibrillated.

The amount of the compound represented by the formula (1) containing m (4 to 20) carbon atoms in the polymer composition G was 4846 ppb by mass and the amount of the compound represented by the formula (2) containing n (4 to 20) carbon atoms in the polymer composition G was less than 10 ppb by mass.

### Manufacturing Example 8

A container was charged with 830 g of the aqueous dispersion of PTFE obtained in Production Example 8 and 437 g of the aqueous dispersion of PVdF obtained in Production Example 4. The mixture was diluted with deionized water so that the solid concentration became 13% by mass, and while being subjected to stirring with addition of nitric acid as a coagulant, a PTFE/PVdF mixture was co-coagulated. The mixture was then separated from water by filtration, whereby a wet powder was obtained.

The resulting wet powder was placed in a stainless-steel mesh tray and the mesh tray was heated in a hot air circulating electric furnace at 120°C. After 30 hours, the mesh tray was taken out and air-cooled, whereby a PTFE/PVdF mixed powder was obtained. The mixing ratio (mass ratio) of the PTFE/PVdF mixed powder was PTFE/PVdF = 70/30.

The resulting PTFE/PVdF mixed powder was named polymer composition X.

The polymer composition X had endothermic peak temperatures of 161°C and 343°C, a water content of 0.003% by mass, and an average aspect ratio of 1.1. The PTFE powder was not fibrillated.

The polymer composition X did not contain the compounds represented by the formulas (1) and (2) as PTFE prepared without using a hydrocarbon surfactant was used.

Accordingly, the amount of the compound represented by the formula (1) containing m (4 to 20) carbon atoms in the polymer composition X was less than 10 ppb by mass and the amount of the compound represented by the formula (2) containing n (4 to 20) carbon atoms in the polymer composition X was less than 10 ppb by mass.

### Manufacturing Example 9

A container was charged with 811 g of the aqueous dispersion of PTFE obtained in Production Example 9 and 437 g of the aqueous dispersion of PVdF obtained in Production Example 4. The mixture was diluted with deionized water so that the solid concentration became 13% by mass, and while being subjected to stirring with addition of nitric acid as a coagulant, a PTFE/PVdF mixture was co-coagulated. The mixture was then separated from water by filtration, whereby a wet powder was obtained.

The resulting wet powder was placed in a stainless-steel mesh tray and the mesh tray was heated in a hot air circulating electric furnace at 120°C. After 30 hours, the mesh tray was taken out and air-cooled, whereby a PTFE/PVdF mixed powder was obtained. The mixing ratio (mass ratio) of the PTFE/PVdF mixed powder was PTFE/PVdF = 70/30.

The resulting PTFE/PVdF mixed powder was named polymer composition H.

The polymer composition H had endothermic peak temperatures of 161°C and 344°C and a water content of 0.004% by mass.

The amount of the compound represented by the formula (1) containing m (= 15) carbon atoms in the polymer composition H was 31460 ppb by mass and the amount of the compound represented by the formula (2) containing n (= 8) carbon atoms in the polymer composition H was less than 1425 ppb by mass.

The polymer compositions obtained above were evaluated by the following methods.

### Evaluation of electrode mixture sheet for electrolyte-containing battery

The mixture sheets of Examples A1 to A8 and Comparative Example A1 were produced by the following procedure, and evaluated.

### <Production of negative electrode mixture sheet>

An active material and a binder (TFE-based polymer composition) were weighed out, and placed into a container. The active material and the binder were thoroughly heated in a thermostatic bath at 80°C, and treated in a Henschel mixer at 3000 rpm for 30 minutes so that fibrillation was promoted, whereby a mixture was obtained.

The mixture was further kneaded (50 rpm, 10 minutes) using a desktop-type kneader (PN-1, available from Irie Shokai Co., Ltd.) to promote fibrillation. Then, the mixture was pulverized in a Henschel mixer at 3000 rpm for five minutes to promote fibrillation and improve dispersibility, whereby an electrode mixture was obtained.

The electrode mixture was fed to metal rolls arranged side by side in parallel to each other (temperature of the left and right rolls: 200°C, rotation speed of the left roll: 1 m/min, rotation speed of the right roll: 0.4 m/min) and rolled, whereby a negative electrode mixture sheet with a density of 1.3 g/cc and a thickness of about 250 µm was obtained.

Table 8 shows the type of the binder used and the amount thereof in the mixture.

### <Evaluation of quality of mixture sheet>

The negative electrode mixture sheets produced under various conditions were cut into strip-shaped test pieces with a width of 5 mm. The evaluation was performed based on whether the strip could be lifted as a self-supporting film without tearing. Conditions under which this lifting was possible were rated as o, and conditions under which this lifting was not possible were rated as ×.

The results are shown in Table 8.

**[Table 8]**

| | (A) Active material | (B) Binder | (B) Addition amount [% by mass] | | | |
|---|---|---|---|---|---|---|
| | | | 1.8 | 2.2 | 2.6 | 3.2 |
| Comparative Example A1 | Graphite | Polymer composition X | × | × | × | ○ |
| Example A1 | Graphite | Polymer composition A | × | × | ○ | ○ |
| Example A2 | Graphite | Polymer composition B | × | × | ○ | ○ |
| Example A3 | Graphite | Polymer composition C | × | × | × | ○ |
| Example A4 | Graphite | Polymer composition D | × | × | ○ | ○ |
| Example A5 | Graphite | Polymer composition E | ○ | ○ | ○ | ○ |
| Example A6 | Graphite | Polymer composition F | × | ○ | ○ | ○ |
| Example A7 | Graphite | Polymer composition G | × | × | ○ | ○ |
| Example A8 | Graphite | Polymer composition H | × | × | × | ○ |

The polymer composition E enabled sheet formation with the smallest addition amount.

The mixture sheets of Examples B1 to B8 and Comparative Example B1 were produced by the following procedure, and evaluated.

### <Production of negative electrode>

Negative electrode mixture sheets prepared with binder addition amounts of 2.6% by mass and 3.2% by mass were each laminated with a current collector.

A commercially available carbon-coated copper foil (thickness of 10 µm) was provided as a current collector. The negative electrode mixture sheet was placed on the carbon-coated copper foil, and the negative electrode mixture sheet and the current collector were bonded to each other using a roll press machine. The workpiece was cut into the desired size to obtain a negative electrode.

The processing conditions using the roll press machine were as follows: in Examples B1 and B2, the roll temperature was 300°C, while for the other polymer compositions, the roll temperature was 200°C. The processing was carried out at a speed of 0.1 m/min and a pressure of 6 KN. The gap between rolls was adjusted such that the density of the electrode mixture was 1.5 g/cc.

### <Preparation of electrolyte solution>

A solvent mixture of ethylene carbonate (EC) and ethyl methyl carbonate (EMC) (EC:EMC = 30:70 (volume ratio)) as an organic solvent was weighed into a sample bottle, and vinylene carbonate (VC) in an amount of 3% by mass was added thereto and dissolved therein, whereby a mixed solution was prepared. A LiPF₆ salt was dissolved in this mixed solution so that the concentration thereof in the electrolyte solution was 1.1 mol/L, whereby a non-aqueous electrolyte solution was obtained.

### <Production of coin cell>

The above negative electrode was placed to face a positive electrode (lithium metal foil) with a 20-µm-thick microporous polyethylene film (separator) in between. The non-aqueous electrolyte solution prepared above was injected thereinto. The non-aqueous electrolyte solution was made to sufficiently permeate into the components such as the separator, and the workpiece was then sealed, whereby a lithium-ion secondary battery was produced.

### <Evaluation of battery characteristics (coulombic efficiency)>

The lithium-ion secondary battery produced above was subjected to a test at 30°C. The battery was subjected to constant current/constant voltage charge (0.05 C cut off) to 0.01 V at a current corresponding to 0.1 C, and then discharged to 1.5 V at a constant current of 0.1 C. Table 9 shows the results of initial coulombic efficiency at this time.

Coulombic efficiency is defined as the percentage ratio of the discharge capacity during discharge to the charge capacity during charging. Since coulombic efficiency decreases due to side reactions in the battery system, a battery with a high coulombic efficiency exhibits less degradation during the initial charge-discharge cycles.

**[Table 9]**

| | (B) Binder | Initial coulombic efficiency | |
|---|---|---|---|
| | | Addition 3.2% | Addition 2.6% |
| Comparative Example B1 | Polymer composition X | 84.7% | - |
| Example B1 | Polymer composition A | 85.1% | 86.3% |
| Example B2 | Polymer composition B | 85.0% | 86.2% |
| Example B3 | Polymer composition C | 86.3% | - |
| Example B4 | Polymer composition D | 85.3% | 86.5% |
| Example B5 | Polymer composition E | 84.3% | 85.5% |
| Example B6 | Polymer composition F | 83.9% | 85.1% |
| Example B7 | Polymer composition G | 85.2% | 86.4% |
| Example B8 | Polymer composition H | 85.9% | - |

The mixture sheets of Examples C1 to C8 and Comparative Example C1 were produced by the following procedure, and evaluated.

### <Production of negative electrode>

A negative electrode mixture sheet prepared with a binder addition amount of 3.2% by mass was laminated with a current collector.

A commercially available carbon-coated copper foil (thickness of 10 µm) was provided as a current collector. The negative electrode mixture sheet was placed on the carbon-coated copper foil, and the negative electrode mixture sheet and the current collector were bonded to each other using a roll press machine to obtain a negative electrode.

The processing conditions using the roll press machine were as follows: in Examples C1 and C2, the roll temperature was 300°C, while for the other polymer compositions, the roll temperature was 200°C. The processing was carried out at a speed of 0.1 m/min and a pressure of 6 KN. The gap between rolls was adjusted such that the density of the electrode mixture was 1.30 to 1.50 g/cc.

The laminated electrode sheet was punched into a circular shape using a Φ15 hand punch. The punched edge was observed, and samples in which no delamination or lifting from the current collector was observed were evaluated as "OK," whereas samples in which delamination or lifting was observed were evaluated as "NG."

The results are shown in Table 10.

**[Table 10]**

| | (B) Binder | Adhesion to foil [g/cc] | | | | |
|---|---|---|---|---|---|---|
| | | 1.35 | 1.40 | 1.45 | 1.50 | 1.55 |
| Comparative Example C1 | Polymer composition X | NG | **OK** | **OK** | **OK** | **OK** |
| Example C1 | Polymer composition A | NG | NG | **OK** | **OK** | **OK** |
| Example C2 | Polymer composition B | NG | NG | **OK** | **OK** | **OK** |
| Example C3 | Polymer composition C | NG | **OK** | **OK** | **OK** | **OK** |
| Example C4 | Polymer composition D | NG | NG | **OK** | **OK** | **OK** |
| Example C5 | Polymer composition E | NG | NG | NG | **OK** | **OK** |
| Example C6 | Polymer composition F | NG | NG | NG | **OK** | **OK** |
| Example C7 | Polymer composition G | NG | NG | **OK** | **OK** | **OK** |
| Example C8 | Polymer composition H | NG | **OK** | **OK** | **OK** | **OK** |

Though compression (densification) of the electrode mixture layer is required to achieve adhesion to the foil, use of a specific fibrillatable polymer in combination with a thermoplastic polymer can enhance adhesion to the foil. As a result, the electrode mixture layer can be bonded without increasing the density thereof, allowing processing under a wider range of molding conditions.

Containing a larger amount of the fibrillatable polymer, the polymer composition of the disclosure enables formation of a sheet even with a smaller addition amount thereof.

Moreover, use of the polymer composition of the disclosure allows favorable battery characteristics to be exhibited.

## Claims

1. A polymer composition for use in a binder for an electrochemical device, comprising a fibrillatable polymer, a thermoplastic polymer, and at least one compound selected from the group consisting of a compound represented by the following formula (1) and a compound represented by the following formula (2),
formula (1): (H-(CF₂)ₘ₋₁-COO)ₚM¹
wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

2. A polymer composition for use in a binder for an electrochemical device, comprising a fibrillatable polymer and a thermoplastic polymer, the fibrillatable polymer having a thermal instability index (TII) of 10 or higher.

3. The polymer composition according to claim 1 or 2,
wherein the fibrillatable polymer includes at least one selected from the group consisting of a tetrafluoroethylene homopolymer and a modified polytetrafluoroethylene consisting of a tetrafluoroethylene unit and a polymerized unit based on hexafluoropropylene.

4. The polymer composition according to any one of claims 1 to 3,
wherein the fibrillatable polymer is contained in an amount of more than 50% by mass and 97% by mass or less based on the polymer composition.

5. The polymer composition according to any one of claims 1 to 4,
wherein the thermoplastic polymer includes at least one vinylidene fluoride-based polymer selected from the group consisting of polyvinylidene fluoride and a vinylidene fluoride/tetrafluoroethylene copolymer.

6. The polymer composition according to any one of claims 1 to 5,
wherein the polymer composition is in a form of powder.

7. The polymer composition according to any one of claims 1 to 6,
wherein the polymer composition is for use in a binder for a lithium-ion secondary battery.

8. A binder for an electrochemical device essentially consisting of a polymer composition, the polymer composition comprising a fibrillatable polymer, a thermoplastic polymer, and at least one compound selected from the group consisting of a compound represented by the following formula (1) and a compound represented by the following formula (2),
formula (1): (H-(CF₂)ₘ₋₁-COO)ₚM¹
wherein m is 4 to 20; M¹ is H, a metal atom, NR⁵₄ where R⁵s are optionally the same as or different from each other and each represent H or a C1-C10 organic group, imidazolium optionally containing a substituent, pyridinium optionally containing a substituent, or phosphonium optionally containing a substituent; and p is 1 or 2, formula (2): (H-(CF₂)ₙ-SO₃)_{q}M²
wherein n is 4 to 20; M² is H, a metal atom, NR⁵₄ where R⁵ is as defined above, imidazolium optionally containing a substituent, pyridinium optionally containing a substituent, or phosphonium optionally containing a substituent; and q is 1 or 2.

9. A binder for an electrochemical device essentially consisting of a polymer composition, the polymer composition comprising a fibrillatable polymer and a thermoplastic polymer, the fibrillatable polymer having a thermal instability index (TII) of 10 or higher.

10. The binder for an electrochemical device according to claim 8 or 9,
wherein the polymer composition has an endothermic peak in each of a region of 330°C or lower and a region of higher than 330°C.

11. The binder for an electrochemical device according to any one of claims 8 to 10,
wherein the fibrillatable polymer has an endothermic peak temperature of higher than 330°C.

12. The binder for an electrochemical device according to any one of claims 8 to 11,
wherein the fibrillatable polymer includes a tetrafluoroethylene-based polymer.

13. The binder for an electrochemical device according to any one of claims 8 to 12,
wherein the fibrillatable polymer includes at least one selected from the group consisting of a tetrafluoroethylene homopolymer and a modified polytetrafluoroethylene consisting of a tetrafluoroethylene unit and a polymerized unit based on hexafluoropropylene.

14. The binder for an electrochemical device according to any one of claims 8 and 10 to 13,
wherein the fibrillatable polymer has a thermal instability index (TII) of 10 or higher.

15. The binder for an electrochemical device according to any one of claims 8 to 14,
wherein the thermoplastic polymer is contained in an amount of less than 50% by mass based on the polymer composition.

16. The binder for an electrochemical device according to any one of claims 8 to 15,
wherein the fibrillatable polymer is contained in an amount of more than 50% by mass and 97% by mass or less based on the polymer composition.

17. The binder for an electrochemical device according to any one of claims 8 to 16,
wherein the polymer composition has a 0.1% mass reduction temperature of 340°C or higher.

18. The binder for an electrochemical device according to any one of claims 8 to 17,
wherein the polymer composition has a 1.0% mass reduction temperature of 370°C or higher.

19. The binder for an electrochemical device according to any one of claims 8 to 16,
wherein the thermoplastic polymer includes a vinylidene fluoride-based polymer.

20. The binder for an electrochemical device according to claim 19,
wherein the vinylidene fluoride-based polymer includes a fluoroelastomer.

21. The binder for an electrochemical device according to claim 20,
wherein the fluoroelastomer contains a vinylidene fluoride unit and a unit based on a different monomer copolymerizable with vinylidene fluoride.

22. The binder for an electrochemical device according to claim 20 or 21,
wherein the fluoroelastomer includes at least one selected from the group consisting of a vinylidene fluoride/hexafluoropropylene copolymer, a vinylidene fluoride/2,3,3,3-tetrafluoropropylene copolymer, and a vinylidene fluoride/tetrafluoroethylene/hexafluoropropylene copolymer.

23. The binder for an electrochemical device according to any one of claims 8 to 16,
wherein the polymer composition has an endothermic peak at least in a region of 130°C to 200°C.

24. The binder for an electrochemical device according to any one of claims 8 to 16,
wherein the thermoplastic polymer includes at least one vinylidene fluoride-based polymer selected from the group consisting of polyvinylidene fluoride and a vinylidene fluoride/tetrafluoroethylene copolymer.

25. The binder for an electrochemical device according to claim 24,
wherein the vinylidene fluoride-based polymer has an average particle size of 10 µm or less and is free from a fluorine-containing surfactant.

26. The binder for an electrochemical device according to any one of claims 8 to 25,
wherein the polymer composition in a form of powder has an average aspect ratio of 2.5 or lower.

27. The binder for an electrochemical device according to any one of claims 8 to 26,
wherein the fibrillatable polymer in a form of powder is not fibrillated.

28. The binder for an electrochemical device according to any one of claims 8 to 27,
wherein the binder for an electrochemical device is in a form of powder.

29. The binder for an electrochemical device according to any one of claims 8 to 28,
wherein the binder for an electrochemical device is a binder for a lithium-ion secondary battery.

30. An electrode mixture comprising: the polymer composition according to any one of claims 1 to 7 or the binder for an electrochemical device according to any one of claims 8 to 29; and an electrode active material.

31. The electrode mixture according to claim 30,
wherein the electrode mixture is in a form of a sheet.

32. An electrode comprising: the polymer composition according to any one of claims 1 to 7 or the binder for an electrochemical device according to any one of claims 8 to 29; an electrode active material; and a current collector.

33. A secondary battery comprising the electrode according to claim 32.
